(19) Europäisches Patentamt / European Patent Office / Office européen des brevets

(11) **EP 1 741 047 B1**

(12) **FASCICULE DE BREVET EUROPEEN**

(45) Date de publication et mention
de la délivrance du brevet:
**22.08.2018 Bulletin 2018/34**

(51) Int Cl.:
**G06K 9/00** *(2006.01)* **G06K 9/62** *(2006.01)*

(21) Numéro de dépôt: **05742634.8**

(22) Date de dépôt: **18.03.2005**

(86) Numéro de dépôt international:
**PCT/FR2005/000673**

(87) Numéro de publication internationale:
**WO 2005/101292 (27.10.2005 Gazette 2005/43)**

(54) **PROCÉDÉ DE RECHERCHE DE CONTENU, NOTAMMENT D'EXTRAITS COMMUNS ENTRE DEUX FICHIERS INFORMATIQUES**

VERFAHREN ZUM DURCHSUCHEN VON INHALT INSBESONDERE NACH ZWEI COMPUTERDATEIEN GEMEINSAMEN AUSZÜGEN

METHOD FOR SEARCHING CONTENT PARTICULARLY FOR EXTRACTS COMMON TO TWO COMPUTER FILES

(84) Etats contractants désignés:
**AT BE BG CH CY CZ DE DK EE ES FI FR GB GR HU IE IS IT LI LT LU MC NL PL PT RO SE SI SK TR**

(30) Priorité: **05.04.2004 FR 0403556**

(43) Date de publication de la demande:
**10.01.2007 Bulletin 2007/02**

(73) Titulaires:
• **Lebrat, François**
 **75016 Paris (FR)**
• **TDF**
 **75015 Paris (FR)**

(72) Inventeur: **Francois Lebrat**
 **75016 Paris (FR)**

(74) Mandataire: **Cabinet Plasseraud**
 **66, rue de la Chaussée d'Antin**
 **75440 Paris Cedex 09 (FR)**

(56) Documents cités:
• **SNASEL V: "Fuzzy signatures for multimedia databases" ADVANCES IN INFORMATION SYSTEMS. FIRST INTERNATIONAL CONFERENCE, ADVIS 2000. PROCEEDINGS (LECTURE NOTES IN COMPUTER SCIENCE VOL.1909) SPRINGER VERLAG BERLIN, GERMANY, 2000, pages 257-264, XP008038840 ISBN: 3-540-41184-4**

• **S. HABER ET AL: "If Piracy is the Problem, Is DRM the Answer?" DIGITAL RIGHTS MANAGEMENT. TECHNOLOGICAL, ECONOMIC, LEGAL AND POLITICAL ASPECTS, 31 août 2003 (2003-08-31), pages 224-233, XP002307417 HEIDELBERG**
• **FALOUTSOS C: "ACCESS METHODS FOR TEXT" ACM COMPUTING SURVEYS, NEW YORK, NY, US, vol. 17, no. 1, mars 1985 (1985-03), pages 49-74, XP000747611 ISSN: 0360-0300**
• **Alain Chenciner: "Courbes algébriques planes", 1 January 2008 (2008-01-01), Springer, XP055402675, page 74, * paragraph [0008] ***
• **Jacques Lafontaine: "Introduction aux variétés différentielles", 1 January 1997 (1997-01-01), Presses Universitaires de Grenoble, XP055402677, page 88, * the whole document ***
• **Jean-Pierre Serre: "Cohomologie Galoisienne, 5ème éd.", 1 January 1994 (1994-01-01), Springer, XP055402681, page 156, * Théorème 7' ***
• **ALLAMANCHE E ET AL: "AUDIOID: TOWARDS CONTENT-BASED IDENTIFICATION OF AUDIO MATERIAL", AUDIO ENGINEERING SOCIETY CONVENTION P, NEW YORK, NY, US, 12 May 2001 (2001-05-12), pages 1-11, XP009028034,**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne la recherche de contenu informatique, en particulier d'extraits communs entre deux fichiers.

Plus particulièrement, il s'agit de rechercher au moins un extrait commun entre un premier fichier et un second fichier, sous forme de données binaires.

Les techniques actuellement connues proposent une recherche à l'identique, généralement donnée par donnée. La lenteur de la recherche, pour des applications à des fichiers de grandes tailles, devient rédhibitoire.

Le document «Fuzzy Signatures for Multimedia Databases» de V. Snásel présente, pages 259-260, une utilisation possible de signatures définissant des états en logique floue.

Le document «If Piracy is the Problem, Is DRM the Answer?» de S. Haber et Al décrit quant à lui, page 229, III.4, l'utilisation du «hachage flou» (*Fuzzy Hashing*), par exemple la technologie AudioID de Fraunhofer, pour améliorer la sécurisation des conteneurs et du filigranage.

La présente invention vient améliorer la situation.

Elle propose à cet effet un procédé de recherche de contenu, mis en oeuvre par des moyens informatiques, qui comporte une préparation préalable du premier fichier précité au moins, comprenant les étapes suivantes :

> a) segmenter le premier fichier en une succession de paquets de données, lesdits paquets étant de taille donnée, et identifier des adresses de paquets parmi ces paquets dans ledit fichier,
> b) associer à l'adresse de chaque paquet une signature numérique définissant un état en logique floue parmi au moins trois états : "vrai", "faux" et "indéterminé", ladite signature résultant d'un calcul combinatoire sur des données parmi les données issues dudit fichier,

et en ce que le procédé se poursuit par une recherche d'extrait commun, proprement dite, comprenant les étapes suivantes :

> c) comparer les états de logique floue associés à chaque adresse de paquet du premier fichier, avec des états de logique floue déterminés à partir de données issues du second fichier,
> d) éliminer de ladite recherche d'extrait commun des couples d'adresses respectives des premier et second fichiers dont les états logiques respectifs sont "vrai" et "faux" ou "faux" et "vrai", et conserver les autres couples d'adresses identifiant des paquets de données susceptibles de comporter ledit extrait commun.

A l'étape b), on affecte préférentiellement à un paquet de données l'état :

- "vrai" si toutes les données du paquet vérifient une première condition,
- "faux" si toutes les données du paquet vérifient une seconde condition, contraire à la première condition,
- et "indéterminé" si certaines données du paquet vérifient la première condition, tandis que d'autres données du paquet vérifient la seconde condition.

Dans un mode de réalisation préféré, on applique aux données d'un fichier un traitement préalable à l'étape b) et comportant les étapes suivantes :

> a1) on considère les données du fichier en tant que suite d'échantillons obtenus à une fréquence d'échantillonnage prédéterminée, et de valeurs codées selon un code de représentation binaire, et
> a2) on applique un filtre numérique sur lesdits échantillons, adapté pour minimiser une probabilité d'obtention de l'état "indéterminé" pour les signatures numériques associées aux paquets d'échantillons.

Avantageusement, l'application dudit filtre numérique revient à :

- appliquer une transformée spectrale aux données échantillonnées,
- appliquer un filtre passe-bas à ladite transformée spectrale,
- et appliquer une transformée spectrale inverse après ledit filtre passe-bas.

Ce filtre passe-bas opère préférentiellement sur une bande de fréquences comprenant sensiblement l'intervalle :

$$[-Fe/2(k-1),\ +Fe/2(k-1)],$$

où Fe est ladite fréquence d'échantillonnage,
et k est le nombre d'échantillons que comporte un paquet.

Avantageusement, le filtre numérique comporte un nombre prédéterminé de coefficients de même valeur, et la réponse fréquentielle du filtre passe-bas associé s'exprime, en fonction de la fréquence f, par une expression du type :

$$\sin(\text{PI}.f.T)/(\text{PI}.f.T),$$

où sin() est la fonction sinus, et avec :

- PI = 3,1416, et
- T=(K-1)/Fe où K est ledit nombre prédéterminé de coefficients et Fe ladite fréquence d'échantillonnage.

Préférentiellement, le filtre numérique est un filtre à valeur moyenne d'un nombre prédéterminé de coefficients, et en ce que la différence entre deux échantillons filtrés successifs est proportionnelle à la différence entre deux échantillons non filtrés, respectivement d'un premier rang et d'un second rang, espacés dudit nombre prédéterminé de coefficients, et en ce que le calcul desdits échantillons filtrés est effectué en exploitant cette relation pour réduire le nombre d'opérations de calcul à effectuer.

Le nombre prédéterminé de coefficients du filtre est préférentiellement supérieur ou égal à 2k-1, où k est le nombre d'échantillons que comporte un paquet, valeur qui pourra être désignée par la suite par le terme rapport d'index.

Préférentiellement :

- l'état "vrai" est affecté à l'adresse d'un paquet si, pour ce paquet, tous les échantillons filtrés ont une valeur supérieure à une valeur de référence choisie,
- l'état "faux" est affecté à l'adresse d'un paquet si, pour ce paquet, tous les échantillons filtrés ont une valeur inférieure à une valeur de référence choisie, et
- l'état "indéterminé" est affecté à l'adresse d'un paquet si, pour ce paquet, les échantillons filtrés ont, pour certains, une valeur inférieure à ladite valeur de référence, et, pour d'autres échantillons filtrés, une valeur supérieure à ladite valeur de référence.

Avantageusement, pour tout échantillon filtré $r_n$, d'ordre donné n, ladite valeur de référence est calculée en moyennant les valeurs des échantillons non filtrés $f_k$, sur un nombre choisi d'échantillons consécutifs non filtrés autour d'un échantillon non filtré $f_n$, du même ordre donné n.

Les valeurs des échantillons filtrés sont préférentiellement ramenées, pour comparaison, à une valeur seuil nulle, et les échantillons filtrés $r'_n$ s'expriment alors par une somme du type :

$$r'_n = K_{ref} \sum_{k=-(K/2)}^{(K/2)-1} f_{n+k} - K \sum_{k=-(K_{ref}/2)}^{(K_{ref}/2)-1} f_{n+k} \,,$$

où :

- $f_{n+k}$ sont des échantillons non filtrés obtenus à l'étape a1),
- K est le nombre de coefficients du filtre numérique, préférentiellement choisi pair, et
- $K_{ref}$ est ledit nombre d'échantillons non filtrés autour d'un échantillon non filtré $f_n$, préférentiellement choisi pair et supérieur audit nombre de coefficients K.

Dans une réalisation avantageuse, on applique la somme précitée aux échantillons non filtrés $f_n$ une pluralité de fois, selon un traitement effectué en parallèle, en faisant varier respectivement le nombre de coefficients K. Cette mesure permet alors de déterminer une pluralité de signatures numériques, sensiblement indépendantes statistiquement

Dans une réalisation particulière, les états flous associés au premier fichier au moins sont codés chacun sur au moins deux bits.

Dans cette réalisation, les états flous déterminés pour un nombre de coefficients K le plus faible sont codés sur des bits de poids le plus faible et les états flous déterminés pour un nombre de coefficients K plus grand sont codés sur des bits suivants, jusqu'à un nombre total choisi de bits. On comprendra que ce nombre choisi peut être adapté avantageusement à la taille des données binaires utilisée par les microprocesseurs d'entités informatiques pour des opérations logiques de comparaison.

Préférentiellement, chaque échantillon filtré $r_n$ s'exprime comme une somme du type :

$$r_n = \sum_{i=-I_1}^{I_2} filtre_i \times f_{(n+i)} \, ,$$

où :

- $f_{(n+i)}$ sont des échantillons non filtrés,
- $filtre_i$ sont des coefficients d'un filtre numérique, intégrant, le cas échéant, une valeur seuil ramenée à zéro,

et l'on choisit un nombre k d'échantillons non filtrés que comporte un paquet, au minimum égal à 2 et inférieur ou égal à une expression du type :
(TEF-$I_1$-$I_2$+1)/2, où TEF est une taille minimale souhaitée des extraits communs recherchés. Cette mesure permet avantageusement d'assurer un recouvrement d'un paquet de k données utilisé pour le calcul d'une seule donnée de signature numérique.
Dans cette réalisation,

- pour une valeur donnée TEF de la taille minimale souhaitée d'extraits communs recherchés, on détermine une plage de valeurs utilisables pour ledit nombre k d'échantillons non filtrés que comporte un paquet,
- et, pour chaque valeur utilisable du nombre k, on détermine une taille optimale TES d'une succession de données de signatures numériques pour laquelle la détection d'un extrait commun de taille TEF est garantie.

Ladite taille optimale TES est alors inférieure ou égale à une expression du type :

$E[(TEF-I_1-I_2+1)/k]-1,$ où E(X) désigne la partie entière de X.

Pour une application où les deux fichiers à comparer comportent des données représentatives de caractères alphanumériques, notamment du texte et/ou un code informatique ou génétique, le procédé comporte avantageusement :

- un premier groupe d'étapes comportant la formation des signatures numériques et leur comparaison, pour une recherche grossière, et
- un second groupe d'étapes, notamment pour une recherche fine, comportant une comparaison à l'identique dans les plages d'adresses vérifiant la comparaison grossière,

On considère alors les données d'un fichier en tant que suite d'échantillons, avec un nombre choisi k d'échantillons par paquet, la valeur de ce nombre choisi k étant optimisée initialement en recherchant un minimum d'opérations de comparaison à effectuer.
Pour l'optimisation du nombre choisi k d'échantillons par paquet, on tient compte avantageusement d'un nombre total :

- d'opérations de comparaison de signatures numériques à effectuer, et
- d'opérations de comparaison de données à l'identique à effectuer ensuite,

ce nombre total d'opérations étant minimum pour un ensemble fini de nombres k.
Le procédé prévoit avantageusement une étape au cours de laquelle on obtient une information relative à une taille minimale souhaitée d'extraits communs recherchés, utilisée pour optimiser ledit nombre choisi k d'échantillons par paquet. Ce nombre optimal k d'échantillons par paquet varie alors sensiblement comme ladite taille minimale, de sorte que plus la taille minimale souhaitée d'extraits communs recherchés est grande, plus le nombre total d'opérations de comparaison diminue, et donc plus la durée de la recherche d'extrait commun est courte.
Pour d'autres applications telles que la recherche de contenu de fichiers audio, vidéo, ou autres, la recherche d'extraits communs consiste préférentiellement en un unique groupe d'étapes comportant la formation des signatures numériques et leur comparaison. Le nombre de données par paquet est alors optimisé en se fixant initialement un indice de confiance caractérisant un seuil acceptable de probabilité de fausse détection d'extraits communs.
Dans un mode de réalisation général préféré, pour le premier fichier :

- on applique l'échantillonnage à une fréquence d'échantillonnage choisie,
- le filtrage numérique correspondant à un filtrage passe-bas dans l'espace des fréquences, et

- la combinaison des échantillons filtrés pour obtenir des signatures numériques à l'état "vrai", "faux" ou "indéterminé", associées aux adresses respectives du premier fichier,

tandis que, pour le second fichier :

- on applique l'échantillonnage à une fréquence d'échantillonnage choisie,
- le filtrage numérique correspondant à un filtrage passe-bas dans l'espace des fréquences, et
- on détermine l'état logique associé à chaque paquet d'échantillons filtrés à partir de l'état logique associé à un seul échantillon filtré choisi dans chaque paquet (de manière préférentielle comme étant le premier échantillon de chaque paquet),

de manière à obtenir des signatures numériques ne comportant que des état logiques "vrai" ou "faux" et ainsi à améliorer la sélectivité de la comparaison des signatures numériques.

Dans cette réalisation,

- si l'état logique associé à une adresse du premier fichier est "vrai" ou "indéterminé", tandis que l'état logique associé à une adresse du second fichier est "vrai", le couple desdites adresses est retenu pour la recherche d'extrait commun,
- si l'état logique associé à une adresse du premier fichier est "faux" ou "indéterminé", tandis que l'état logique associé à une adresse du second fichier est "faux", le couple desdites adresses est retenu pour la recherche d'extrait commun,

tandis que les autres couples d'adresses sont exclus de la recherche.

Bien entendu, le procédé au sens de la présente invention est mis en oeuvre par des moyens informatiques tels qu'un produit programme d'ordinateur, décrit plus loin. A ce titre, l'invention vise aussi un tel produit programme d'ordinateur, ainsi qu'un dispositif, tel qu'une entité informatique, comportant un tel programme dans l'une de ses mémoires. L'invention vise aussi un système d'entités informatiques de ce type, communicantes, comme on le verra plus loin.

Ce programme d'ordinateur est capable notamment de générer une signature numérique d'un fichier de données binaires, cette signature numérique étant ensuite comparée à une autre signature pour la recherche d'extrait commun. On comprendra que la signature numérique d'un fichier quelconque de données, élaborée par le procédé au sens de l'invention, est un moyen essentiel pour mener l'étape de comparaison. A ce titre, la présente invention vise aussi la structure de données de cette signature numérique.

D'autres caractéristiques et avantages de l'invention apparaîtront à l'examen de la description détaillée ci-après, et des dessins annexés sur lesquels :

- la figure 1 résume sensiblement les principales étapes de recherche fine,
- la figure 2A représente schématiquement l'agencement d'un tableau bidimensionnel pour la comparaison de deux fichiers de données, en fonction des adresses des données de ces deux fichiers,
- la figure 2B représente schématiquement un tableau bidimensionnel pour la comparaison à l'identique de deux fichiers texte *«Des moutons»* et *«Un mouton»,*
- la figure 3 représente la correspondance entre les adresses de données et les adresses de blocs de données obtenus après élaboration d'une signature numérique, ici pour un rapport d'index qui vaut 4,
- la figure 4A représente un tableau bidimensionnel pour la comparaison des signatures numériques de deux fichiers texte *«Des moutons»* et *«Un mouton»,* avec un rapport d'index de 2,
- la figure 4B représente un tableau bidimensionnel pour la comparaison à l'identique, fine et qui suit en principe l'étape de recherche grossière de la figure 4A, des deux fichiers texte *«Des moutons»* et *«Un mouton»,*
- les figures 5A et 5B représentent respectivement les tables de vérité des fonctions « OU » et « ET » en logique binaire,
- la figure 5C représente un tableau de codage des états flous sur deux bits B0 et B1,
- les figures 5D et 5E représentent respectivement les tables de vérité des fonctions « OU » et « ET » en logique floue (par application de la loi de codage d'états flous de la figure 5C),
- les figures 6A et 6B représentent respectivement les valeurs des états en logique binaire associées aux données d'un fichier en fonction des adresses de ces données dans le fichier et les valeurs des états en logique floue associées globalement à ces données en fonction des mêmes adresses (la fonction « OU » en logique floue ayant été appliquée ici dans chaque bloc de données entre les états logiques associés à chaque donnée d'un bloc),
- les figures 7A, 7B et 7C représentent des tableaux de détermination d'états binaires et flous à partir d'exemple de fichiers texte. Pour ces exemples, les états binaires sont déterminés à partir de la loi suivante :

  - 0 si la valeur entière du code ASCII du caractère est strictement inférieure à 111,
  - 1 la valeur entière du code ASCII du caractère est supérieure ou égale 111 ;

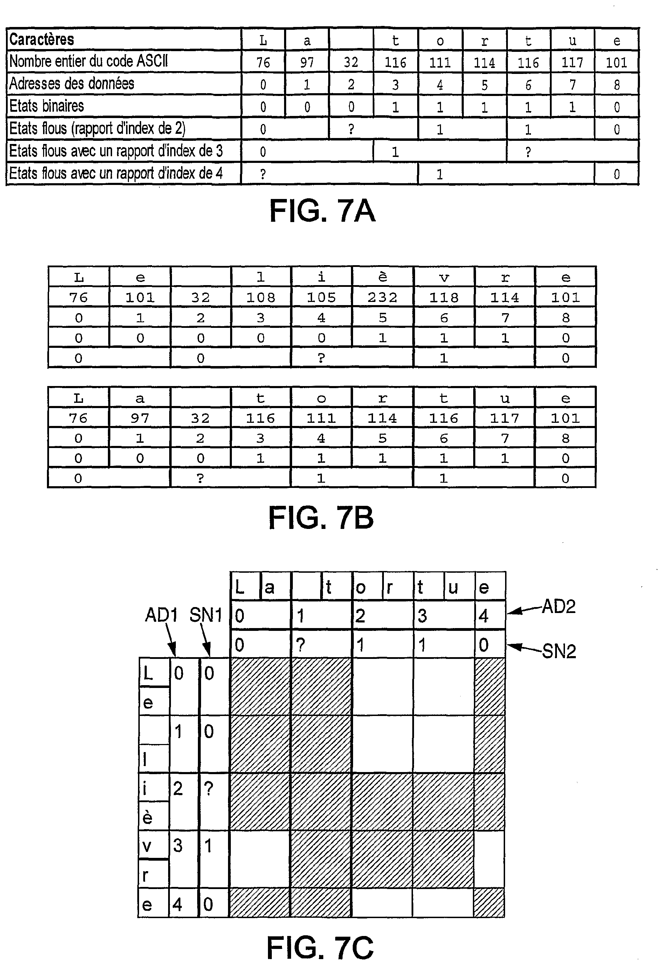

- la figure 7A est un tableau représentant les différents états flous associés à un fichier texte *«La tortue»* pour différentes valeurs du rapport d'index,
- la figure 7B représente des tableaux donnant respectivement les signatures numériques associées aux fichiers respectifs *«Le lièvre»* et la *«La tortue»,* pour un rapport d'index de 2,
- la figure 7C représente un tableau comparant les signatures numériques de la figure 7B pour la recherche d'extraits communs,

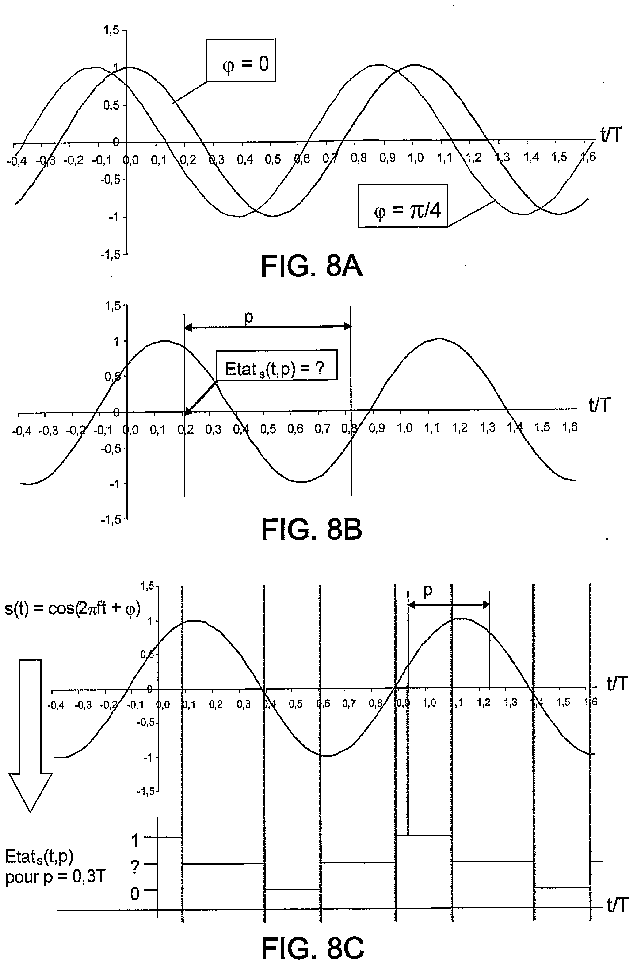

- la figure 8A représente une fonction cosinusoïde à différentes phases en fonction d'une variable t/T où T est la période de la fonction,
- la figure 8B représente la détermination de l'état de logique floue associé ponctuellement à une valeur de la variable t/T par application pour l'ensemble des valeurs appartenant au segment [t/T,t/T+p] d'une combinaison logique entre les états binaires obtenus à partir du signe de la fonction cosinusoïde,
- la figure 8C représente les variations des états de logique floue qui sont déterminés pour chaque valeur de la variable t/T par application pour l'ensemble des valeurs appartenant au segment [t/T,t/T+p] d'une combinaison logique entre les états binaires obtenus à partir du signe de la fonction cosinusoïde,

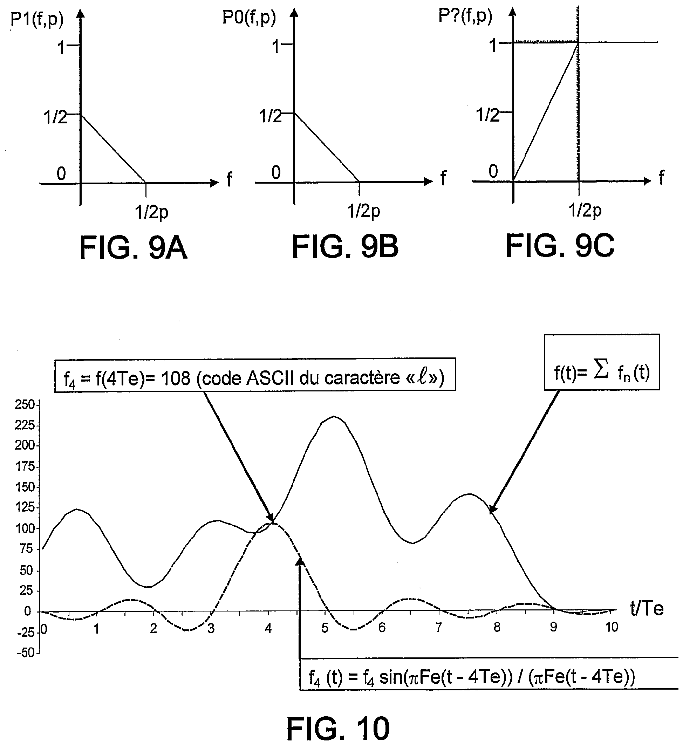

- les figures 9A à 9C représentent respectivement les probabilités de tirage de l'état flou «1», de l'état flou «0» et de l'état flou «?», en fonction de la fréquence f associée à une cosinusoïde et en fonction de la taille p des segments,
- la figure 10 représente les variations de la fonction f(t/Te) qui est obtenue par interpolation des valeurs prises par les échantillons $f_n$ du fichier texte *«Le lièvre»* (la courbe en traits pointillés représente la contribution de l'échantillon $f_4$ à la construction de la courbe f(t/Te)),

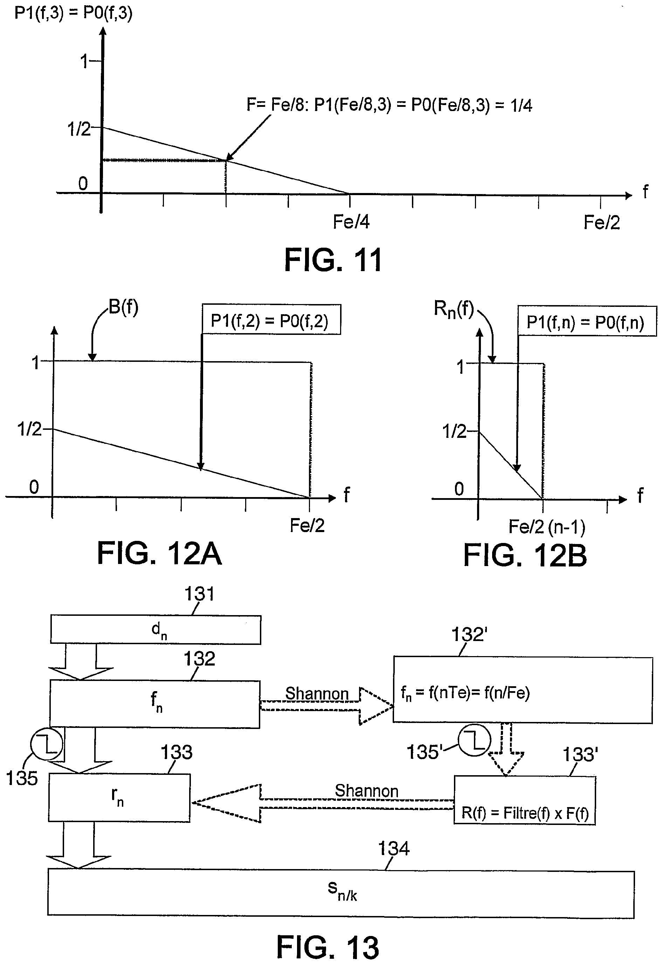

- la figure 11 représente les probabilités de tirage de l'état flou «1» (ou encore de l'état flou «0»), en fonction de la fréquence f, avec un rapport d'index de 3,
- les figures 12A et 12B représentent les probabilités de tirage de l'état flou «1» (ou encore de l'état flou «0»), en fonction de la fréquence f, avec des rapports d'index respectifs de 2 et de n (n>2),
- la figure 13 représente schématiquement les différentes étapes d'échantillonnage et de filtrage mises en oeuvre pour obtenir une signature numérique $S_{n/k}$,

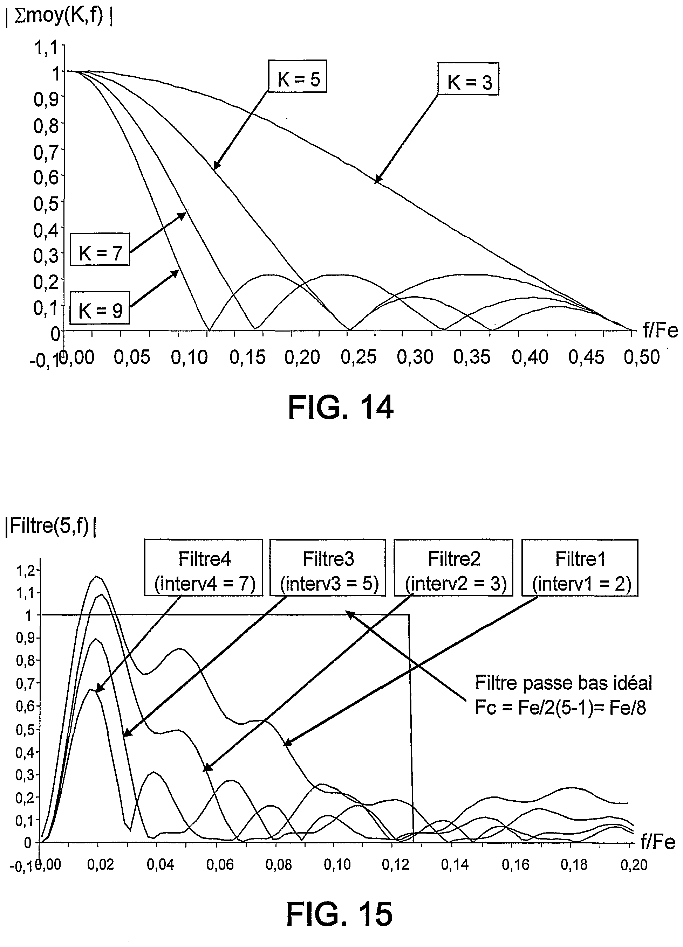

- la figure 14 représente les allures, en valeur absolue, de fonctions de filtrage Filtre(K,f) = Σmoy(K,f) (intégrant la prise en compte d'une valeur moyenne de K échantillons autour d'un échantillon central), pour quelques valeurs de K, en fonction de f/Fe,
- la figure 15 représente les réponses fréquentielles des filtres numériques par défaut ajustés pour un rapport d'index k = 5, avec plusieurs valeurs du paramètre interv décrit dans la description ci-après,

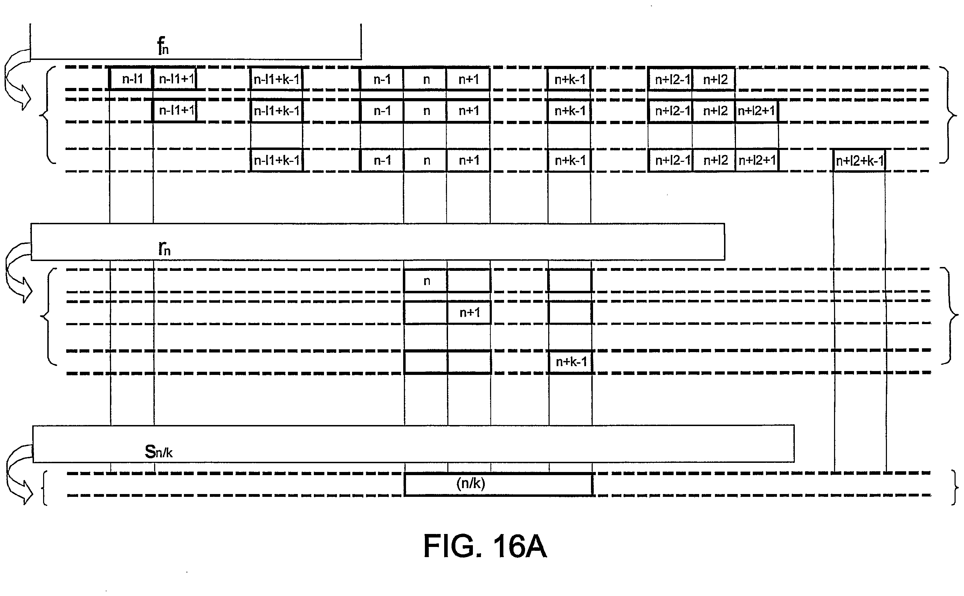

- la figure 16A représente les adresses d'échantillons $f_n$ de données auxquelles a été appliqué un échantillonnage, les adresses d'échantillons $r_n$ auxquels a été appliqué un filtrage numérique et enfin les adresses de blocs de la signature numérique obtenue par combinaison («OU» en logique floue des échantillons $r_n$ filtrés),

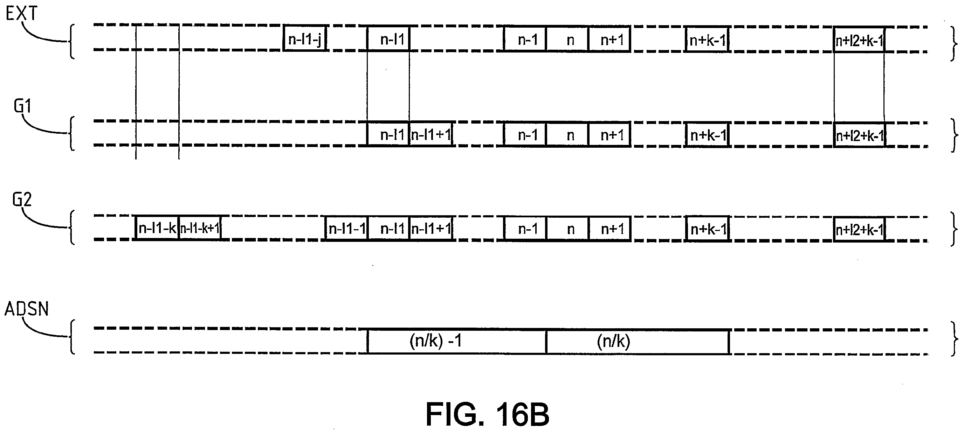

- la figure 16B représente les conditions de recouvrement des blocs de données associés au calcul des données de signatures numériques par les données d'un extrait EXT à rechercher dans un fichier de données,

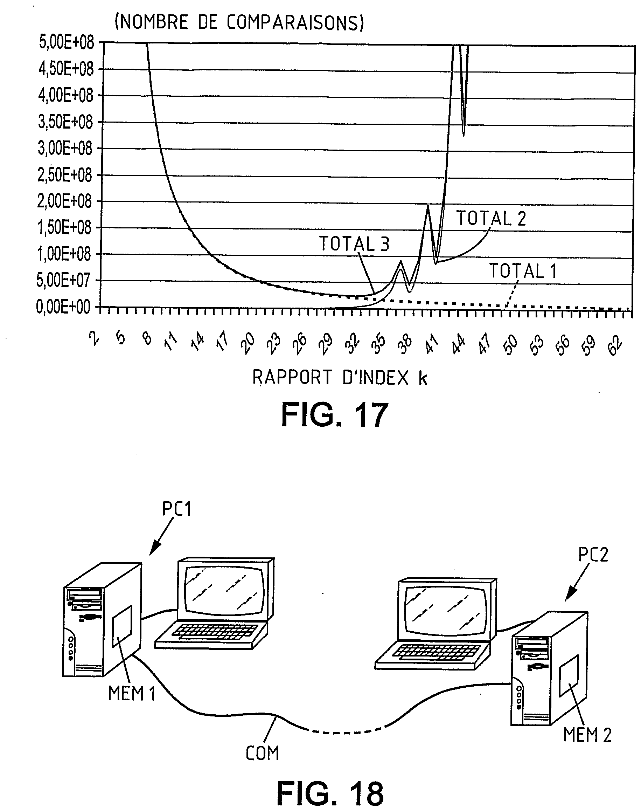

- la figure 17 représente le nombre de comparaisons à effectuer en fonction du rapport d'index k, pour une recherche grossière (Total1), pour une recherche fine ensuite (Total2), et pour l'ensemble des deux recherches (Total3), et, dans l'exemple d'une recherche d'extraits communs de taille minimale de 1000 caractères entre deux fichiers de taille de 100 Koctets,
- la figure 18 représente un système d'entités informatiques communicantes pour la mise en oeuvre d'une application avantageuse de l'invention, à la mise à jour de fichiers informatiques à distance,

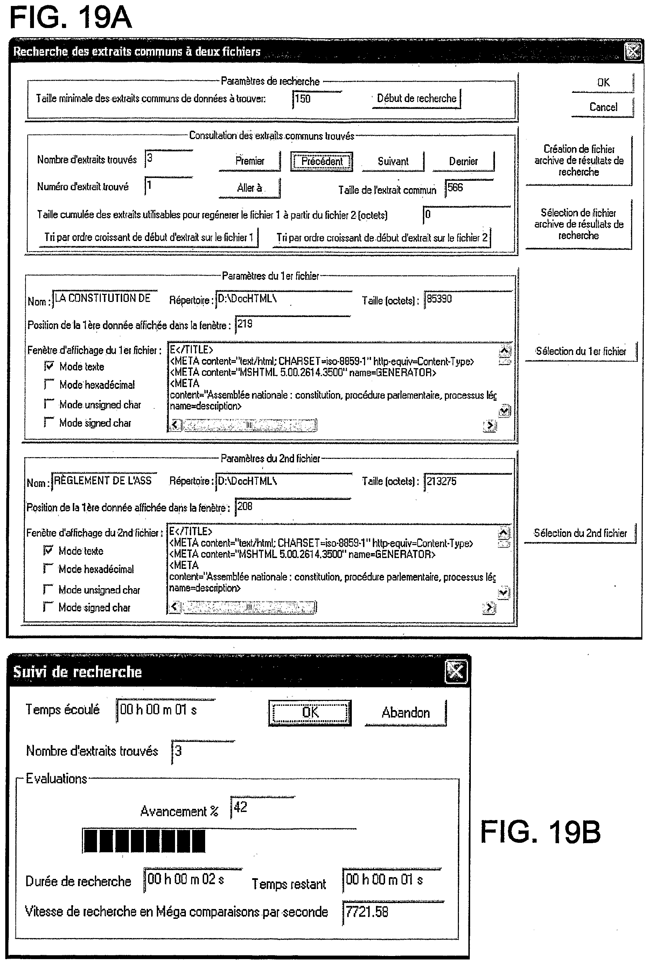

- la figure 19A représente une copie d'écran d'une boîte de dialogue dans le cadre d'une interface homme machine d'un programme informatique au sens de l'invention, pour une recherche d'extraits communs entre deux fichiers textes,
- la figure 19B représente une copie d'écran indiquant l'évolution de la recherche,

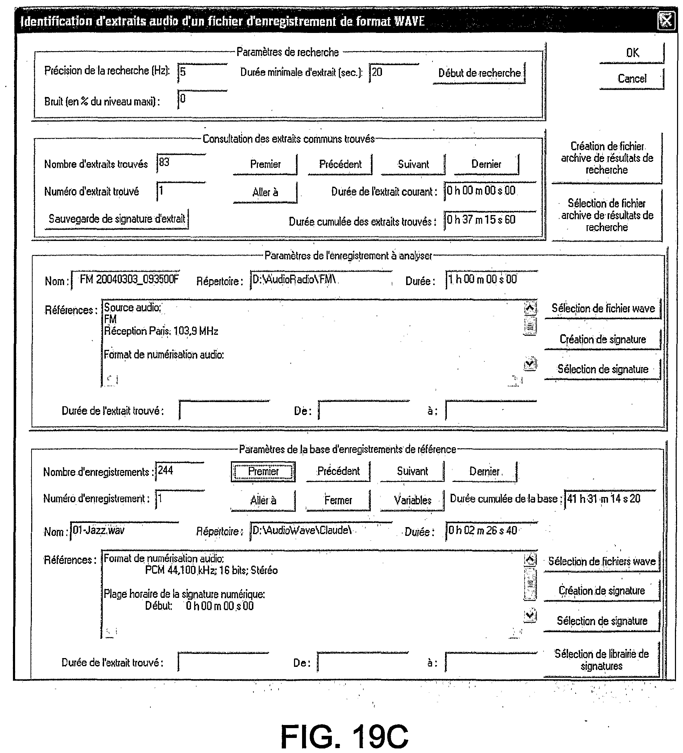

- la figure 19C représente une copie d'écran pour une recherche d'extraits communs entre deux fichiers audio,

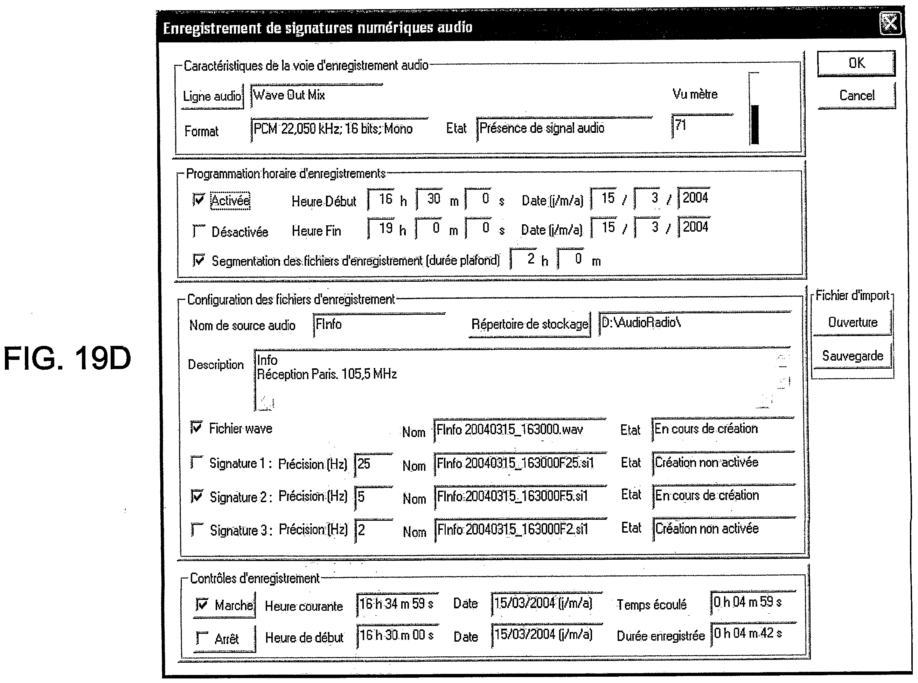

- la figure 19D représente une copie d'écran pour la création de fichier de signature numérique élaboré à partir d'un traitement en temps réel de signaux audio.

Le procédé au sens de l'invention consiste à comparer entre eux des fichiers informatiques afin d'y rechercher tous les extraits communs possibles. L'examen porte directement sur la représentation binaire des données qui constituent les fichiers et, avantageusement, ne nécessite donc pas une connaissance préalable du format des fichiers. D'ailleurs, les fichiers à comparer peuvent être de nature quelconque, comme par exemple des fichiers texte, des fichiers multimédia comportant des sons ou des images, des fichiers de données, ou autres. Chaque fichier est représenté sous la forme d'un tableau à une dimension dans lequel les données binaires sont rangées avec le même ordre que celui utilisé pour un stockage sur disque. Les données binaires sont des octets (mots de 8 bits). Le tableau est donc de même taille que celle du fichier, en octets. Chaque case du tableau est repérée par une adresse. Selon les conventions utilisées en programmation, l'adresse 0 pointe sur la première case du tableau, l'adresse 1 sur la case suivante, et ainsi de suite.

On entend par «*extrait*», notamment dans la formule «*extrait commun*», ce qui suit. Il s'agit d'une séquence de données consécutives qui est obtenue par recopie des données binaires d'un fichier en partant d'une adresse de début, déterminée. Cette séquence est elle même représentée sous la forme d'un tableau de données binaires auquel on associe une adresse de début qui permet de repérer l'extrait dans le fichier d'origine. On indique que les données binaires sont des octets (mots de 8 bits). Chaque donnée est représentée par le nombre entier (compris entre 0 et 255) qui est obtenu par addition en base 2 des bits de l'octet :

$$B_0 + 2^1 B_1 + \ldots + 2^7 B_7$$

Le tableau a donc bien la même taille que celle de l'extrait (en octets). Cette taille d'extrait peut être comprise entre 1 et celle du fichier.

Dans l'exemple d'un document stocké dans un fichier en format texte, un extrait pourra être par exemple un mot, une phrase ou une page de texte.

Pour le procédé au sens de l'invention, on entend par «*extrait commun à deux fichiers*» ce qui suit. Il s'agit d'une séquence de données consécutives dont le contenu est fixe et qui peut être obtenue soit par recopie des données binaires du premier fichier en partant d'une adresse de début déterminée, soit par recopie des données binaires du deuxième fichier en partant d'une autre adresse de début déterminée. En d'autres termes, si l'on prélève sur chaque fichier un extrait à partir des positions de début repérées, la condition d'extrait commun sera atteinte si il y a identité parfaite des contenus portés par la première donnée binaire de chaque extrait, puis de ceux portés par la donnée binaire suivante, et ainsi de suite. Typiquement, dans le cas de fichiers en format texte, chaque octet porte le code ASCII d'un caractère imprimable (alphabet latin, chiffre, ponctuation, et autres). L'identité parfaite des contenus de deux octets équivaut donc à une identité parfaite des caractères codés par ces octets. Tout extrait commun trouvé est repéré par un couple d'adresses de début (une par fichier) et par une taille exprimée en nombre d'octets.

On décrit ci-après un exemple d'extrait pris sur un fichier texte court. Le texte choisi est *«Le lièvre et la tortue».* Sa représentation sous la forme de fichier en mode texte est représentée à titre d'exemple sur le tableau ci-après. La taille du fichier est de 22 octets. Les données binaires (octets) portent les codes ASCII qui sont associés à chaque caractère du texte et sont affichées en mode entier.

| Caractère du texte | L | e |  | l | i | è | v | r | e |  | e |
|---|---|---|---|---|---|---|---|---|---|---|---|
| Nombre entier du code ASCII | 76 | 101 | 32 | 108 | 105 | 232 | 118 | 114 | 101 | 32 | 101 |
| Adresse des données | 0 | 1 | 2 | 3 | 4 | 5 | 6 | 7 | 8 | 9 | 10 |

| Caractère du texte | t |  | l | a |  | t | o | r | t | u | e |
|---|---|---|---|---|---|---|---|---|---|---|---|
| Nombre entier du code ASCII | 116 | 32 | 108 | 97 | 32 | 116 | 111 | 114 | 116 | 117 | 101 |
| Adresse des données | 11 | 12 | 13 | 14 | 15 | 16 | 17 | 18 | 19 | 20 | 21 |

L'extrait «lièvre» se trouve dans le fichier. Sa représentation sous la forme d'un tableau de données est sur le tableau suivant. Il occupe 6 données binaires. Sa position de début dans le fichier est l'adresse 3.

| Caractère de l'extrait | l | i | è | v | r | e |
|---|---|---|---|---|---|---|
| Nombre entier du code ASCII | 108 | 105 | 232 | 118 | 114 | 101 |
| Adresse des données | 0 | 1 | 2 | 3 | 4 | 5 |

On décrit maintenant un exemple d'extraits communs à deux fichiers texte courts. Les textes choisis sont *«Le lièvre»* et *«La tortue».* Les représentations sous la forme de fichiers en mode texte sont celles du tableau ci-après. La taille de chaque fichier est de 9 octets. Les données binaires (octets) sont affichées en mode entier.

| Caractère du 1er texte | L | e | | l | i | è | v | r | e |
|---|---|---|---|---|---|---|---|---|---|
| Nombre entier du code ASCII | 76 | 101 | 32 | 108 | 105 | 232 | 118 | 114 | 101 |
| Adresse des données | 0 | 1 | 2 | 3 | 4 | 5 | 6 | 7 | 8 |

| Caractère du 2ème texte | L | a | | t | o | r | t | u | e |
|---|---|---|---|---|---|---|---|---|---|
| Nombre entier du code ASCII | 76 | 97 | 32 | 116 | 111 | 114 | 116 | 117 | 101 |
| Adresse des données | 0 | 1 | 2 | 3 | 4 | 5 | 6 | 7 | 8 |

Il y a donc cinq extraits communs aux fichiers. Ils sont présentés par ordre croissant d'adresses de début sur le premier fichier :

«L» : position (0, 0) et taille 1
«e» : position (1, 8) et taille 1
« » : position (2, 2) et taille 1 (caractère «espace»)
«r» : position (7, 5) et taille 1
«e» : position (8, 8) et taille 1

On indique que les caractères «L» et «l» sont distincts car les valeurs de leurs codes ASCII sont différentes.
Afin d'éviter une profusion des résultats de recherche, on utilise comme critère de sélection une valeur de la taille minimale des extraits communs à trouver. On comprend facilement que la probabilité de trouver des extraits diminue quand la taille des extraits à rechercher augmente. En conséquence, si l'on compare deux fichiers entre eux, le nombre d'extraits communs trouvés diminuera quand on augmente la taille minimale des extraits à trouver. Dans le même but, on essaye par ailleurs d'éliminer les résultats de recherche qui se recouvrent entre eux. Ce traitement est conseillé mais n'est pas indispensable. Sa mise en oeuvre complète nécessite en effet de mémoriser l'ensemble des résultats de recherche afin de pouvoir en éliminer ceux qui sont recouverts par d'autres résultats de recherche.
On décrit ci-après un autre exemple d'extraits communs à deux fichiers texte courts. Les textes choisis sont «Un mouton» et «Des moutons». La taille minimale des extraits communs recherchés est de 6 octets. Les données binaires (octets) sont affichées en mode entier.
Les représentations sous la forme de fichiers en mode texte sont sur le tableau ci-après.

| Caractère du 1er texte | u | n | | m | o | u | t | o | n | | |
|---|---|---|---|---|---|---|---|---|---|---|---|
| Nombre entier du code ASCII | 85 | 110 | 32 | 109 | 111 | 117 | 116 | 111 | 110 | | |
| Adresse des données | 0 | 1 | 2 | 3 | 4 | 5 | 6 | 7 | 8 | | |

| Caractère du 2ème texte | D | e | s | | m | o | u | t | o | n | s |
|---|---|---|---|---|---|---|---|---|---|---|---|
| Nombre entier du code ASCII | 68 | 101 | 115 | 32 | 109 | 111 | 117 | 116 | 111 | 110 | 115 |
| Adresse des données | 0 | 1 | 2 | 3 | 4 | 5 | 6 | 7 | 8 | 9 | 10 |

On trouve un extrait commun aux fichiers: «mouton» à la position (2, 3) et de taille 7. Comme indiqué ci-avant, le caractère « » (espace) est traité comme une donnée. Deux extraits communs de taille 6 sont éliminés des résultats de recherche car ils sont recouverts par l'extrait « mouton» de plus grande taille (7). Il s'agit de :

« mouto»: position (2, 3) et taille 6
«mouton»: position (3, 4) et taille 6

Ces principes de base étant définis, on décrit maintenant un algorithme de recherche dit «classique» et utilisant lesdits principes. Globalement, la stratégie de recherche mise en oeuvre est d'examiner tous les couples possibles de positions de début que peut prendre un extrait commun sur les deux fichiers à comparer. On définit par le terme «classique» l'algorithme décrit ici. Toutefois, cette définition n'entend pas nécessairement qu'il puisse se retrouver dans l'état de la technique. Il faut simplement comprendre que l'algorithme au sens de la présente invention effectue des opérations supplémentaires, notamment d'élaboration de signatures numériques, qui seront décrites plus loin.

Pour chaque valeur de couple de positions de début (une position de début par fichier), une comparaison est effectuée entre les extraits qui peuvent être prélevés sur chaque fichier. Cette comparaison indique si la condition d'extrait commun est atteinte et détermine la taille maximale de l'extrait commun trouvé pour le couple de positions de début considéré. Le cas échéant, cette taille est enfin comparée à la valeur de la taille minimale des extraits communs à trouver.

Pour tout couple de positions de début sur les fichiers, une même succession d'étapes est utilisée pour identifier l'existence d'un extrait commun. Les couples de positions de début sont testés avec l'ordre prédéfini suivant :

- début de l'analyse avec le couple de positions de début (0,0),
- ordre croissant des positions de début sur le premier fichier, et ordre croissant des positions de début sur le deuxième fichier pour tous les couples ayant la même position de début sur le premier fichier,
- fin d'analyse pour le couple de positions (dernière donnée du premier fichier, dernière donnée du deuxième fichier),
- le couple (n,m) repère finalement la position de début n sur le premier fichier et la position de début m sur le deuxième fichier.

Dans le cas où la recherche a été arrêtée pour afficher un extrait commun trouvé à la position (n, m), la recherche d'autres extraits communs reprend à partir du couple de positions de début suivant :

- (n, m+1) dans le cas général, ou
- (n+1, 0) dans le cas particulier où la position m+1 dépasse la dernière donnée du 2ème fichier et où la position n+1 ne dépasse pas la dernière donnée du premier fichier.

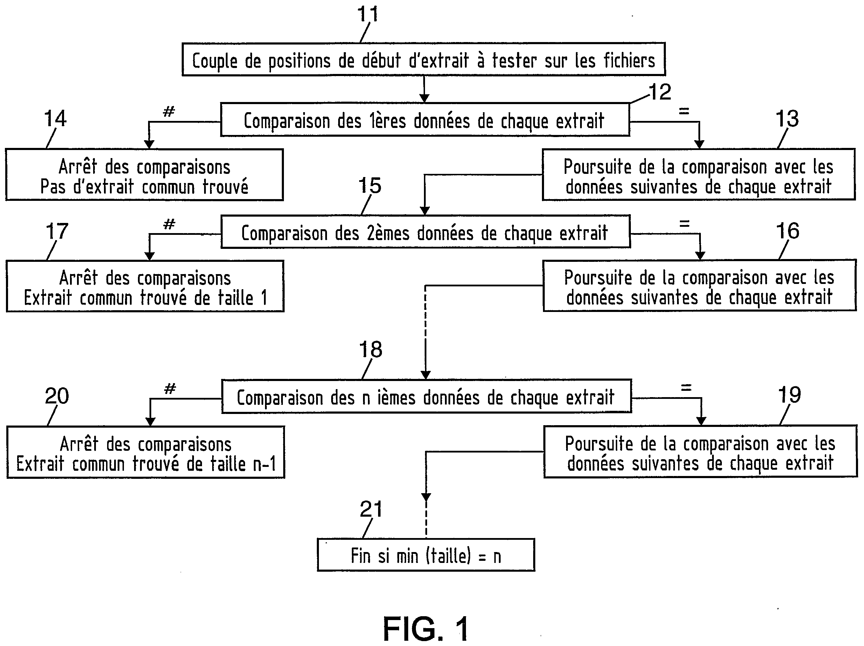

En se référant à la figure 1, on fixe ainsi un couple de position de début d'extrait à tester sur les deux fichiers (étape 11). On compare ensuite les premières données de chaque extrait (étape 12). En cas d'identité, on poursuit la comparaison avec les données suivantes de chaque extrait (étape 13). Sinon (dans le cas où aucun extrait commun n'est trouvé), les comparaisons s'arrêtent (étape 14). On réitère les mêmes étapes pour les deuxièmes données de chaque extrait (étapes 15, 16 et 17), et ce, jusqu'aux nièmes données (étapes 18, 19 et 20). Par exemple, la comparaison peut se terminer si la taille d'extrait est atteinte pour la valeur n (étape 21).

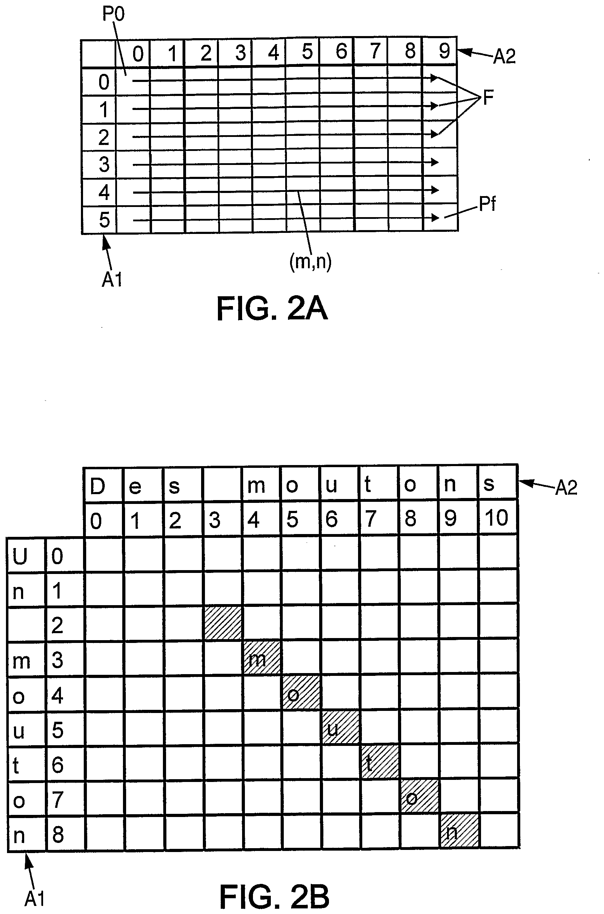

On décrit ci-après une représentation bidimensionnelle utilisant un tableau représenté en figure 2A.

L'axe vertical A1 porte les adresses des données du premier fichier. L'axe horizontal A2 porte les adresses des données du second fichier. Chaque case (m,n) du tableau représente un couple de position de début à évaluer pour rechercher un extrait commun.

Pour l'exemple, la taille du premier fichier vaut 6 (adresses 0 à 5) et celle du second fichier vaut 10 (adresses 0 à 9). Les flèches F dans le tableau indiquent le sens de déplacement qui est utilisé pour tester l'ensemble des couples possibles de positions de début d'extraits communs à trouver.

L'exemple représenté sur la figure 2B porte sur la recherche d'extraits communs de taille minimum 6 entre les textes *«Un mouton»* et *«Des moutons».* L'axe vertical A1 porte les adresses des données du premier fichier (*«Un mouton»*). L'axe horizontal A2 porte les adresses des données du second fichier (*«Des moutons»*). Les cases grisées indiquent l'extrait commun trouvé «*mouton»* de taille 7 (incluant l'espace précédant le mot), commençant par le couple de positions de début (2,3).

Comme les outils de programmation informatique imposent des contraintes sur la taille des tableaux de données pouvant être utilisés dans des programmes, un programme informatique reprenant cet algorithme procède préférentiellement à une découpe préalable des fichiers en blocs de données consécutifs de taille réduite (la découpe tient compte des recouvrements nécessaires entre blocs permettant de garantir le test de l'ensemble des couples de positions de début d'extraits communs à rechercher). L'algorithme est ensuite appliqué sur l'ensemble des combinaisons possibles de couples de blocs de données. L'ordre de comparaison des couples de blocs de données est analogue à celui décrit précédemment, à savoir par les couples de positions de début d'extraits. Mais, simplement ici, la comparaison porte sur des blocs de données plutôt que de porter sur des données isolées. Typiquement, le premier bloc du premier fichier est comparé au premier bloc du deuxième fichier, puis aux blocs suivants du deuxième fichier. Le bloc suivant du premier fichier est comparé ensuite au premier bloc du deuxième fichier, puis aux blocs suivants du deuxième fichier, ..., et ainsi de suite jusqu'à atteindre le dernier bloc de chaque fichier.

En termes de performances, le temps d'exécution du programme moteur de recherche en mode «*plein texte»* (c'est-à-dire par analyse de l'intégralité du contenu des fichiers) dépend essentiellement du nombre de comparaisons à effectuer entre données. Ce paramètre est le plus important mais n'est pas le seul car il faut tenir compte aussi de la vitesse de transfert des données entre disque et mémoire vive (RAM), puis entre mémoire RAM et microprocesseur.

Le nombre minimum de comparaisons à effectuer entre données pour accomplir la recherche d'un extrait commun de taille 1 est égal au produit :

$$\text{(taille du premier fichier) x (taille du second fichier)}$$

Pour la recherche d'extraits communs de taille minimum n, on optimise l'algorithme de recherche pour éliminer les positions de fin de fichier des couples possibles de positions de début à analyser. Dans ce cas, le nombre minimum de comparaisons entre données à effectuer est ramené au produit :

$$\text{(taille du premier fichier - n + 1) x (taille du second fichier - n + 1)}$$

Pour des fichiers de grande taille, la valeur de ce nombre reste proche de celle du produit des tailles des fichiers.

Le programme selon l'algorithme de recherche classique utilise cette valeur pour estimer la durée totale et la vitesse de recherche par interpolation du nombre de couples de positions de début déjà testé et du temps de recherche écoulé.

On décrit maintenant l'algorithme de recherche d'extraits communs au sens de la présente invention.

Globalement, on cherche à améliorer les performances de recherche en réduisant le nombre d'opérations de comparaisons à effectuer entre données par rapport à l'algorithme classique.

La démarche retenue ici est d'effectuer les recherches en deux passes. Une recherche grossière sur les fichiers qui élimine rapidement des portions de fichier qui ne comportent pas d'extraits communs. Une recherche fine sur les portions de fichier restantes en utilisant un algorithme voisin de l'algorithme classique décrit ci-avant. Toutefois, comme on le verra plus loin dans certains cas de fichiers, la deuxième passe n'est pas toujours nécessaire et s'utilise préférentiellement pour des fichiers de textes à comparer.

Pour la recherche grossière, l'algorithme au sens de l'invention met en oeuvre un calcul avantageux de signatures numériques sur les fichiers à comparer. Les «*signatures numériques*» peuvent être assimilées à des fichiers ou à des tableaux de données dont la taille est inférieure à celle des fichiers desquels ces signatures sont issues.

Les signatures numériques ont la propriété de pouvoir être utilisées comme index des fichiers qui leur sont associés. En outre, une relation mathématique permet de mettre en correspondance un extrait quelconque d'une signature numérique avec une portion précise du fichier qui lui est associé. De plus, la position de début d'un extrait de signature numérique est en correspondance avec un nombre fixe de positions de début d'extraits sur le fichier qui est associé à la signature numérique. Inversement, à partir d'une certaine taille d'extrait, tout extrait de données pris sur un fichier peut être associé à un extrait de la signature numérique. Les signatures numériques ont aussi la propriété de pouvoir être comparées entre elles pour identifier des extraits communs de signatures.

On indique toutefois que la définition des extraits communs de signatures numériques et les opérations mathématiques utilisées pour effectuer les comparaisons de signatures numériques sont différentes de celles qui ont été décrites ci-avant pour la recherche d'extraits communs à des fichiers. Les propriétés d'index des signatures numériques sont exploitées pour interpréter les résultats de recherche d'extraits communs de signatures. En effet, pour un couple de positions de début déterminé (une par signature numérique), l'absence d'extrait commun se traduit mathématiquement par une absence d'extrait commun entre deux portions de fichier (une portion par fichier associé à chaque signature numérique). A l'inverse, un extrait commun trouvé entre deux signatures numériques se traduit par l'existence possible d'un extrait commun entre deux portions de fichiers (une portion par fichier associé à chaque signature).

La recherche des extraits communs entre fichiers n'est effectuée que sur les portions de fichier qui sont repérées par les résultats positifs de recherche d'extraits communs de signatures numériques. Tout extrait commun de signatures numériques est repéré par un couple de positions de début dans chaque signature, et chaque position de début de signature est en correspondance avec une portion de fichier délimitée par à un nombre fixe entier (N) de positions de début dans le fichier. Chaque extrait commun de signatures numériques trouvé se traduit donc par une recherche d'extrait commun entre fichiers sur un jeu réduit de (N x N) couples de positions de début à tester. A l'inverse, chaque couple de positions de début qui est caractérisé par une absence d'extrait commun de signatures numériques se traduit par une économie de recherche d'extrait commun entre fichiers sur un jeu de (N x N) couples de positions de début à tester.

Le calcul des signatures numériques conditionne la valeur de taille minimale des extraits communs à trouver entre fichiers. Le nombre fixe (N) de positions de début d'extrait sur le fichier en correspondance avec chaque donnée de signature numérique est un paramètre ajustable du traitement de calcul des signatures numériques.

La valeur de la taille minimale des extraits communs de fichiers qui peuvent être trouvés avec l'algorithme de recherche grossière est déterminée à partir de ce nombre au moyen d'une formule mathématique que l'on décrira en détail ci-après. Cette valeur augmente quant celle du nombre fixe N de positions augmente. Ci-après, on désigne ce nombre N par le terme «*rapport d'index*».

On verra plus loin et en détail que l'algorithme de recherche d'extraits communs de signatures numériques a quelques similitudes avec l'algorithme de recherche classique d'extraits communs à des fichiers.

On indique simplement ici que la stratégie de recherche mise en oeuvre est d'examiner tous les couples possibles de positions de début que peut prendre un extrait commun sur les deux signatures numériques à comparer. La taille minimale de l'extrait commun de signatures numériques à trouver est déterminée au moyen d'une formule mathématique que l'on décrira plus loin, à partir de la valeur du rapport d'index et de la taille minimale des extraits communs de fichiers à trouver.

Pour chaque valeur de couple de positions de début (une position de début par signature numérique), une comparaison est effectuée entre les extraits qui peuvent être prélevés sur chaque signature numérique.

Ainsi, globalement, l'algorithme au sens de l'invention enchaîne les étapes de recherche suivantes :

- Une recherche grossière entre fichiers, avec calcul d'une signature numérique par fichier à comparer et une comparaison des signatures numériques à la recherche d'extraits communs de signatures numériques, et
- Une recherche fine entre fichiers pour chaque extrait commun trouvé de signatures numériques, avec une mise en oeuvre de l'algorithme classique pour rechercher des extraits communs dans les portions de fichiers qui sont en correspondance avec les extraits communs de signatures numériques.

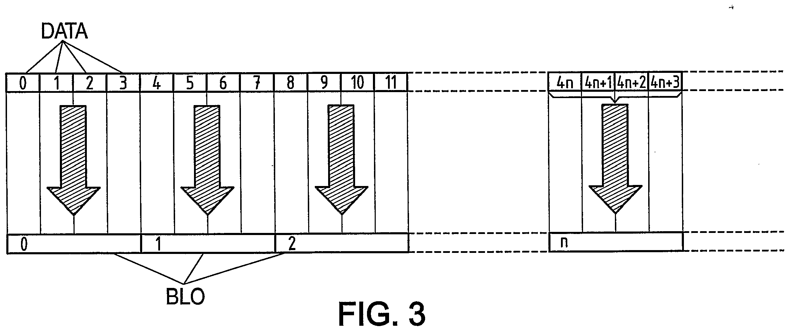

On décrit maintenant le principe de l'algorithme au sens de l'invention, de façon plus détaillée. En se référant à la figure 3, le fichier de données DATA est découpé en blocs consécutifs BLO de données dont la taille est égale à celle du rapport d'index. Globalement, le calcul de signature numérique associe une donnée de signature à chaque bloc de données du fichier. Dans l'illustration de la figure 3, le rapport d'index vaut 4.

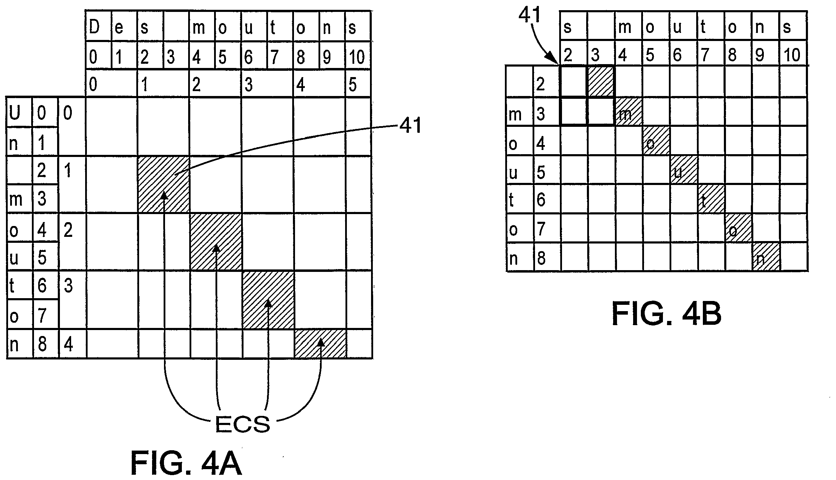

On a représenté sur les figures 4A et 4B des tableaux bidimensionnels d'une recherche d'extraits communs de taille minimale 6 entre les fichiers texte *«Un mouton»* et *«Des moutons»*. Dans cet exemple, le rapport d'index vaut 2. La signature numérique du premier fichier comprend 5 données. La signature numérique du second fichier comprend 6 données. Les parties grisées de la figure 4A représentent des extraits communs de signatures numériques ECS entre les deux fichiers (par exemple la référence 41). Typiquement, en se référant à la figure 4B, cette référence 41 correspond à une zone de recherche réduite de 4 (2x2) couples de positions de début d'extrait à tester sur les fichiers. Cette zone de recherche réduite est associée au couple (1,1) de positions de début d'extrait commun de signatures numériques.

On décrit maintenant de façon détaillée des opérations de calcul et de comparaison des signatures numériques. Le calcul des données de signatures numériques utilise une théorie mathématique de logique floue.

Habituellement, la logique binaire utilise un bit de données pour coder 2 états logiques. Le code 0 est associé à l'état «*faux*», tandis que le code 1 est associé à l'état «*vrai*».

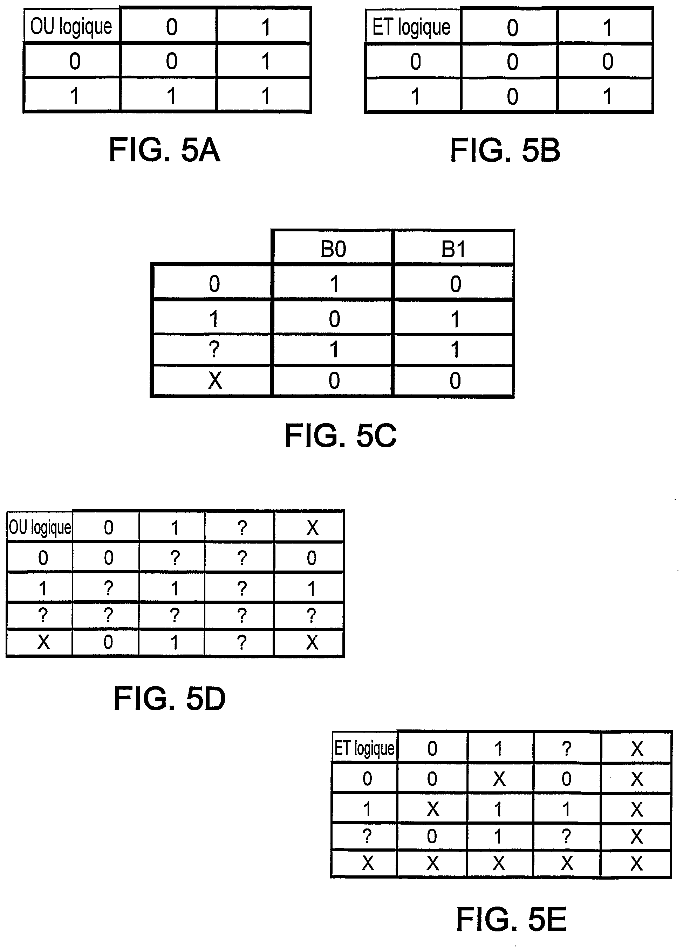

La logique binaire dispose d'un jeu d'opérations logiques de comparaison entre états binaires, comme représenté sur les tables de vérité des figures 5A et 5B.

Une donnée de 8 bits (un octet) peut stocker 8 états binaires indépendants.

Comparativement à la logique binaire, la logique floue utilise deux états supplémentaires qui sont l'état indéterminé «?» (à la fois vrai et à la fois faux) et l'état interdit «X» (ni vrai et ni faux).

Les 4 états de logique floue sont codés sur 2 bits, comme représenté sur la figure 5C, où les références B0 et B1 représentent donc un codage des états sur 2 bits (axe horizontal), tandis que l'axe vertical représente les différents états de logique floue «0», «1», «?» et «X». Une donnée de 8 bits (un octet) peut stocker ainsi 4 états flous indépendants.

La logique floue dispose d'un jeu d'opérations logiques de comparaison entre états flous tels que représentés sur les figures 5D et 5E, respectivement pour le «OU» en logique floue et le «ET» en logique floue. Le résultat de ces opérations est simplement obtenu en appliquant une comparaison binaire OU ou ET à chaque bit de codage des composantes binaires des états flous.

On indique que, dans le contexte de l'invention, le calcul de signatures numériques utilise l'opération OU pour déterminer un état flou commun à un bloc de données consécutives du fichier associé à la signature. Au départ, un état binaire (0 ou 1) est associé à chaque adresse de donnée, dans un bloc de données du fichier. La taille du bloc de données est égale au rapport d'index, comme indiqué ci-avant. Les états binaires sont ensuite comparés entre eux pour déterminer l'état-flou «0», «1» ou «?» d'une donnée de la signature numérique. On associe ensuite une donnée de signature numérique au bloc de données du fichier.

Ensuite, la comparaison des signatures numériques, proprement dite, utilise l'opération ET pour déterminer s'il y a ou non possibilité d'avoir un extrait commun aux fichiers. Les décisions sont donc prises en fonction de l'état de logique floue qui est pris par le résultat de l'opération ET appliquée à des couples de données de signatures numériques.

L'état interdit X signifie qu'il n'y a pas d'extrait commun entre les fichiers dans les zones de données qui sont associées au couple courant de positions de début d'extrait commun de signatures numériques (avec un bloc par donnée de signature numérique). On décrira ce cas en détail plus loin. Les états «0», «1» ou «?» signifient inversement qu'il y a possibilité d'extrait commun entre les fichiers dans les zones de données qui sont associées au couple courant de positions de début d'extrait commun de signatures numériques.

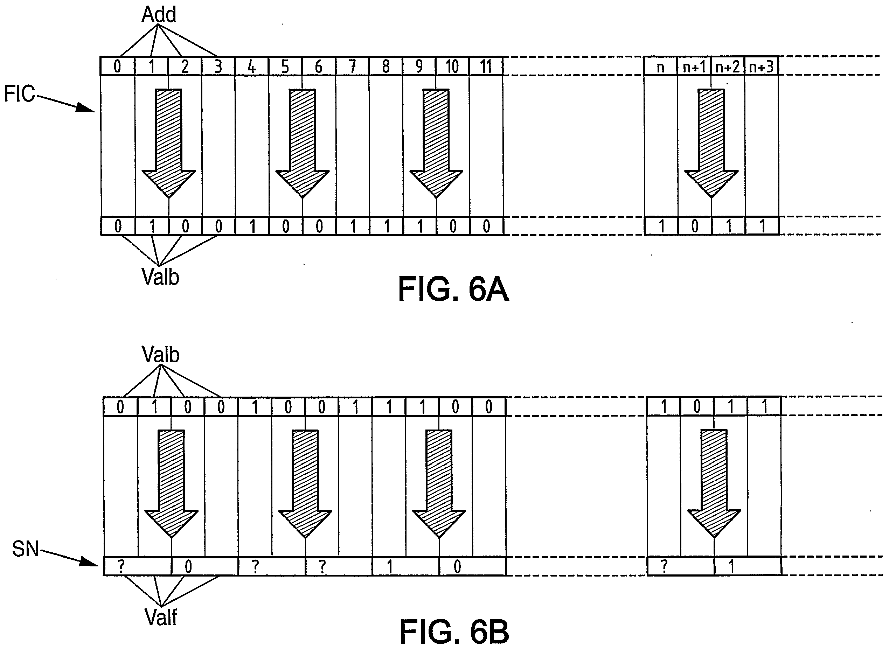

En se référant aux figures 6A et 6B, les signatures numériques sont calculées en deux étapes :

- Une étape de calcul d'une signature binaire en associant un état binaire à chaque adresse de donnée du fichier. Les lois de calcul utilisées permettent d'associer à rebours un extrait de fichier de taille fixe à chaque état binaire, et

- Une étape de calcul d'une signature floue par comparaison entre eux des états de la signature binaire sur des blocs de taille égale à celui du rapport d'index. Chaque bloc de N états binaires consécutifs détermine un état flou.

Dans l'exemple des figures 6A et 6B, le rapport d'index N vaut 2. Sur la figure 6A, la référence Add identifie les adresses respectives des données du fichier FIC et la référence Valb identifie les états binaires associés respectivement aux adresses de ces données. Sur la figure 6B, la même référence Valb identifie les états binaires associés respectivement aux mêmes adresses des données et la référence Valf identifie les états en logique floue associés aux données de la signature numérique SN tirée du fichier FIC. On compte un état de logique floue par bloc de N adresses, où N est le rapport d'index (ici N=2). La succession «?», «0», «?», ... des états de logique floue Valb de la figure 6B s'interprète typiquement ainsi :

- les états binaires « 0 » et « 1 » des deux premières adresses du fichier étant différents, l'opération OU en logique floue appliquée à ces états donne «?»,

- les états binaires «0» et «0» des troisième et quatrième adresses du fichier étant égaux à «0», l'opération OU en logique floue appliquée à ces états donne «0»,

- les états binaires «1» et «0» des cinquième et sixième adresses du fichier étant différents, l'opération OU en logique floue appliquée à ces états donne encore «?», etc.

On décrit ci-après des exemples de calcul de signatures numériques, avec un texte choisi *«La tortue»*. Chaque caractère du texte est codé sur un octet avec emploi du code ASCII. Chaque code ASCII est représenté par la valeur du nombre entier qui est codé par les 8 bits de l'octet. Ce nombre est compris entre 0 et 255. Les états binaires qui sont associés à chaque adresse de donnée sont déterminés, à titre d'exemple par une loi du type :

- état 0 si la valeur entière du code ASCII du caractère est strictement inférieure à 111,

- et état 1 si la valeur entière du code ASCII du caractère est supérieure ou égale à 111.

Le tableau de la figure 7A montre les résultats qui sont obtenus pour le calcul des états flous de signature numérique avec différentes valeurs de rapport d'index, de 2 à 4, pour le fichier texte *«La tortue».*

La figure 7B montre maintenant les résultats obtenus pour le calcul des états flous de signature numérique avec une valeur de rapport d'index de 2, sur les deux fichiers textes *«Le lièvre»* et *«La tortue».* L'adresse de la donnée est celle de la position de début de l'extrait. La loi de détermination des états binaires est celle décrite ci-avant (valeur ASCII comparée à 111).

Sur la figure 7C, on a représenté un tableau bidimensionnel d'une recherche d'extraits communs entre les fichiers texte *«Le lièvre»* et *«La tortue»,* avec un rapport d'index de 2. La loi de détermination des états binaires qui sont associés à chaque adresse de données est identique à celle énoncée ci-avant (valeurs ASCII à comparer à 111). On a référencé par les sigles AD1 et AD2 les adresses de blocs respectifs tirés du fichier *«Le lièvre»* et du fichier *«La tortue»* et par les sigles SN1 et SN2 les états successifs en logique floue de ces blocs respectifs. Les cases non grisées indiquent les situations pour lesquelles il n'y a pas d'extrait commun de taille 1 entre les portions de fichier qui sont associées aux données de signatures numériques. Les cases grisées indiquent au contraire les situations pour lesquelles il peut y avoir un extrait commun de taille minimale 1 entre les portions de fichier qui sont associées aux données de signatures numériques.

On décrit ci-après les lois mathématiques utilisées pour le calcul des signatures numériques, dans une réalisation préférée. La description qui suit complète la première étape de calcul précitée d'une signature binaire de l'algorithme de recherche au sens de l'invention et décrit les lois mathématiques qui sont utilisées pour déterminer les états binaires qui sont associés à chaque adresse de donnée du fichier. Dans les exemples qui précèdent, chaque état binaire de signature numérique est déterminé par une loi simple qui repose sur la comparaison de la valeur entière du code de chaque octet du fichier avec une valeur entière de référence. L'intérêt de cette loi est limité toutefois, car chaque donnée de signature binaire ne caractérise à la fois qu'une seule donnée de fichier. L'interprétation du résultat des comparaisons entre données de signatures floues (qui sont obtenues à la seconde étape du calcul) se limite ainsi à l'existence possible d'extraits communs aux fichiers de taille 1. L'absence ou l'existence possible d'un extrait commun aux fichiers de taille supérieure à 1 ne peut être détectée par une seule opération de comparaison entre données de signature floue. Pour remédier à cette situation, les lois mathématiques de détermination des états de la signature binaire sont choisies de manière à ce que chaque donnée de signature binaire caractérise un extrait de taille préférentiellement fixe du fichier. La taille des extraits de données est un paramètre de la loi mathématique de détermination des états de la signature binaire. La valeur de ce paramètre est toujours supérieure ou égale à celle du rapport d'index. Grâce à cette condition, le résultat d'une comparaison entre un couple de données de signatures floues peut s'interpréter soit par l'absence soit par l'existence possible d'un extrait commun de fichier de taille au moins égale au rapport d'index (N) parmi le jeu (NxN) de couples de positions de début d'extrait commun de fichier qui est associé au couple de données de signatures floues.

De même, un extrait commun trouvé de taille K entre signatures numériques s'interprète par l'existence possible d'un extrait commun de fichier de taille au moins égale à NxK parmi le jeu (NxN) de couples de positions de début d'extrait commun de fichier qui est associé au couple de positions de début de l'extrait commun trouvé de signatures numériques.

On comprendra aussi que la proportion d'états flous «?» augmente quand la taille du rapport d'index augmente. En conséquence, l'étape de recherche d'extraits communs entre signatures numériques devient beaucoup moins sélective lorsque le rapport d'index augmente. En effet, si les données d'une signature numérique sont toutes égales à l'état «?», la comparaison de cette signature avec une autre signature numérique n'éliminera aucun couple de positions de début d'extrait à rechercher sur les fichiers qui sont associés aux signatures. Pour remédier à cette situation, la loi de détermination des états binaires doit être choisie de manière à ce que l'étape de calcul des états flous (par comparaison de blocs d'états binaires) génère une faible proportion d'états «?» et inversement une proportion élevée d'états «0» ou «1».

On décrit ci-après un traitement pour améliorer la sélectivité des signatures numériques. Les explications qui suivent utilisent des résultats de théories mathématiques des domaines de l'algèbre des transformations et du traitement numérique de signaux.

On rappelle que la transformation de Fourier est une transformation mathématique qui fait correspondre à une fonction f(t) de la variable t une autre fonction F(f) de la variable f selon la formule suivante :

$$F(f) = \int_{-\infty}^{+\infty} f(t)\, e^{-2i\pi ft}\, dt$$

Une propriété de la transformation de Fourier est la réciprocité, permettant d'obtenir à rebours la fonction f(t) à partir de F(f) par la formule suivante :

$$f(t) = \int_{-\infty}^{+\infty} F(f)\, e^{2i\pi ft}\, df$$

Cette formule indique que toute fonction réelle f(t) peut se décomposer en une somme infinie de fonctions cosinusoïdes pures de fréquence f, d'amplitude 2.|F(f)| et de phase $\varphi(f)$.

$$f(t) = \int_{0}^{+\infty} 2\,|F(f)|\,\cos(2\pi ft + \varphi(f))\, df \quad \text{avec } F(f) = |F(f)|\, e^{i\pi\varphi(f)}$$

Les variations de la fonction $\cos(2\pi ft + \varphi)$ sont représentées sur la figure 8A pour diverses valeurs de la phase $\varphi$. La fonction est périodique et sa période T est égale à 1/f. Elle est positive sur des intervalles de taille T/2 et négative sur des intervalles complémentaires de taille T/2.

Cette dernière propriété va être mise à profit pour le choix des lois de détermination des signatures binaires. On associe à la fonction $s(t) = \cos(2\pi ft + \varphi)$ une loi $\text{Etat}_s(t,p)$ de détermination d'états flous à deux variables. On note T = 1/f.

La loi $\text{Etat}_s(t,p)$ est définie pour toute valeur réelle de t et pour toute valeur réelle positive du paramètre p (à rapprocher du rapport d'index précité) :

$$\text{Etat}_s(t,p) = 1 \text{ si } \forall\, x \in [t, t+p],\, s(x) > 0$$

$$\text{Etat}_s(t,p) = 0 \text{ si } \forall\, x \in [t, t+p],\, s(x) < 0$$

$$\text{Etat}_s(t,p) = ?\ \text{sinon}$$

Sur la figure 8B, on a représenté une fonction cosinusoïde où p est voisin de 0,6.T. Pour tout intervalle [t,t+p], la fonction s(t) prend à la fois des valeurs positives et négatives, de sorte que $\text{Etat}_s(t,p) = ?$ Ainsi, si le paramètre p est plus grand que T/2, on aura «Etat$_s$(t,p) = ?», pour tout t.

On a représenté sur la figure 8C les états flous de la loi Etat$_s$(t,p) pour des valeurs fixes de p comprises maintenant entre 0 et T/2 (p=0,3T dans l'exemple représenté). Les probabilités de tirage des états flous sont obtenues en relevant sur un intervalle de taille égale à la période T (T = 1/f) la taille cumulée des intervalles de la variable t qui produisent chaque état flou possible (0, 1 ou ?), puis en divisant cette taille cumulée par T.

Ci-après, les notations suivantes sont utilisées :

Probabilité de tirage de l'état 1: P1(f,p)
Probabilité de tirage de l'état 0: P0(f,p)
Probabilité de tirage de l'état ?: P?(f,p)

On obtient les résultats suivants pour la loi Etat$_s$(t,p):
Pour p $\in$ [0,T/2]

$$P1(f,p) = P0(f,p) = (T/2 - p)/T = 1/2 - p/T = 1/2 - pf$$

$$P?(f,p) = 1 - P1(f,p) - P0(f,p) = 2pf$$

Pour p plus grand que T/2

$$P1(f,p) = P0(f,p) = 0$$

$$P?(f,p) = 1$$

On rappelle encore que les probabilités de tirage des états flous ont été obtenues après application à la fonction s(t) = cos(2πft + φ) de la loi Etat s(t,p) de détermination d'états flous. On remarquera aussi que la probabilité de tirage des états flous ne dépend pas de la phase φ de la fonction s(t) = cos(2πft + φ).

En se référant aux figures 9A, 9B et 9C, la représentation graphique des variations des probabilités P1(f,p) P0(f,p) et P?(f,p) en fonction de la fréquence montre que la probabilité de tirage des états 1 et 0 croit quand la fréquence f diminue. Inversement, la probabilité de tirage de l'état «?» croit quand la fréquence f augmente.

On va chercher maintenant à appliquer cette observation à la comparaison de données binaires au sens de l'invention.

L'échantillonnage d'une fonction f(t) de la variable t consiste à relever les valeurs qui sont prises par cette fonction à des instants T$_n$ qui sont espacés entre eux d'un intervalle fixe Te. Les notations suivantes sont utilisées :

n numéro d'échantillon (entier compris entre -∞ et +∞)
T$_n$ instant de l'échantillon n: T$_n$=n.Te
f$_n$ valeur de l'échantillon n: f$_n$=f(T$_n$)

Dans la théorie du traitement du signal, le théorème de Shannon montre que l'original d'une fonction f(t) peut être obtenu à rebours à partir des échantillons f$_n$ si le spectre fréquentiel de la transformée de Fourier F(f) associée à f(t) est strictement borné par l'intervalle [-Fe/2,Fe/2], avec Fe = 1/Te.

Dans cette condition, la fonction f(t) est obtenue après application d'un filtrage passe-bas idéal dans la bande de fréquence [-Fe/2, Fe/2] sur la transformée de Fourier du signal échantillonné F(f).

Pour la suite, on considère que les fichiers de données présentent des échantillons f$_n$ d'une fonction f(t) qui satisfait aux conditions précédentes. En particulier, chaque adresse de donnée correspond à un numéro d'échantillon n. Chaque donnée stocke la valeur d'un échantillon (typiquement un entier codé sur les bits d'un octet).

La transformée de Fourier du signal associé aux échantillons f$_n$ d'un fichier de données est la suivante :

$$\hat{F}(t) = \int_{-\infty}^{+\infty} \hat{f}(t).e^{-2i\pi ft} dt, \quad avec\ \hat{f}(t) = f_n\ pour\ t = T_n\ et\ \hat{f}(t) = 0\ pour\ t \neq T_n \quad (où\ T_n = n.Te)$$

On notera que le choix de la période d'échantillonnage Te est libre ici.

La transformée de Fourier s'exprime aussi dans ce cas par la formule simplifiée suivante :

$$\hat{F}(f) = \sum_{n=0}^{n=N} f_n \, e^{-2i\pi fT_n}$$

avec N + 1 = taille du fichier de données

La transformée de Fourier F(f) de l'original de la fonction f(t) qui est associée aux échantillons $f_n$ s'obtient par application du théorème de Shannon :

$$F(f) = \hat{F}(f)/Fe \quad \text{pour } f \in [ \, -Fe/2, \, Fe/2 \, ]$$

$$F(f) = 0 \quad \text{pour les autres valeurs de } f$$

La fonction f(t) qui est associée aux échantillons $f_n$ est obtenue par application de la transformée inverse de Fourier.

$$f(t) = \int_{-\infty}^{+\infty} F(f) \, e^{2i\pi ft} \, df = \int_{-Fe/2}^{Fe/2} (\hat{F}(f) / Fe) \, e^{2i\pi ft} \, df$$

$$= \int_{-Fe/2}^{Fe/2} \left( \sum_{n=0}^{n=N} (f_n / Fe) \, e^{-2i\pi fT_n} \right) e^{2i\pi ft} \, df$$

$$= \sum_{n=0}^{n=N} (f_n / Fe) \int_{-Fe/2}^{Fe/2} e^{2i\pi f(t - nTe)} \, df = \sum_{n=0}^{n=N} f_n \left[ \frac{e^{2i\pi f(t - nTe)}}{2i\pi Fe(t - nTe)} \right]_{-Fe/2}^{Fe/2}$$

et s'exprime finalement sous la forme d'une somme finie de termes en :

$$f(x) = \sin(x)/x, \text{ où } x = \pi Fe(t - nTe),$$

soit :

$$f(t) = \sum_{n=0}^{n=N} f_n \, \frac{\sin(\pi Fe(t - nTe))}{\pi Fe(t - nTe)} = \sum_{n=0}^{n=N} f_n(t)$$

On a représenté sur la figure 10 un exemple de représentation de la fonction f(t) associée aux données du fichier texte *«Le lièvre»,* en fonction du rapport t/T.

On indique que les relations précédentes entre une fonction f(t) et un jeu d'échantillons $f_n = f(nTe)$ s'appliquent pour toute fonction qui satisfait aux conditions de Shannon.

Elles s'appliquent donc aussi pour la fonction s(t) = cos(2πft + φ) si l'on vérifie la condition :

$$f \in [ \, -Fe/2, \, Fe/2 \, ]$$

On peut alors représenter s(t) par un jeu infini d'échantillons $s_n$ pris sur s(t) aux instants $t_n = nTe$.

On rappelle la loi $Etat_s(t,p)$ précédemment définie pour toute valeur réelle de t et pour toute valeur réelle positive de p:

$$Etat_s(t,p) = 1 \text{ si } \forall \, x \in [t, \, t+p], \, s(x) > 0$$

$$\text{Etat}_s(t,p) = 0 \text{ si } \forall\, x \in [t,\, t+p],\, s(x) < 0$$

$$\text{Etat}_s(t,p) = ?\ \text{sinon}$$

Les propriétés de cette loi peuvent être simplement transposées dans le domaine des échantillons $s_n$ si l'on s'intéresse à la loi suivante de détermination d'état flous définie sur une séquence de k échantillons consécutifs $\{s_n, s_{n+1}, ..., s_{n+k-1}\}$.

$$\text{Etat}_s(n,k) = 1 \text{ si } \forall\, i \in \{0,\, k\text{-}1\},\, s_{n+i} > 0$$

$$\text{Etat}_s(n,k) = 0 \text{ si } \forall\, i \in \{0,\, k\text{-}1\},\, s_{n+i} < 0$$

$$\text{Etat}_s(n,k) = ?\ \text{sinon}$$

Les probabilités de tirage des états flous associés à la loi $\text{Etat}_s(n,k)$ s'obtiennent simplement à partir de la loi $\text{Etat}_s(t,p)$ en remplaçant **p** par **(k-1)Te.**
On obtient ainsi la représentation graphique des probabilités de tirage des états 1 ou 0 de la loi $\text{Etat}_s(n,k)$ en fonction de la fréquence de la fonction s(t) associée aux échantillons $s_n$.
Dans l'exemple de la figure 11, k est fixé à 3. La probabilité de tirage de 3 échantillons consécutifs de s(t) tels que s(nTe), s((n+1)Te), s((n+2)Te) soient supérieurs à 0 est donnée par Pl(f,3), laquelle est nulle pour f supérieure à 1/2p avec p = (3-1)Te = 2/Fe, soit encore pour f> Fe/4.
On va étendre la définition des lois de détermination d'états flous au cas d'une fonction quelconque f(t) qui satisfait aux conditions de Shannon. Dans ce cas général, la loi $\text{Etat}_f(t,p)$ est définie pour toute valeur réelle de t et pour toute valeur réelle positive de p:

$$\text{Etat}_f(t,p) = 1 \text{ si } \forall\, x \in [t,\, t+p],\, f(x) > 0$$

$$\text{Etat}_f(t,p) = 0 \text{ si } \forall\, x \in [t,\, t+p],\, f(x) < 0$$

$$\text{Etat}_f(t,p) = ?\ \text{sinon}$$

Cette loi de détermination d'états flous est également transposée dans le domaine des échantillons $f_n$ sur des séquences de k échantillons consécutifs $\{f_n, f_{n+1}, ..., f_{n+k-1}\}$.

$$\text{Etat}_f(n,k) = 1 \text{ si } \forall\, i \in \{0,\, k\text{-}1\},\, f_{n+i} > 0$$

$$\text{Etat}_f(n,k) = 0 \text{ si } \forall\, i \in \{0,\, k\text{-}1\},\, f_{n+i} < 0$$

$$\text{Etat}_f(n,k) = ?\ \text{Sinon}$$

Contrairement au cas particulier déjà traité où f(t) est une sinusoïde pure de fréquence f, il n'y a pas de relation mathématique simple qui permette de calculer ici les probabilités de tirage des états flous à partir de la transformée de Fourier F(f).
On peut par contre s'inspirer des propriétés des probabilités de tirage des états flous associés aux lois $\text{Etat}_s(n,k)$ et $\text{Etat}_s(t,p)$ pour déduire que l'application d'un filtrage passe-bas sur une fonction quelconque f(t) se traduit par l'augmentation des probabilités de tirage des états 0 et 1 et par la diminution de la probabilité de tirage de l'état ? qui sont associés aux lois $\text{Etat}_f(n,k)$ et $\text{Etat}_f(t,p)$.

Dans le cas de la loi $Etat_f(n,k)$, on sait que si la fonction f(t) est une sinusoïde pure de fréquence f, on aura pour f > Fe/2(k-1) et k > 1

$$P1(f,k) = P0(f,k) = 0$$

$$P?(f,k) = 1$$

Si l'on applique un filtrage passe-bas idéal dans la bande de fréquences [-Fe/2(k-1), Fe/2(k-1)] à une fonction f(t), on comprend que les probabilités de tirage des états 1 et 0 vont augmenter puisque chaque composante fréquentielle $R_k(f)$ du signal résultat $r_k(t)$ contribue au résultat final avec une probabilité individuelle non nulle de tirage pour les états 0 ou 1.

On peut démontrer cette assertion dans le cas d'une fonction de bruit aléatoire b(t) pour laquelle l'amplitude du spectre B(f) est constante dans la bande de fréquences [-Fe/2, Fe/2]. Dans le cas d'une fonction de bruit aléatoire b(t), on sait que les probabilités de tirage d'un échantillon sont :

$$P1_b (k=1) = P0_b (k=1) = 1/2$$

$$P?_b (k=1) = 0$$

Pour 2 échantillons consécutifs, on obtient:

$$P1_b (k=2) = P0_b (k=2) = (1/2)^2$$

$$P?_b (k=2) = 1 - P1_b - P0_b = 1 - 2 \, x(1/2)^2$$

Et pour n échantillons consécutifs, on obtient:

$$P1_b (k=n) = P0_b (k=n) = (1/2)^n$$

$$P?_b (k=n) = 1 - P1_b - P0_b = 1 - 2 \, .(1/2)^n$$

Ainsi, pour un grand nombre d'échantillons successifs, les probabilités de tirage des états «0» et «1» tendent vers 0 tandis que la probabilité de tirage de l'état indéterminé «?» tend vers 1. On considère maintenant une fonction $r_n(t)$ qui est obtenue par application d'un filtrage passe-bas idéal à la fonction b(t) dans la bande de fréquences [-Fe/2(n-1), Fe/2(n-1)]. On a alors observé que la représentation des spectres de $R_n(f)$, de P1(f,n), de P0(f,n) et de P?(f,n) s'obtient par simple homothétie des spectres de $R_2(f)$, de P1(f,2), de P0(f,2) et de P?(f,2), comme le montrent les figures 12A et 12B. On a représenté aussi sur la figure 12A l'amplitude du spectre B(f) associé à la fonction b(t). On a représenté aussi sur la figure 12B l'amplitude du spectre $R_n(f)$ associé à $r_n(t)$.

On en déduit qu'il y a égalité entre les probabilités de tirage de n échantillons consécutifs du signal de bruit filtré $r_n(t)$ et celle de tirage de 2 échantillons consécutifs du signal de bruit non filtré b(t). Les probabilités de tirage d'un état 1 ou d'un état 0 pour n échantillons consécutifs du signal de bruit filtré $r_n(t)$ valent 1/4, tandis que la probabilité de tirage d'un état «?» pour n échantillons consécutifs du signal de bruit filtré $r_n(t)$ vaut 1/2.

En conclusion, on améliore la sélectivité des signatures numériques en appliquant un filtrage passe-bas à la fonction f(t) qui est associée aux échantillons $f_n$ = f(nTe).

Les étapes de traitement et les relations entre données de fichiers, échantillons et fonctions peuvent être résumées comme représenté sur la figure 13. A l'étape 131, on récupère les données $d_n$ d'un fichier à traiter, lesquelles sont échantillonnées à l'étape 132 pour obtenir les échantillons $f_n$ qui sont des nombres entiers codés par les données $d_n$. Selon le théorème de Shannon (étape 132'), ces échantillons sont associés à une fonction f(t) de spectre F(f) borné et :

$$F(f) = 0 \; pour \; f \notin \left[ -Fe/2, Fe/2 \right]$$

En appliquant un filtre passe-bas (étape 135') à cette fonction F(f), on obtient la fonction R(f) correspondant à la transformée de fourrier de la fonction r(t) (étape 133') dont les échantillons $r_n$ sont tels que $r_n = r(n.Te) = r(n/Fe)$ selon le théorème de Shannon (étape 133).

En pratique, on appliquera préférentiellement un filtre numérique passe-bas, à l'étape 135, directement aux échantillons $f_n$ pour obtenir les échantillons $r_n$ à l'étape 133. Ce filtre numérique sera décrit en détail plus loin. On applique enfin une loi de détermination d'états flous aux échantillons filtrés $r_n$ pour obtenir les données de signature numérique $s_{n/k} = Etat_r(n,k)$, sur k échantillons consécutifs $\{r_n, r_{n+1}, ..., r_{n+k-1}\}$, n étant un multiple de k (étape 134).

Comme indiqué ci-avant, ces étapes de la figure 13 peuvent néanmoins être simplifiées en effectuant directement le calcul des échantillons $r_n$ à partir des échantillons $f_n$, en utilisant un filtre numérique.

Dans ce qui suit, on adopte les notations suivantes :

Filtre(f) : transformée de Fourier de l'opérateur de filtrage
filtre(t) : fonction associée à Filtre(f) par application de transformée inverse de Fourier Le théorème de Borel donne la relation :

$$R(f) = Filtre(f) \; x \; F(f)$$

Cette relation se traduit sur les fonctions r(t), filtre(t) et f(t) par une formule du type :

$$r(t) = \int_{-\infty}^{+\infty} f(u) \; x \; filtre \, (t-u) \, du = \int_{-\infty}^{+\infty} f(t-u) \; x \; filtre(u) \, du$$

Si l'on considère les fonctions qui sont associées aux échantillons (et qui respectent les conditions de Shannon), cette relation devient :

$$r_n = r(nTe) = \sum_{k=-\infty}^{k=+\infty} f(nTe - kTe) \; x \; filtre(kTe) = \sum_{k=-\infty}^{k=+\infty} f_{(n-k)} \; x \; filtre_k$$

Le filtrage numérique consiste donc à définir un jeu de coefficients $filtre_k$ que l'on va utiliser pour calculer chaque échantillon $r_n$ par application de la formule ci-dessus.

Dans la pratique, on essaye de s'approcher au mieux d'un gabarit prédéfini de filtre en limitant la taille du jeu de coefficients $filtre_k$. Le compromis à trouver dépend des facteurs suivants :

- La précision du filtre réalisé s'améliore quand le nombre de coefficients du filtre numérique augmente,
- Inversement, la vitesse de calcul des échantillons $r_n$ diminue quand le nombre de coefficients augmente.

Si le nombre de coefficients vaut K, chaque calcul d'échantillon $r_n$ se traduit par K opérations de multiplication et par (K-1) opérations d'addition.

Pour les filtres numériques utilisés par l'algorithme de recherche au sens de l'invention, le critère principal retenu est la vitesse de calcul des échantillons $r_n$.

Dans une réalisation préférée, le choix porte sur une famille particulière de filtres dits à «*valeur moyenne*» pour lesquels les coefficients du filtre numérique sont identiques, de sorte que :

$$filtre_k = Cte \; pour \; k \; entier \in [-K, K]$$

$$filtre_k = 0 \; pour \; les \; autres \; valeurs \; de \; k$$

L'équation du filtre numérique se simplifie sous la forme suivante :

$$r_n = \text{Cte} \times \sum_{k=-K}^{k=+K} f_{(n-k)}$$

Pour ce filtre à 2K+1 coefficients, le calcul d'un échantillon $r_n$ ne se traduit plus alors que par 2K+1 opérations d'addition, et par une opération de multiplication si le terme Cte est différent de la valeur 1.

On remarque par ailleurs que l'échantillon $r_{(n+1)}$ peut s'obtenir simplement à partir de $r_n$ par la relation $r_{(n+1)} = r_n + \text{Cte}(f_{(n+K+1)} - f_{(n-k)})$

De façon particulièrement avantageuse, en appliquant cette dernière relation, le calcul de chaque nouvel échantillon $r_{(n+1)}$ ne se traduit plus que par deux opérations d'addition.

La réponse fréquentielle du filtre numérique à valeur moyenne s'obtient à partir de la transformée de Fourier de l'opérateur de sommation $\sigma(t)$ suivant :

$$\sigma(t) = 1 \text{ pour } t \in [-T/2, T/2]$$

$$\sigma(t) = 0 \text{ ailleurs}$$

Le filtrage de f(t) par l'opérateur $\sigma(t)$ se traduit alors par la formule :

$$r(t) = \int_{-\infty}^{+\infty} f(t-u) \times \sigma(u) \, du = \int_{-T/2}^{T/2} f(t-u) \, du$$

La réponse fréquentielle de l'opérateur $\sigma(t)$ est $\Sigma(f)$ avec :

$$\Sigma(f) = \int_{-\infty}^{+\infty} \sigma(t) \, e^{-2i\pi ft} \, dt = \int_{-T/2}^{T/2} e^{-2i\pi ft} \, dt$$

On obtient finalement :

$$\Sigma(f) = T \frac{\sin(\pi fT)}{\pi fT}$$

La réponse fréquentielle du filtre à valeur moyenne s'obtient en divisant ensuite celle de l'opérateur sommation $\Sigma(f)$ par T.

$$\text{Filtre}(f) = \Sigma moy(f) = \Sigma(f) / T = \frac{\sin(\pi fT)}{\pi fT}$$

La réponse fréquentielle du filtre numérique à valeur moyenne sur K échantillons consécutifs s'obtient ensuite en remplaçant T par (K-1)Te, soit :

$$\text{Filtre}(K,f) = \Sigma moy(K,f) = (K-1)Te \frac{\sin(\pi f(K-1)Te)}{\pi f(K-1)Te}$$

Selon la parité de K, deux équations de filtre numérique sont utilisées pour le calcul des échantillons $r_n$.

Pour K impair on a:

$$r_n = (1/K) \times \sum_{k=-K/2}^{k=+K/2} f_{(n+k)}$$

Pour K pair on a:

$$r_n = (1/K) \times \sum_{k=-K/2}^{k=(K/2)-1} f_{(n+k)}$$

On a représenté sur la figure 14 des exemples de tracé de Filtre(K,f) = Σmoy(K,f) pour quelques valeurs de K, en fonction de f/Fe. La première coupure du filtre à zéro intervient pour f = Fe/(K-1).

On sait par ailleurs que l'application d'un filtrage passe-bas idéal dans la bande de fréquences [-Fe/2(n-1), Fe/2(n-1)] se traduit par les probabilités de tirage suivantes pour des états flous calculés sur des séquences de n échantillons consécutifs :

$$P1 = P0 = 1/4$$

$$P? = 1/2$$

On peut se rapprocher d'un gabarit de filtrage passe-bas idéal en choisissant un filtre numérique à valeur moyenne dont la fréquence de coupure à zéro intervient à f = Fe/2(n-1) : cette condition est atteinte pour K = 2n-1

Dans la pratique, l'application d'un filtre numérique à valeur moyenne se traduit bien sûr par des probabilités de tirage des états flous qui différent de celles obtenues avec un filtre passe-bas idéal. La détermination de la valeur de K est faite de manière empirique en sachant que les probabilités obtenues avec K = 2n-1 seront proches de celles du filtre idéal, et que les probabilités de tirage P1 et P0 augmentent aussi avec la valeur de K.

On décrit ci-après les adaptations apportées aux lois de détermination d'états flous, notamment en fonction de ce qui précède.

Les calculs de probabilités sur le tirage des états flous prennent pour hypothèse que les données de fichiers représentent les valeurs d'échantillons d'un signal f(t) de valeur moyenne nulle. Cette condition se traduit encore par la relation suivante :

$$\int_{-\infty}^{+\infty} f(t)\, dt = 0$$

Les résultats obtenus sur les probabilités de tirage des états flous ne sont donc valides que si cette condition est respectée pour les échantillons $f_n$ :

$$\sum_{n=-\infty}^{n=+\infty} f_n = 0$$

Dans le cas d'un fichier d'échantillons de taille N, cette condition devient :

$$\sum_{n=0}^{n=(N-1)} f_n = 0$$

Or, les conditions précédentes de valeur moyenne nulle ne sont pas systématiquement satisfaites lorsque l'on détermine les valeurs des échantillons à partir des données binaires d'un fichier. Ces conditions ne sont par exemple pas satisfaites si l'on utilise la loi de codage «*entier non signé*» pour représenter les valeurs des échantillons associés aux données d'un fichier. En effet, dans ce cas chaque octet représente un entier compris entre 0 et 255, ce qui conduit à une valeur moyenne d'échantillons de 127,5 pour un fichier de contenu aléatoire. Pour palier ce problème, on introduit comme suit un paramètre de valeur de référence Vref dans la loi de détermination d'états flous sur les séquences de k échantillons consécutifs $r_n$ {$r_n$, $r_{n+1}$, ..., $r_{n+k-1}$} qui ont été obtenus par filtrage numérique à partir des échantillons $f_n$ :

$$\text{Etat}_r(n,k) = 1 \text{ si } \forall\, i \in \{0, k\text{-}1\},\, r_{n+i} >= \text{Vref}$$

$$\text{Etat}_r(n,k) = 0 \text{ si } \forall\, i \in \{0, k\text{-}1\},\, r_{n+i} < \text{Vref}$$

$$\text{Etat}_r(n,k) = ? \text{ Sinon}$$

Le choix de la valeur Vref est alors fait pour s'approcher au mieux de la valeur moyenne prise par les échantillons $f_n$ du fichier de données.

Dans le cas où l'application de recherche est ciblée sur la comparaison de fichiers de même nature, comme par exemple des fichiers texte, la valeur de Vref doit être fixée en connaissance de la loi de codage des données du fichier et des probabilités de tirage de chaque code.

Pour la réalisation du programme informatique de recherche plein texte, dans une réalisation préférée, on considère que le format des fichiers à comparer ne serait pas connu à l'avance. On détermine donc la valeur de Vref en procédant à une analyse préalable des fichiers à comparer. Pour cette réalisation, la valeur de Vref est calculée pour chaque échantillons $r_n$ en effectuant un calcul de valeur moyenne des échantillons $f_k$ sur une séquence de taille fixe, Kref, centrée sur $f_n$, avec :

$$\text{Vref}_n = (1/\text{Kref}) \times \sum_{k = -\text{Kref}/2}^{k = +\text{Kref}/2} f_{(n+k)}$$

Sachant que les échantillons $r_n$ sont déjà obtenus par un calcul de valeur moyenne sur des séquences de K échantillons consécutifs $f_k$, la taille de la séquence Kref (utilisée pour le calcul de $\text{Vref}_n$) est choisie supérieure à celle de K (utilisée pour le calcul des échantillons $r_n$).

La loi de détermination des états flous sur les séquences de k échantillons consécutifs $r_n$ {$r_n$, $r_{n+1}$, ..., $r_{n+k-1}$} devient alors :

$$\text{Etat}_r(n,k) = 1 \text{ si } \forall\, i \in \{0, k\text{-}1\},\, r_{n+i} >= \text{Vref}_{n+i}$$

$$\text{Etat}_r(n,k) = 0 \text{ si } \forall\, i \in \{0, k\text{-}1\},\, r_{n+i} < \text{Vref}_{n+i}$$

$$\text{Etat}_r(n,k) = ? \text{ Sinon}$$

Cette loi se simplifie en posant $r'_n = (r_n - \text{Vref}_n)$. Alors :

$$\text{Etat}_r(n,k) = 1 \text{ si } \forall\, i \in \{0, k\text{-}1\},\, r'_{n+i} >= 0$$

$$\text{Etat}_r(n,k) = 0 \text{ si } \forall\, i \in \{0, k\text{-}1\},\, r'_{n+i} < 0$$

$$\text{Etat}_r(n,k) = ? \text{ Sinon}$$

Pour K pair et Kref pair, la formule du filtre numérique est :

$$r'_n = (1/K) \sum_{k=-K/2}^{k=(K/2)-1} f_{(n+k)} \quad - \quad (1/Kref) \sum_{k=-Kref/2}^{k=(Kref/2)-1} f_{(n+k)}$$

On retiendra que la réponse fréquentielle du filtre numérique associé au calcul des échantillons $r'_n$ s'obtient simplement à partir de celle de $\Sigma moy(K,f)$ :

$$Filtre(f) = \Sigma moy(K,f) - \Sigma moy(Kref,f)$$

Le choix de la valeur de K est fait de manière à ce que la fréquence de coupure à zéro du filtre soit inférieure ou égale à celle qu'il faudrait utiliser pour un filtre passe-bas idéal qui permette d'obtenir des probabilités de tirage d'états 1 ou 0 égales à 1/4. On rappelle que cette fréquence de coupure de filtre passe-bas idéal s'obtient en fonction du rapport d'index k par la formule Fe/(2.(k-1)) et que cette condition est atteinte sur $\Sigma moy(K,f)$ pour K plus petit ou égal à 2k - 1. Le choix de Kref est fait de manière à être supérieur à K, sans être non plus trop élevé.

Pour la réalisation préférentielle du programme informatique de recherche plein texte, on ajuste automatiquement les valeurs à utiliser pour K et Kref en fonction de la valeur k voulue pour le rapport d'index. Les valeurs de K et de Kref sont choisies en tant que multiple de k, ce qui facilite les calculs d'adresse des données, donc :

$$K = interv \times k \text{ et } Kref = intervref \times k$$

La réponse du filtre numérique ajusté pour un rapport d'index k est

$$Filtre(k,f) = \Sigma moy(interv \times k,f) - \Sigma moy(intervref \times k,f)$$

Pour la réalisation du programme informatique de recherche plein texte, quatre lois de détermination d'états flous sont simultanément utilisées, dans une réalisation particulière.

Les états flous déterminés par la première loi sont codés sur les 2 bits de poids faible de chaque donnée de signature numérique. Les états flous déterminés par la deuxième loi sont codés sur les 2 bits de poids faible suivants de chaque donnée de signature numérique, et ainsi de suite, jusqu'à occupation complète des 8 bits (soit donc 1 octet) de chaque donnée de signature numérique.

Les quatre lois sont caractérisées par un jeu de paramètres interv1, interv2, interv3, interv4 et intervref. Le même paramètre intervref est utilisé pour chaque loi. Pour un rapport d'index k, le choix par défaut s'est porté sur le jeu suivant de filtres numériques associés à chaque loi de détermination d'états flous :

$$Filtre1(k,f) = \Sigma moy(2k,f) - \Sigma moy(14k,f)$$

$$Filtre2(k,f) = \Sigma moy(3k,f) - \Sigma moy(14k,f)$$

$$Filtre3(k,f) = \Sigma moy(5k,f) - \Sigma moy(14k,f)$$

$$Filtre4(k,f) = \Sigma moy(7k,f) - \Sigma moy(14k,f)$$

La figure 15 illustre la réponse fréquentielle des filtres numériques par défaut ajustés pour un rapport d'index k = 5. Les formules des filtres numériques par défaut ajustés pour un rapport d'index k sont :

$$r1_n = (1/2k) \sum_{k=-2k/2}^{k=(2k/2)-1} f_{(n+k)} \quad - \quad (1/14k) \sum_{k=-7k}^{k=7k-1} f_{(n+k)}$$

$$r2_n = (1/3k) \sum_{k=-3k/2}^{k=(3k/2)-1} f_{(n+k)} - (1/14k) \sum_{k=-7k}^{k=7k-1} f_{(n+k)}$$

$$r3_n = (1/5k) \sum_{k=-5k/2}^{k=(5k/2)-1} f_{(n+k)} - (1/14k) \sum_{k=-7k}^{k=7k-1} f_{(n+k)}$$

$$r4_n = (1/7k) \sum_{k=-7k/2}^{k=(7k/2)-1} f_{(n+k)} - (1/14k) \sum_{k=-7k}^{k=7k-1} f_{(n+k)}$$

Pour éviter les bruits de calcul occasionnés par les divisions, dans une réalisation avantageuse, on calcule d'abord les sommes, puis on effectue ensuite les tests de signe sur termes $r_n$ en multipliant la première somme par Kref et la deuxième somme par K.

On décrit maintenant une optimisation complète pour l'application à un moteur de recherche plein texte.

Cette optimisation commence par la détermination d'un rapport d'index approprié.

Pour être indépendant des choix particuliers qui pourraient être retenus pour la réalisation des filtres numériques passe-bas (figure 13), on utilise l'équation générale suivante pour le filtre numérique :

$$r_n = \sum_{i=-I1}^{i=+I2} filtre_i \times f_{(n+i)}$$

Comme indiqué relativement à la figure 13, chaque donnée de signature numérique $s_{n/k}$ est déterminée à partir d'un groupe de k échantillons consécutifs $\{r_n, r_{n+1}, r_{n+2}, ..., r_{n+k-1}\}$, k désignant la valeur du rapport d'index et n étant choisi multiple de k. Cette détermination peut être décomposée en deux étapes :

- la détermination d'un état binaire $eb_n$ associé à chaque échantillons $r_n$, avec :

$$eb_n = 0 \text{ si } r_n < 0, \text{ et } eb_n = 1 \text{ sinon}$$

- la détermination d'un état flou $s_{n/k}$ par un OU logique sur le groupe d'états binaires consécutifs $\{eb_n, eb_{n+1}, eb_{n+2}, ..., eb_{n+k-1}\}$:

$$s_{n/k} = (eb_n \text{ ou } eb_{n+1} \text{ ou } eb_{n+2} \text{ ou } ... \text{ ou } eb_{n+k-1})$$

On a illustré sur la figure 16A les relations entre adresses de données de fichier et adresses de données de signatures numériques. On observe que dans le cas d'un choix de rapport d'index k, chaque donnée de signature numérique d'adresse (n/k) est déterminée à partir d'un groupe de (I1 + k + I2) données de fichier : $\{f_{n-I1}, ...., f_{n+I2+k-1}\}$. On notera aussi que dans le cas où les adresses utilisées pour le calcul des échantillons $r_n$ débordent de la plage des données du fichier à indexer, les états $eb_n$ associés sont initialisés à l'état flou «?». Sur la figure 16A, les échantillons $f_n$ sont tirés des données du fichier. On leur applique ensuite le filtrage numérique pour obtenir les échantillons filtrés $r_n$ en correspondance des états $eb_n$ associés. Les états flous $s_{n/k}$ correspondant aux données de signature numérique sont ensuite déterminés par la comparaison mettant en jeu le OU logique :

$$s_{n/k} = (eb_n \text{ ou } eb_{n+1} \text{ ou } eb_{n+2} \text{ ou } ... \text{ ou } eb_{n+k-1})$$

en respectant avantageusement les mêmes adresses de départ des échantillons $f_n$.

Pour l'application au moteur de recherche plein texte, la valeur k du rapport d'index conditionne la valeur de taille minimale d'extraits communs à deux fichiers qui peuvent être détectés en procédant par une recherche d'extraits communs de signatures numériques. Cette taille minimale d'extrait commun de fichier est obtenue lorsque la taille de l'extrait commun aux signatures numériques est égale à 1. Dans ce cas, la condition de détection de l'extrait commun de fichier impose que le groupe des données consécutives de l'extrait à trouver recouvre le groupe des données consécutives utilisées pour le calcul de chaque donnée de signature numérique.

En prenant les notations $t_{ext}$ pour la taille d'extrait commun de fichier à trouver et $t_{sign}$ pour la taille du groupe de données utilisées pour le calcul d'une donnée d'index, on démontre la relation $t_{ext} \geq t_{sign} + (k-1)$.

On a représenté sur la figure 16B les conditions de recouvrement des données associées au calcul d'une donnée de signature numérique par celles d'un extrait de fichier. Sur la figure 16B, la référence EXT désigne un extrait de données qui satisfait la condition de recouvrement du groupe de données utilisé pour déterminer la donnée de signature numérique d'adresse (n/k). La référence G1 désigne le groupe de données utilisé pour déterminer la donnée de signature numérique d'adresse (n/k). La référence G2 désigne le groupe de données utilisé pour déterminer les données de signature numérique d'adresses respectives (n/k)-1 et (n/k). La référence ADSN désigne les adresses des données de signature numérique. On rappelle que l'entier n est un multiple du rapport d'index k.

On observe que les conditions de recouvrement dépendent de la phase de l'adresse de début de l'extrait de données qui sera recherché. Dans le cas le plus favorable, l'adresse de début de l'extrait coïncide avec l'adresse de la première donnée d'un groupe de données utilisé pour le calcul d'une donnée de signature numérique. Dans ce cas, l'adresse de début de l'extrait est n-I1 (avec n multiple de k) et la taille minimale de l'extrait pour recouvrement est I1 + I2 + k. Dans le cas le moins favorable, l'adresse de début de l'extrait coïncide avec l'adresse +1 de la première donnée d'un groupe de données utilisé pour le calcul d'une donnée de signature numérique. Dans ce cas, l'adresse de début de l'extrait est n-I1-(k-1) (avec n multiple de k) et la taille minimale de l'extrait pour recouvrement vaut I1 + I2 + k + (k-1).

Dans tous les cas, la condition de recouvrement d'un groupe de données utilisé pour le calcul d'une seule donnée de signature numérique est satisfaite si la taille de l'extrait à trouver est supérieure ou égale à (I1 + I2 + 2k -1). Réciproquement, si la taille d'extrait à trouver est égale à (I1 + I2 + 2k -1), l'extrait recouvre bien un groupe de données utilisé pour le calcul d'une donnée unique de signature numérique.

On peut étendre le raisonnement au cas du recouvrement d'un groupe de données utilisé pour le calcul d'un extrait de données de signatures numériques de taille TES. Dans le cas le plus favorable, l'adresse de début de l'extrait coïncide avec l'adresse de la première donnée d'un groupe de données utilisé pour le calcul de TES données consécutives de signature numérique. Si l'adresse de début de l'extrait vaut n - I1 (avec n multiple de k), la taille minimale de l'extrait pour recouvrement vaut I1 + I2 + k.TES.

Dans le cas le moins favorable où l'adresse de début de l'extrait coïncide avec l'adresse +1 de la première donnée d'un groupe de données utilisé pour le calcul de TES données de signature numérique, l'adresse de début de l'extrait vaut n - I1 - (k-1) (avec n multiple de k) et la taille minimale de l'extrait pour recouvrement = I1 + I2 + k.TES + (k-1).

Dans tous les cas, la condition de recouvrement d'un groupe de données utilisé pour le calcul de TES données consécutives de signature numérique est satisfaite si la taille de l'extrait à trouver est supérieure ou égale à (I1 + I2 + k(TES+1) -1).

A partir des formules précédentes, on applique un raisonnement inverse pour déterminer les valeurs de rapport d'index k qui peuvent être utilisées pour rechercher un extrait commun de fichiers de taille TEF. On doit satisfaire aux relations suivantes :

$$TEF \geq I1 + I2 + k(TES + 1) -1 \,,$$

et

$$TES \geq 1$$

(qui est simplement la taille minimum d'extrait commun de signatures numériques)

La valeur minimale pour k est kmin = 2, sinon il n'y a bien sûr aucune amélioration à attendre sur la vitesse de recherche.

On en déduit enfin la valeur de taille minimale utilisable pour TEF

$$TEF\ mini = I1 + I2 + 2(TES + 1) -1$$

On notera que pour TES = 1, TEF mini = I1 + I2 + 3

La valeur maximale pour k s'obtient à rebours en prenant TES = 1, alors :

$$kmax = \text{partie entière de } [(TEF - I1 - I2 + 1) / 2]$$

Pour toute valeur de k comprise entre kmin et kmax, on déduit la taille de l'extrait commun de signature TES qui conditionnera la détection d'un extrait commun possible aux fichiers de taille TEF :

$$TES \leq \text{partie entière de } [(TEF - I1 - I2 + 1) / k] - 1$$

Les formules peuvent être adaptées au cas particulier des filtres numériques *«par défaut»* ajustés pour un rapport d'index k, comme on l'a vu précédemment. Il suffit alors de remplacer Il par (intervref x k)/2 et I2 par I1 -1. On obtient la relation suivante entre TEF, TES, k et intervref :

$$TEF \geq k(intervref + TES + 1) - 2$$

La valeur de taille minimale utilisable pour TEF est obtenue pour k = 2 et TES = 1 et l'on déduit TEF mini = 2. intervref + 2

Pour TEF fixe, on déduit la plage de valeurs licites pour le rapport d'index k :

$$kmin = 2 \leq k \leq kmax = \text{partie entière}[(TEF + 2) / (intervref + 2)]$$

Pour toute valeur de k comprise entre kmin et kmax, on déduit la taille de l'extrait commun de signature TES qui conditionnera la détection d'un extrait commun possible aux fichiers de taille TEF :

$$TES \leq \text{partie entière de } [(TEF + 2) / k] - (intervref + 1)$$

Ainsi, la détection d'un extrait commun de fichiers de taille TEF peut être obtenue par comparaison de signatures numériques en utilisant différentes valeurs de rapport d'index k. Pour une valeur déterminée TEF, on déduit une plage de valeurs utilisables pour k : de kmin à kmax. Pour chaque valeur utilisable de k, on détermine ensuite une valeur TES de taille maximale d'extrait commun de signatures numériques qui garantisse la détection d'un extrait commun de fichiers de taille TEF.

On va maintenant examiner comment choisir la valeur de k (dans la plage licite kmin, kmax) pour avoir la vitesse de recherche la plus rapide.

Comme indiqué précédemment, pour l'application à un moteur de recherche plein texte, la recherche se fait en deux passes :

- la recherche d'extraits communs de signatures numériques de taille supérieure ou égale à TES, et
- pour chaque extrait commun de signatures numériques trouvé, la recherche ciblée d'extraits communs de fichiers de taille TEF parmi le jeu de couples de positions de début d'extraits de fichiers en relation avec le couple de positions de début de l'extrait commun de signatures numériques.

Pour l'évaluation du nombre d'opérations de comparaison à effectuer pour les deux passes de recherche, on retient dans une première approche les hypothèses simplificatrices suivantes :

- les probabilités de tirage des données de fichiers sont indépendantes ;
- par ailleurs, les probabilités de tirage des données de signatures numériques sont indépendantes.

La probabilité de tirage d'un extrait commun de fichiers de taille 1 est notée PF. La probabilité de tirage d'un extrait commun de fichiers de taille 2 est notée PF2. Enfin, la probabilité de tirage d'un extrait commun de fichiers de taille TEF est PFTEF.

Ensuite, la probabilité de tirage d'un extrait commun de signatures numériques de taille 1 est notée PS. La probabilité de tirage d'un extrait commun de signatures numériques de taille 2 est PS2. La probabilité de tirage d'un extrait de taille TES est PSTES.

On adopte par ailleurs les notations suivantes :

TF1 : Taille du premier fichier à comparer
TF2 : Taille du second fichier à comparer avec le premier fichier
TS1 : Taille de la signature numérique associée au premier fichier
TS2 : Taille de la signature numérique associée au second fichier

On évalue d'abord le nombre Total1 de comparaisons à effectuer pour la première étape de recherche «*grossière*» d'extraits communs de signatures numériques de taille supérieure ou égale à TES. Le nombre de couples possibles de positions de début d'extrait commun de signatures numériques est égal à TS1 x TS2. Pour une valeur de rapport d'index k, les tailles TS1 et TS2 se-déduisent des tailles TF1 et TF2 par les relations :

$$TS1 = TF1 / k \text{ et } TS2 = TF2 / k$$

Pour chaque couple possible de positions de début d'extrait commun de signatures numériques, on compare des premières données d'extrait. En cas de corrélation, la comparaison se poursuit avec les deuxièmes données d'extrait, et ainsi de suite jusqu'à atteindre la taille d'extrait demandée TES.
Pour chaque test, le nombre moyen d'opérations de comparaison s'obtient à partir de la probabilité de tirage PS, avec :

Pour le test des premières données d'extrait : 1 opération,
Pour le test des deuxièmes données d'extrait : PS opérations,
Pour le test des TESièmes données d'extrait : $PS^{TES-1}$ opérations.

Au total, on obtient donc $1 + PS + .... + PS^{TES-1}$, soit $(1 - PS^{TES}) / (1 - PS)$ opérations. La valeur de Total 1 s'en déduit par multiplication par (TS1 x TS2), soit :

$$Total1 = (TF1 \text{ x } TF2) \text{ x } (1 - PS^{TES}) / (k^2 \text{ x } (1 - PS))$$

On évalue maintenant le nombre Total2 de comparaisons à effectuer pour la seconde étape de recherche «*ciblée*» d'extraits communs de fichiers de taille TEF parmi le jeu de couples de positions de début d'extraits de fichiers en relation avec les extraits communs de signatures numériques trouvés à la précédente étape de recherche grossière. Pour un extrait commun de signatures numériques repéré par un couple d'adresses de début (n1, n2), les adresses de début à tester sur le premier fichier sont comprises entre (k.nl +l2+k.TES - TEF) et (k.n1 - l1), soit au total, Na = (TEF - l1 - l2 - k.TES + 1) adresses possibles (figures 16A et 16B).
La valeur de TEF peut être par ailleurs encadrée par la relation suivante quand on utilise la plus grande valeur possible pour k :

$$I1 + I2 + k(TES + 1) - 1 \leq TEF < I1 + I2 + k(TES + 2) - 1$$

On en déduit que $k \leq Na < 2k$.
Le même raisonnement s'applique aux adresses de début à tester sur le deuxième fichier en substituant n2 à n1.
Il y a donc au total $Na^2$ couples de positions de début d'extraits communs de fichiers à évaluer. Le nombre moyen de comparaisons à effectuer pour rechercher un extrait commun de fichiers de taille TEF s'obtient à partir de la probabilité de tirage PS mais en appliquant un raisonnement analogue à celui de l'étape de recherche grossière :

$$Na^2 \text{ x } (1 - PF^{TEF}) / (1 - PF)$$

Le nombre moyen d'extraits communs de signatures numériques trouvés à la première étape s'obtient à partir de la probabilité de tirage PS et des tailles des signatures TS1 et TS2 :

$$TS1 \text{ x } TS2 \text{ x } PS^{TES}$$

On remplace TS1 par TF1/k etTS2 par TF2/k et on obtient finalement Total2 par produit des dernières expressions:

$$\mathrm{Total2 = (TF1 \times TF2) \times (Na^2/k^2) \times PS^{TES} \times (1 - PF^{TEF}) / (1 - PF)}$$

On a déjà montré que $1 \leq Na/k < 2$. On en déduit les relations suivantes:

$$\mathrm{Total2 \geq (TF1 \times TF2) \times PS^{TES} \times (1 - PF^{TEF}) / (1 - PF)}$$

et

$$\mathrm{Total2 < 4x(TF1 \times TF2) \times PS^{TES} \times (1 - PF^{TEF}) / (1 - PF)}$$

On indique que le signe « x » signifie ici *« multiplié par ».*

Enfin, l'évaluation du nombre Total3 d'opérations de comparaison à effectuer pour les deux passes de recherche s'obtient par simple addition de Total1 et de Total2, soit :

$$\mathrm{Total3 = (TF1 \times TF2) \times (1 - PS^{TES}) / (k^2 \times (1 - PS))}$$
$$\mathrm{+ (TF1 \times TF2) \times (Na/k)^2 \times PS^{TES} \times (1 - PF^{TEF}) / (1 - PF)}$$

Pour les grandes valeurs de TEF et TES, la relation peut être approchée par :

$$\mathrm{Total3 = (TF1 \times TF2) \times [\ (1 / (k^2 \times (1 - PS))) + ((Na/k)^2 \times PS^{TES} / (1 - PF))\ ]}$$

Le nombre total de comparaisons à effectuer avec l'algorithme de recherche de référence est proche de TF1 xTF2. Le rapport entre ce dernier nombre et Total3 donne une estimation du gain de vitesse de recherche obtenu par utilisation de l'algorithme au sens de l'invention :

$$\mathrm{Gain = 1/ [\ (1 / (k^2 \times (1 - PS))) + ((Na/k)^2 \times PS^{TES} / (1 - PF))\ ]}$$

Quand le second terme de la somme est inférieur au terme en $1/k^2$, on notera que l'on obtient un gain supérieur à $k^2/2(1 - PS)$.

On indique incidemment que, toutefois, pour obtenir le gain effectif de vitesse de recherche, il faut aussi déduire les temps propres au calcul des signatures numériques.

Comme on le verra en référence à la figure 17, l'étude des variations de la fonction Total3 en fonction du rapport d'index k montre que :

- le premier terme de la somme en $1/k^2$ décroît très rapidement quand k augmente,
- le deuxième terme de la somme en $PS^{TES(k)}$, croit quand k augmente, car la valeur de TES(k) décroît quand k augmente.

On rappelle que dans le cas général, TES = partie entière de [(TEF - l1 - l2 + 1) / k] -1

Dans le cas des filtres numériques à valeur moyenne optimisés,

$$\mathrm{TES = partie\ entière\ de\ [(TEF + 2) / k] - (intervref + 1)}$$

Il apparaît que la valeur de k à utiliser pour obtenir la valeur minimum de cette fonction ne peut pas être déterminée par une relation mathématique simple. Toutefois, comme le jeu des valeurs possibles de k est réduit, on détermine la valeur optimale de k de manière empirique. Pour chaque valeur possible de k (entre kmin et kmax), on calcule la valeur de Total3 en fonction de k et l'on retient la valeur de k qui produit la plus petite valeur de Total3. Toutefois, l'évaluation du nombre d'opérations de comparaison à effectuer est plus précise si l'on corrige aussi le modèle utilisé pour le calcul des probabilités de tirage d'extraits communs de signatures numériques. En effet, les probabilités de tirage des données de signatures numériques ne sont pas indépendantes entre elles, car il y a un recouvrement important entre la plage des données de fichier qui sont utilisées pour le calcul d'une donnée de signature numérique d'adresse (n/k) et celle des données de fichier qui sont utilisées pour le calcul de la donnée suivante de signature numérique d'adresse (n/k)+1.

Dans le cas général d'un filtre numérique passe-bas à (I1 + I2 + 1) coefficients, les états flous pris par les données de signature numérique d'adresses (n/k) et ((n/k) + j) seront indépendants s'il n'y a pas de recouvrement entre les plages de données de fichier qui sont utilisées pour leur détermination. Cette condition est satisfaite si (n + I2 + k - 1) < (n + k.j - I1 - k + 1), soit si : j > (I1 + I2 + 2k - 2) / k

Dans le cas particulier des filtres numériques par défaut ajustés pour un rapport d'index k, on substitue simplement (k x intervref -1) à (I1 + I2) dans l'équation précédente. La condition d'indépendance est alors satisfaite si j > (intervref + 2) - 3/k, autrement dit, si l'écart d'adresses entre les données de signatures numériques vaut au moins (intervref +2).

Pour tenir compte de la dépendance des états flous pris par des données consécutives de signature numérique, le modèle de probabilités est modifié comme indiqué ci-après.

La probabilité de tirage d'un extrait commun de signatures numériques de taille 1, indépendant est notée PSI. La probabilité de tirage d'un extrait commun de signatures numériques de taille 2 est égale à la probabilité de tirage PSI d'un extrait de taille 1, multipliée par la probabilité de tirage conditionnelle PSD (D pour dépendant) d'un autre extrait de taille 1 consécutif à un extrait préalablement trouvé de taille 1. Cette probabilité de tirage devient alors PSI x PSD. La probabilité de tirage d'un extrait commun de signatures numériques de taille 3 devient PSI x PSD$^2$. Finalement, la probabilité de tirage d'un extrait de taille TES devient PSI x PSD$^{(TES-1)}$.

On démontre la relation suivante entre PSI et PSD: PSD$^{(intervref+2)}$ < PSI

A partir de ce nouveau modèle de probabilités, on réévalue les formules de calcul des nombres Total 1 et Total2 :

$$Total1 = [(TF1 \times TF2) / k^2] \times [1 + (PSI \times (1 - PSD^{(TES-1)}) / (1 - PSD))]$$

$$Total2 = (TF1 \times TF2) \times (Na/k)^2 \times PSI \times PSD^{(TES-1)} \times (1 - PF^{TEF}) / (1 - PF)$$

Pour des valeurs élevées de TEF et TES, les formules peuvent être approchées comme suit :

$$Total1 = [(TF1 \times TF2) / k^2] \times [1 + (PSI / (1 - PSD))]$$

$$Total2 = (TF1 \times TF2) \times (Na/k)^2 \times PSI \times PSD^{(TES-1)} / (1 - PF)$$

$$\text{Et } Total3 = (TF1 \times TF2) \times [ (1 + (PSI / (1 - PSD)) / k^2 + ((Na/k)^2 \times PSI \times PSD^{(TES-1)}) / (1 - PF) ]$$

Dans une réalisation préférée, les valeurs de PSI et PSD sont déterminées à l'avance par analyse statistique des résultats de comparaisons entre signatures numériques obtenues avec des fichiers de grande taille. A cet effet, un programme spécifique d'analyse statistique étalonne les valeurs à utiliser pour PSI et PSD.

Pour le jeu de 4 filtres numériques par défaut (figure 15) ajustés pour un rapport d'index k, les valeurs relevées pour PSI et PSD varient peu en fonction de k. La réalisation utilise les valeurs arrondies suivantes : PSI = 0,4 et PSD = 0,6

On a représenté sur la figure 17 les variations de Total1, Total2 et Total3 en fonction de k avec le jeu de filtres numériques par défaut et pour une valeur de taille minimale d'extraits communs de fichiers à trouver égale à 1000 et des tailles de fichiers à comparer de 100 kilooctets.

On décrit maintenant l'amélioration de la sélectivité de la recherche d'extraits communs de signatures numériques, toujours pour un moteur de recherche plein texte.

Dans le cas simple où les données de signatures numériques ne porteraient chacune qu'un seul état de logique flou, on peut déduire des probabilités de tirage des états « 0 », « 1 » et « ? » la probabilité PSI de détection d'un extrait commun de signatures numériques de taille 1.

On note P0 la probabilité de tirage de l'état 0, P1 celle de l'état 1 et P? celle de l'état ?.

Pour un couple donné de positions de début d'extraits de signatures numériques à évaluer, les conditions de détection d'un extrait commun de signatures numériques de taille 1 sont les suivantes:

- si l'état de la donnée de signature numérique associée au premier fichier vaut 0, il faut que l'état de la donnée de signature numérique associée au second fichier soit égal à 0 ou à ?,
- si l'état de la donnée de signature numérique associée au premier fichier vaut 1, il faut que l'état de la donnée de signature numérique associée au second fichier soit égal à 1 ou à ?,
- si l'état de la donnée de signature numérique associée au premier fichier vaut ?, l'état de la donnée de signature numérique associée au second fichier peut prendre la valeur quelconque 0, 1 ou ?

Pour un couple donné de positions de début d'extraits de signatures numériques à évaluer, les probabilités de détection d'un extrait commun de signatures numériques de taille 1 se déterminent comme suit pour chaque situation précédemment présentée :

- l'état de la donnée de signature numérique associée au premier fichier vaut 0 et l'état de la donnée de signature numérique associée au second fichier vaut 0 ou ? (Probabilité = P0 x (P0 + P?))
- l'état de la donnée de signature numérique associée au premier fichier vaut 1 et l'état de la donnée de signature numérique associée au second fichier vaut 1 ou ? (Probabilité = P1 x (P1 + P?))
- l'état de la donnée de signature numérique associée au premier fichier vaut ? et l'état de la donnée de signature numérique associée au second fichier prend une valeur quelconque (Probabilité = P? x 1 = P?)

La probabilité de détection PSI s'obtient par addition des probabilités de chaque situation :

$$\text{PSI} = \text{P0 x (P0 + P?)} + \text{P1 x (P1 + P?)} + \text{P?}$$

La formule de détermination de PSI peut encore se simplifier en remplaçant (P0 + P?) par (1 - P1), (P1 + P?) par (1 - P0), et (P0 + P1 + P?) par1, et :

$$\text{PSI} \quad = \quad \text{P0 x (1 - P1)} + \text{P1 x (1 - P0)} + \text{P?} \quad = 1 - 2 \text{ x P0 x P1}$$

La valeur maximale de PSI vaut 1. Elle est obtenue pour P0 = 0 ou P1 = 0. Cette situation est à proscrire, car, dans ce cas, la recherche d'extraits communs de signatures numériques n'a aucune sélectivité.
La valeur minimale de PSI vaut 1/2. Elle est obtenue pour P? = 0 et P0 = P1 = 1/2. Cette situation est idéale et peut être approchée si l'on utilise un filtre numérique ajusté par défaut avec des valeurs élevées pour les paramètres intervref et interv, comme on l'a vu précédemment.
Pour les filtres numériques à valeur moyenne, la valeur de PSI est obtenue de manière statistique par l'analyse de la comparaison entre elles de signatures numériques de grande taille. On a montré que l'application d'un filtre idéal de coupure Fe/2(k-1) se traduit par des probabilités P0 = P1 = 1/4 et P? = 1/2. Il en résulte que PSI= 7/8
On utilise donc des filtres numériques plus sélectifs de sorte que PSI < 7/8, dans une réalisation préférentielle.
Dans le cas général où les données de signatures numériques portent chacune 4 états de logique floue (état supplémentaire « X » (interdit)), on évalue à partir des résultats précédents la probabilité PSI de détection d'un extrait commun de signatures numériques de taille 1. On note PSI1, la probabilité de détection d'un extrait commun de signatures numériques de taille 1 en ne s'appuyant que sur une comparaison des états pris par la première loi de détermination d'états flous. On note PS2, PS3 et PS4, les probabilités de détection analogues associées aux lois suivantes de détermination d'états flous (loi 1, loi 2, loi 3 et loi 4). Si les lois sont indépendantes entre elles, PSI = PSI1xPSI2xPSI3xPSI4. Dans la pratique, il y a une dépendance entre les lois et la valeur de PSI obtenue par analyse statistique est supérieure au produit précédent.
Ainsi, la détermination de chaque état flou d'une signature numérique est effectuée par un calcul préalable d'un jeu de k états binaires consécutifs. Dans le cas d'une recherche d'extraits communs de fichiers, on remarquera que la détection d'un extrait commun possible entre les fichiers sera toujours garantie si :

- chaque donnée de signature numérique d'adresse (n1/k) associée au premier fichier est déterminée par comparaison entre eux de k états binaires consécutifs d'adresses n1, n1+1, ..., n1+k-1, et
- chaque donnée de signature numérique d'adresse (n2/k) associée au second fichier est déterminée par simple recopie de l'état binaire calculé pour d'adresse n2.

On indique en effet que, dans une réalisation préférée, on compare entre elles, en fait, une signature numérique portant des états flous (0, 1 ou ?) (premier fichier) à une signature numérique ne portant que des états binaires (0 ou 1) (second fichier). On montre ci-après que l'on améliore ainsi la sélectivité de la recherche, car on diminue simplement les probabilités de détection d'extraits communs aux signatures numériques.

Pour un couple donné de positions de début d'extraits de signatures numériques à évaluer, les conditions de détection d'un extrait commun de signatures numériques de taille 1 sont les suivantes :

- si l'état de la donnée de signature numérique associée au premier fichier vaut 0, il faut que l'état de la donnée de signature numérique associée au second fichier soit égal à 0,
- si l'état de la donnée de signature numérique associée au premier fichier vaut 1, il faut que l'état de la donnée de signature numérique associée au second fichier soit égal à 1,
- si l'état de la donnée de signature numérique associée au premier fichier vaut ?, l'état de la donnée de signature numérique associée au second fichier prend une valeur quelconque 0 ou 1.

On prend pour notation P0' et P1' les probabilités de tirage des états binaires portés par les données de signature numérique associées au deuxième fichier. On a les relations suivantes:

$$P0' + P1' = 1$$

$$P0 \leq P0' \leq P0 + P?$$

$$P1 \leq P1' \leq P1 + P?$$

Pour un couple donné de positions de début d'extraits de signatures numériques à évaluer, les probabilités de détection d'un extrait commun de signatures numériques de taille 1 se déterminent alors comme suit pour chaque situation précédemment présentée:

- l'état de la donnée de signature numérique associée au premier fichier vaut 0 et l'état de la donnée de signature numérique associée au second fichier vaut 0 (Probabilité = P0 x P0'),
- l'état de la donnée de signature numérique associée au premier fichier vaut 1 et l'état de la donnée de signature numérique associée au second fichier vaut 1 (Probabilité = P1 x P1'),
- l'état de la donnée de signature numérique associée au premier fichier vaut ? et l'état de la donnée de signature numérique associée au second fichier prend n'importe quelle valeur (Probabilité = P? x 1 = P?).

La probabilité de détection PSI' s'obtient par addition des probabilités de chaque situation :

$$
\begin{aligned}
PSI' \quad &= \quad P0xP0' + P1xP1' + P? \\
&\leq \quad P0x(P0 + P?) + P1x(P1 + P?) + P? \\
&\leq \quad PSI
\end{aligned}
$$

La relation PSI' ≤ PSI implique donc une amélioration de la sélectivité de la recherche en procédant à la comparaison entre une signature portant des états flous et une signature ne portant que des états binaires.

On remarquera que pour un extrait commun de signatures numériques repéré par un couple d'adresses de début (n1, n2), les adresses de début à tester sur les fichiers doivent tenir compte de l'utilisation d'une signature numérique binaire pour la recherche. Dans le cas où la signature numérique floue est calculée à partir du premier fichier, les adresses de début à tester sont comprises entre (kxn1 + I2 + kxTES - TEF) et (kxn1 - I1), soit au total :

$$Naf = (TEF - I1 - I2 - kxTES + 1) \text{ adresses possibles.}$$

Dans le cas où la signature numérique binaire est calculée à partir du deuxième fichier, les adresses de début à tester sont comprises entre :

$$(kxn2 + I2 + kx(TES - 1) - (TEF - 1)) \text{ et } (kxn2 - I1),$$

soit au total :

$$Nab = (TEF - I1 - I2 - kx(TES - 1)) \text{ adresses possibles.}$$

Pour un filtre numérique par défaut avec paramètre intervref, on obtient :

$$Naf = TEF - kxintervref - kxTES + 2$$

$$Nab = TEF - kxintervref - kx(TES - 1) + 1$$

On décrit ci-après un étalonnage des lois de probabilités associées aux filtres numériques. On a relevé sur le tableau ci-après les probabilités PSI et PSD de filtres numériques à valeur moyenne obtenus par la comparaison de deux fichiers texte de grande taille (300 kilooctets).

| Variations de PSI et PSD en fonction de interv pour k=30 et intervref=14 | | | | | | | | | |
|---|---|---|---|---|---|---|---|---|---|
| interv | 1 | 2 | 3 | 4 | 5 | 6 | 7 | Cumul2357 | Produit2357 |
| PSI | | 0,773486 | 0,736862 | 0,721675 | 0,71152 | 0,707414 | 0,709985 | 0,430022 | 0,28792163 |
| PSD | | 0,791133 | 0,785281 | 0,788749 | 0,78712 | 0,782896 | 0,784331 | 0,561866 | 0,38354132 |
| Var ations de PSI et PSD en fonction de Interv pour k=23 et intervref=30 | | | | | | | | | |
| interv | 1 | 2 | 3 | 4 | 5 | 6 | 7 | Cumul2357 | Produit2357 |
| PSI | | 0,750849 | 0,711247 | 0,68624 | 0,67309 | 0,660956 | 0,652175 | 0,394079 | 0,23442846 |
| PSD | | 0,77943 | 0,781081 | 0,784095 | 0,79249 | 0,792396 | 0,796662 | 0,593634 | 0,38436208 |
| Var ations de PS. et PSD en fonction de interv pour k=30 et intervref=30 | | | | | | | | | |
| Interv | 1 | 2 | 3 | 4 | 5 | 6 | 7 | Cumul2357 | Produit2357 |
| PSI | | 0,759058 | 0,714971 | 0,690597 | 0,67417 | 0,660454 | 0,653617 | 0,400642 | 0,23914252 |
| PSD | | 0,787054 | 0,784398 | 0,788614 | 0,79325 | 0,794868 | 0,799158 | 0,604817 | 0,39136461 |
| Variations de PSI et PSD en fonction de k pour cumul2357 et intervref=14 | | | | | | | | | |
| k | 2 | 5 | 10 | 20 | 50 | 100 | 200 | 372 | 5880 |
| PSI | | 0,325587 | 0,382557 | 0,412087 | 0,44424 | 0,443922 | 0,428286 | 0,42322 | 0,413466 |
| PSD | | 0,473232 | 0,528938 | 0,546894 | 0,57964 | 0,590101 | 0,581612 | 0,583971 | 0,627414 |

On constate que :

- PSI est toujours inférieur à PSD,
- pour k fixe, PSI décroît légèrement quand interv augmente et PSD reste pratiquement constant,
- pour k fixe, PSI décroît légèrement quand intervref augmente.

Les probabilités relevées pour le cumul de 4 filtres (interv = 2, 3, 5 et 7) sont supérieures au produit des probabilités relevées pour individuellement pour chaque filtre. On comprendra donc qu'il y a dépendance entre elles des probabilités associées à chaque loi.

Pour s'approcher au mieux d'une situation d'indépendance des probabilités, on peut envisager de procéder comme suit pour adapter la réalisation des fonctions de calcul des signatures numériques :

- pour la loi 1, on détermine des valeurs prises par les échantillons $f_n$ par utilisation d'une loi de codage d'entiers sur les 8 bits de chaque donnée,
- pour la loi 2, on détermine ces valeurs mais après rotation des 8 bits par décalage de 2 bits,
- pour la loi 3, on détermine ces valeurs mais après rotation des 8 bits par décalage de 4 bits,

- pour la loi 4, on détermine ces valeurs mais après rotation des 8 bits par décalage de 6 bits.
- on utilise pour chaque loi un même couple de paramètres pour le filtre numérique à valeur moyenne, par exemple interv = 4 et intervref = 10.

Pour les valeurs élevées de TEF (et TES), le modèle mathématique d'estimation des nombres d'opérations de comparaison à effectuer pour la recherche donne de bons résultats sur la détermination automatique de valeur optimale de rapport d'index à utiliser.

Pour les valeurs faibles de TEF (et TES), le modèle mathématique d'estimation ne donne pas de bons résultats, car les traitements de recherche ne sont plus majoritairement alloués à des opérations de comparaison.

Pour chaque extrait commun de signatures numériques trouvé, un programme déclenche l'appel d'une fonction de recherche ciblée d'extrait commun de fichier sur une plage restreinte de couples d'adresses de début sur les fichiers. A chaque appel, la fonction procède à un certain nombre de tests de validité des paramètres d'appel et d'initialisation de variables locales. A chaque appel, cette fonction effectue une opération de lecture sur chaque fichier des données à comparer dont la vitesse dépend des performances du disque dur et du bus de l'ordinateur. Pour tenir compte de l'impact de ces temps de traitement supplémentaires, on utilise un modèle mathématique encore corrigé qui ajoute, à l'étape de recherche ciblée d'extraits communs de fichier, des nombres d'opérations de comparaison représentatifs des temps d'appel de la fonction de recherche ciblée et des temps de lecture des données à comparer. Typiquement, le nombre ajouté à Total2 est de la forme :

$$[((TF1 \times TF2) / k^2) \times PSI \times PSD^{(TES-1)}] \times [A + Bxk] \,,$$

où

A est une constante représentative des temps d'appel de la fonction de recherche ciblée, et
B est constante représentative des temps de lecture des données sur disque dur.

Les valeurs des paramètres A et B dépendent des caractéristiques de l'ordinateur utilisé pour l'exécution du programme et sont déterminées de manière empirique.

On décrit ci-après des résultats d'évaluation des performances avec comme ordinateur utilisé pour l'évaluation un processeur Pentium III à 1GHz, 128 Mo RAM, disque dur 20 Go (sous le système d'exploitation Windows 98®).

Les performances ont été relevées avec l'exécution d'un programme informatique de recherche plein texte développé spécifiquement en langage C++. Le programme propose au choix d'utiliser un algorithme « *classique* » ou un algorithme au sens de l'invention pour effectuer une recherche d'extraits communs à deux fichiers. Les temps d'exécution de l'algorithme au sens de l'invention intègrent également ceux de calcul des signatures numériques.

Afin d'éviter de fausser les mesures de performance, une attention particulière doit être portée sur le choix des fichiers utilisés pour effectuer les recherches. En effet, il s'est avéré au cours de tests que les fichiers de données associés à des logiciels courants tels que Word®, Excel®, PowerPoint®, ou autres ont des formats de stockage qui conduisent à l'existence de nombreuses plages de données consécutives initialisées à la même valeur 0 (0x00). Comme la taille de ces plages est de l'ordre de plusieurs centaines de données, le modèle de probabilité utilisé pour la réalisation du programme de recherche prototype est faussé. Des adaptations de ce modèle doivent être étudiée au cas par cas, comme par exemple la non prise en compte dans la fonction de recherche ciblée du couple valeurs de données (0,0) comme position de début d'extrait commun.

Le choix de type de fichier texte s'est porté plutôt sur des documents texte de grande taille au format HTML. La vitesse de recherche est exprimée en million d'opérations de comparaison par secondes (Méga ops/sec). Le premier fichier est de taille : 213275 octets et le second fichier de taille : 145041 octets. Le tableau ci-après montre les résultats obtenus.

| Taille minimale des extraits à trouver | 100 | 150 | 200 | 250 |
|---|---|---|---|---|
| Algorithme classique | | | | |
| Vitesse moyenne de recherche | 46,5 | 46,5 | 46,5 | 46,5 |
| Temps de recherche | 11m03.99s | 11m03.99s | 11m03.99s | 11m03.99s |
| Algorithme de l'invention | | | | |
| Vitesse moyenne de recherche | 116,50 | 205,18 | 299,05 | 391,07 |

(suite)

| Algorithme de l'invention | | | | |
|---|---|---|---|---|
| Temps de recherche | 04m25,180s | 02m30,500s | 01m43,200s | 01m18,870s |
| Facteur de gain | 2,51 | 4,41 | 6,43 | 8,41 |

| Taille minimale des extraits à trouver | 500 | 750 | 1000 | 1500 |
|---|---|---|---|---|
| **Algorithme classique** | | | | |
| Vitesse moyenne de recherche | 46,5 | 46,5 | 46,5 | 46,5 |
| Temps de recherche | 11m03.99s | 11m03.99s | 11m03.99s | 11 m03.99s |
| **Algorithme de l'invention** | | | | |
| Vitesse moyenne de recherche | 1305,38 | 3051,29 | 4931,66 | 9711,95 |
| Temps de recherche | 0m23,560s | 0m10,050s | 0m06,200s | 0m03,130s |
| Facteur de gain | 28,07 | 65,62 | 106,06 | 208,86 |

| Taille minimale des extraits à trouver | 2000 | 2500 | 5000 | 7500 |
|---|---|---|---|---|
| **Algorithme classique** | | | | |
| Vitesse moyenne de recherche | 46.5 | 46,5 | 46,5 | 46,5 |
| Temps de recherche | 11m03.99s | 11m03.99s | 11m03.99s | 11m03.99s |
| **Algorithme de l'invention** | | | | |
| Vitesse moyenne de recherche | 15740,09 | 21929,98 | 58334,07 | 101080,35 |
| Temps de recherche | 0m01,920s | 0m01,370s | 0m00,500s | 0m00,280s |
| Facteur de gain | 338,50 | 471,61 | 1254,50 | 2173,77 |

On décrit maintenant d'autres applications de recherche d'extraits communs probables. Dans certains domaines d'application, les critères de détection d'extraits communs de fichiers diffèrent de l'identité parfaite des extraits à trouver. C'est notamment le cas de fichiers de données représentatifs de la numérisation d'un signal, tels que par exemple des fichiers audio (avec une extension .wav par exemple).

On sait que la valeur des échantillons obtenus dépendra de la phase de l'horloge d'échantillonnage. On sait par ailleurs que le dispositif de numérisation introduit d'autres erreurs sur les valeurs des échantillons (bruit, gigue d'horloge, dynamique, ou autre).

Pour ces applications, le principe de l'algorithme de recherche au sens de l'invention peut être adapté pour se borner à la seule étape de recherche grossière entre fichiers. On peut donc résumer les étapes prévues comme suit :

- calcul d'une signature numérique par fichier à comparer,
- et comparaison des signatures numériques à la recherche d'extraits communs de signatures numériques.

On va montrer dans ce qui suit comment on peut se définir un critère de détection d'extrait commun à l'aide de probabilités.

On a montré précédemment, dans le cadre de l'optimisation de la valeur du rapport d'index, que le nombre d'opérations de comparaison pour effectuer la recherche entre signatures numériques est estimé à :

$$\text{Total1} = [(\text{TF1} \times \text{TF2}) / k^2] \times [1 + (\text{PSI} \times (1 - \text{PSD}^{(\text{TES-1})}) / (1 - \text{PSD}))]$$

On a également montré que la probabilité de tirage d'un extrait commun de signatures numériques vaut $\text{PSI} \times \text{PSD}^{(\text{TES-1})}$.

Le nombre probable d'extraits communs de taille minimale TEF qui sera trouvé par la comparaison entre eux de deux fichiers de tailles respectives TF1 et TF2 devient donc:

$$N = [ (TF1xTF2) / k^2 ] \text{ x } PSIxPSD^{(TES-1)},$$

avec

$$TES = \text{partie entière de } [(TEF - I1 - I2 + 1) / k] - 1$$

L'optimisation de la valeur de k dépend du compromis entre la vitesse de recherche (inversement proportionnelle à Total1) qui croit quand k augmente (on a donc intérêt à utiliser des valeurs élevées pour k) et le nombre N qui croit quand k augmente (on doit donc baisser la valeur de k si l'on veut limiter le nombre d'extraits communs probables détectés). L'optimisation de la valeur de k est faite en se fixant à l'avance une valeur cible Nc pour N et une valeur de taille minimale d'extrait à trouver TEF. A partir de ces paramètres, on évalue la valeur de N pour toutes les valeurs autorisées de k et on retient la valeur de k qui permet d'approcher au mieux la valeur Nc.

Cette méthode de recherche introduit une imprécision sur les positions de début des extraits communs probables trouvés. Dans le cas d'une recherche d'extraits communs entre une signature floue et une signature binaire (correspondant à un mode de réalisation préféré), l'imprécision sur la position de début de l'extrait commun probable de fichiers est de l'ordre de +k ou -k sur le fichier associé à la signature floue, et de l'ordre de +k ou -2k sur le fichier associé à la signature binaire.

La probabilité effective de détection d'un extrait commun de signatures numériques peut être approchée par une analyse des variations prises par les états de l'extrait sur la signature floue. Avantageusement, la réalisation préférée évalue une probabilité plafond en détectant le nombre transitions intervenant entre données à l'état 0 et à l'état 1, ce qui permet de filtrer du résultat de recherche les extraits communs dont la probabilité mesurée est supérieure à un seuil prédéfini, et ainsi d'éviter de mettre en défaut le modèle de probabilité statistique ($PSIxPSD^{(TES-1)}$) utilisé pour optimiser les paramètre de recherche.

Dans le cas des fichiers audio, la recherche d'extraits audio communs à deux fichiers d'enregistrement se résume donc comme suit. On commence par un calcul préalable de signatures numériques associées à chaque fichier. A l'issue de cette première étape, on peut assimiler un fichier de signature numérique comme étant une succession d'états logiques qui caractérisent des plages horaires consécutives de durée fixe du signal audio. Typiquement, si l'on choisit une durée de plage horaire d'une seconde pour chaque donnée de signature numérique, le traitement d'un fichier audio d'une heure se traduit par la création d'un fichier de signatures numériques de 3600 données (une par seconde). La première données de signature caractérise la première seconde d'enregistrement, la deuxième donnée la deuxième seconde, et ainsi de suite.

La recherche d'extraits audio communs s'effectue ensuite en comparant entre elles les données de signatures numériques qui ont été calculées à partir de chaque enregistrement audio. Tout extrait commun est caractérisé par un couple de groupes de N données consécutives de signatures numériques (le premier groupe de données de signatures étant associé au premier fichier audio et le deuxième groupe étant associé au deuxième fichier audio) et pour lesquels il y a une compatibilité entre les N états de logique flou consécutifs du premier groupe avec les N états de logique flou consécutifs de deuxième groupe.

L'adresse de la première donnée de signature numérique du premier groupe G1 permet de repérer la position horaire de début d'extrait commun dans le premier fichier audio. L'adresse de la première donnée de signature numérique du deuxième groupe G2 permet de repérer la position horaire de début d'extrait commun dans le second fichier audio. Le nombre N (de données consécutives trouvées en relation) permet de déduire la durée de l'extrait trouvé par simple multiplication avec la durée des plages horaires associées à chaque donnée de signature numérique.

Par exemple, dans l'hypothèse où l'on aurait calculé des signatures numériques sur un premier fichier audio 1 d'une heure et sur un second fichier audio2 d'une heure en se fixant une durée de plage horaire de 1 seconde par donnée de signature numérique, dans le cas où le résultat de la recherche donnerait un extrait commun de signatures numériques de 20 données consécutives repéré par l'adresse 100 sur la signature 1 et par l'adresse 620 sur la signature 2, ce résultat de recherche se traduirait par un extrait commun audio d'une durée de 20 secondes repéré par un horaire de début de 1 minute 40 secondes sur le fichier audio1 et par un horaire de début de 10 minutes 20 secondes sur le fichier audio2.

Contrairement à la recherche d'extraits à l'identique dans des fichiers texte, il n'y a pas d'autres étape dans le traitement qui permette de lever le doute sur l'identification des extraits qui sont relevés à l'étape de comparaison des signatures numériques. L'algorithme mathématique qui est utilisé pour le calcul des signatures numériques garantit que si il existe un extrait commun entre les deux fichiers audio, un extrait commun sera alors détecté entre les signatures numériques. Toutefois, la condition réciproque est fausse : il y a une possibilité de détecter des extraits communs de signatures numériques qui ne correspondent pas à des extraits communs audio.

Afin de disposer d'un indice de confiance sur les résultats de recherche, le traitement utilise un modèle de probabilité qui permet de calculer un taux d'erreur de fausses détections. Le modèle consiste à calculer la probabilité de mise en correspondance d'un groupe de N données consécutives de signatures numériques représentatif d'un extrait audio avec un autre groupe de N données consécutives de signatures numériques dont les valeurs sont aléatoires et représentative d'un signal audio aléatoire.

La probabilité P(N) de détection d'un extrait commun de N données de signatures numériques s'exprime alors sous une forme P exp(N), P étant la probabilité de tirage d'un extrait commun de taille 1. Dans la pratique, et compte tenu de l'emploi simultané de plusieurs états de logique flou, P est inférieure à 1/2 et on majore donc P(N) par 1/2 exp(N). Sachant que l'on peut approximer $2^{10}$ par $10^3$, on déduit facilement la probabilité de fausse détection d'un extrait commun de N données: $P(10) < 10^{-3}$, $P(20) < 10^{-6}$, ....

Pour évaluer le nombre probable de fausses détections qui sera associé à la comparaison de deux fichiers audio, il faut multiplier cette valeur P(N) par le nombre total de couples de positions de début d'extraits de signatures numériques qui est testé lors de l'étape de comparaison des signatures numériques. Si l'on prend S1 comme notation du nombre de données de signatures numériques du fichier audio1 et S2 pour le fichier audio2, le nombre probable de fausses détections devient P(N) x S1 x S2.

Comme indiqué plus haut, ce nombre est divisé par 2 , chaque fois que l'on augmente de 1 la taille des extraits communs de signatures numériques recherchés (et divisé par 1000 si l'on augmente la taille de 10).

Pour affiner l'algorithme de détection d'extraits musicaux, on a ajusté la taille minimale d'extrait commun de signatures à 50 données ce qui garantit une probabilité de fausse détection inférieure à $10^{-15}$. Ce choix tient compte du caractère non aléatoire des signaux audio traités, qui dans le cas de la musique comportent de nombreuses plages répétitives (refrains, et autres). Cette taille peut bien sûr être adaptée au besoin d'autres applications, soit pour augmenter, soit pour diminuer le taux d'erreur acceptable.

A partir cette taille minimale d'extrait, le programme détermine à rebours la durée minimale des extraits à rechercher en fonction de la valeur de durée associée à chaque donnée de signature (l'inverse de la fréquence des données de signatures).

Pour une fréquence de signature numérique de 25 Hz (25 données par secondes), le programme permet de rechercher des extraits audio d'une durée minimale de 2 secondes (50 x 1/25s). Pour une fréquence de signature numérique de 5 Hz (5 données par secondes), le programme permet de rechercher des extraits audio d'une durée minimale de 10 secondes (50 x 1/5s). Pour une fréquence de signature numérique de 1 Hz (1 donnée par secondes), le programme permet de rechercher des extraits audio d'une durée minimale de 50 secondes.

Dans la pratique, c'est l'application qui fixe la valeur seuil de durée minimale d'extrait audio à rechercher. Pour des applications de piges publicitaires, le besoin est de détecter des extraits de spots de télévision ou de radio de l'ordre de 5 s. Pour des applications de reconnaissance de titres musicaux, le besoin est de détecter des extraits de l'ordre 15 s. Pour des applications de reconnaissance de programmes de télévision (films, séries, etc), le besoin est de détecter des extraits de l'ordre de la minute.

On indique en outre que dans l'application à des fichiers audio, vidéo, ou autres, où les premier et second fichiers sont des fichiers d'échantillons de signaux numérisés, le procédé au sens de l'invention comporte avantageusement une étape de pré-traitement des données, par exemple par filtrage en sous-bandes, et une prise en compte des données associées à des portions de signal de niveau supérieur à une référence de bruit, pour limiter des effets d'égalisations différentes entre les premier et second fichiers.

En outre, le procédé prévoit avantageusement une étape de consolidation des résultats de recherche, préférentiellement par ajustement de tailles relatives des paquets des premier et second fichiers, de manière à tolérer un écart en vitesses de restitution respectives des premier et second fichiers.

Enfin, on indique que l'un au moins des premier et second fichiers peut être, dans cette application, un flux de données, et le procédé de recherche d'extraits communs est alors exécuté en temps réel.

Un programme spécifique, écrit en langage C++, a été développé pour effectuer la recherche d'extraits communs avec des micro-ordinateurs équipés d'un système d'exploitation Windows 32bits. Il propose de sélectionner deux fichiers à comparer, de définir la taille minimale des extraits communs à y trouver, puis de lancer la recherche.

Dès le lancement de la recherche, le programme affiche avantageusement une fenêtre de suivi d'exécution. Cette fenêtre indique le temps écoulé depuis de la début de la recherche et des estimations de la durée totale et de la vitesse de recherche. Elle permet également d'abandonner la recherche si il s'avère que sa durée est jugée trop longue. La recherche s'interrompt dès qu'un extrait commun a été trouvé. La taille de l'extrait trouvé et sa position dans chaque fichier sont alors affichés. Le programme effectue l'analyse des fichiers en suivant un ordre prédéfini. Le principe est de tester chaque couple de positions de début pouvant être pris par un extrait commun dans les fichiers.

Sa mise en oeuvre est décrite dans les présentations ci-après des algorithmes de recherche. On indique que la recherche peut être reprise pour trouver d'autres extraits communs aux fichiers. Dans ce cas, la recherche est reprise à partir du couple de positions de début du dernier extrait commun trouvé et en suivant l'ordre prédéfini d'analyse des fichiers. La recherche s'arrête quand les fichiers ont été entièrement analysés. Les conditions de l'arrêt sont alors affichées pour indiquer selon le cas qu'il n'y a pas d'extrait commun aux fichiers ou qu'il n'y a pas d'autre extrait commun aux fichiers. Le programme propose d'utiliser au choix deux algorithmes pour effectuer des recherches : un algorithme de recherche classique et un algorithme au sens de l'invention.

Le programme permet ainsi de comparer sur un même micro-ordinateur les performances des deux algorithmes, et ce, pour une configuration de recherche quelconque, en termes de taille minimale des extraits communs à rechercher, de taille des fichiers, de nature des fichiers, ou autres.

Le critère d'évaluation des performances est la rapidité d'exécution des algorithmes. Les fenêtres de suivi d'exécution permettent de récupérer les estimations telles que la durée d'exécution pour accomplir la recherche, la vitesse de recherche, et autres.

Il est apparu avec l'algorithme classique que la vitesse de recherche est pratiquement constante et ne dépend pas de la taille minimale des extraits communs à trouver. Elle s'exprime en nombre d'opérations de comparaison de données binaires (octets) par seconde qui sont effectuées par l'ordinateur. Sa valeur est toujours inférieure à la fréquence d'horloge du microprocesseur.

En revanche, avec l'algorithme au sens de l'invention, la vitesse de recherche varie en fonction de la taille minimale des extraits communs à trouver. Elle s'exprime par une estimation du nombre d'opérations de comparaison de données binaires (octets) par seconde qui seraient effectuées par l'ordinateur si l'algorithme classique était utilisé. Ainsi, plus la taille minimale des extraits communs à trouver augmente, plus la vitesse augmente. Sa valeur peut dépasser celle de la fréquence d'horloge du microprocesseur.

On a représenté sur la figure 19A une copie d'écran d'une boîte de dialogue dans le cadre d'une interface homme machine d'un programme informatique au sens de l'invention, pour une recherche, à l'identique, d'extraits communs entre deux fichiers textes. La figure 19B représente une copie d'écran indiquant l'évolution de la recherche définie sur la page d'écran de la figure 19A. On constatera que le temps pris par cette recherche est de deux secondes, alors que les tailles des fichiers étaient respectivement de 85390 octets et 213275 octets (figure 19A).

On a représenté sur la figure 19C une copie d'écran pour une recherche d'extraits communs entre deux fichiers audio, au format .WAV. Comme indiqué ci-avant, il s'agit préférentiellement d'une recherche qui n'est pas à l'identique, mais dont les paramètres (desquels découle en particulier l'indice de confiance décrit ci-avant) sont déterminés dans cette boîte de dialogue (partie supérieure de la figure 19C). Ici, on dispose d'un enregistrement d'une heure de radio (103,9 MHz en FM à Paris), d'une part, et une base de 244 enregistrements sonores (musique, spots publicitaires, etc), d'autre part. La recherche a détecté 83 extraits communs de la base dans l'enregistrement radio.

La figure 19D représente enfin une copie d'écran pour la création de fichier de signature numérique élaboré à partir d'un traitement en temps réel de signaux audio, correspondant à un enregistrement radio (105,5 MHz à Paris) de deux heures de durée, à une fréquence d'échantillonnage de 22,050 kHz. On indique que la précision de la signature (ici choisie à 5Hz, parmi un choix de 2, 5 ou 25Hz) correspond au nombre de données dans la signature numérique, par seconde de morceau de musique. Ce paramètre permet notamment d'affiner la précision de l'instant de début de détection d'extraits communs.

On a représenté sur la figure 18 le contexte d'une autre application de la présente invention, en particulier à la mise à jour à distance de l'un des premier et second fichiers par rapport à l'autre des premier et second fichiers. On prévoit à cet effet une installation informatique, comportant :

- une première entité informatique PC1 propre à stocker le premier fichier,
- une seconde entité informatique PC2 propre à stocker le second fichier, et
- des moyens de communications COM entre les première PC1 et seconde PC2 unités informatiques.

L'une des entités au moins (PC1 et/ou PC2) comporte une mémoire (respectivement MEM1 et/ou MEM2) propre à stocker le produit programme d'ordinateur tel que décrit ci-avant, pour la recherche d'extrait commun entre les premier et second fichiers.

A ce titre, la présente invention vise aussi une telle installation.

Ici, l'entité stockant ce produit programme d'ordinateur est alors capable d'effectuer une mise à jour à distance de l'un des premier et second fichiers par rapport à l'autre des premier et second fichiers, en comparant déjà les premier et second fichiers. Ainsi, l'une des entités peut avoir fait évoluer un fichier informatique par des nouvelles saisies de données ou autres modifications dans une certaine période (une semaine, un mois, ou autre). L'autre entité informatique, qui dans cette application, doit assurer le stockage et la mise à jour régulière des fichiers issus de la première entité, reçoit ces fichiers.

Plutôt que de transférer complètement les fichiers à mettre à jour de la première entité vers la deuxième entité, la première entité repère par le procédé au sens de l'invention les extraits de données qui sont communs entre deux versions d'un même fichier, la nouvelle version qui a été modifiée par ajout ou par suppression de données, et l'ancienne version qui a été préalablement transmise à l'autre entité et dont la première entité a conservé localement une sauvegarde. Cette comparaison au sens de l'invention permet de créer un fichier de différences entre la nouvelle version et l'ancienne version du fichier qui comporte des informations de position et de taille des extraits communs de données qui peuvent être utilisés pour reconstruire partiellement la nouvelle version du fichier à partir des données de l'ancienne version du fichier, et qui comporte les compléments de données qui doivent être utilisés pour achever la reconstruction de la nouvelle version de fichier. La mise à jour du fichier s'effectue ensuite en procédant par une transmission du fichier de différences vers la deuxième entité, puis en appliquant ensuite un traitement local à la deuxième entité de reconstruction de la nouvelle version du fichier par combinaison de l'ancienne version du fichier et dudit fichier de différences.

L'application du procédé au sens de l'invention permet de réduire considérablement les temps de traitement nécessaires à la génération dudit fichier de différences et permet de réduire le volume des données à transférer (et donc les coût et temps de transfert) pour effectuer la mise à jour à distance de fichiers informatiques volumineux n'ayant subi que peu de modifications, notamment lorsque de tels fichiers comportent des données comptables, bancaires ou autres.

Les entités informatiques peuvent se présenter sous la forme de tout dispositif informatique (ordinateur, serveur, ou autre) comportant une mémoire pour stocker (au moins momentanément) les premier et second fichiers, pour la recherche d'au moins un extrait commun entre le premier fichier et le second fichier. Ils sont alors équipés d'une mémoire stockant aussi les instructions d'un produit programme d'ordinateur du type décrit ci-avant.

A ce titre, la présente invention vise aussi un tel dispositif informatique.

Elle vise aussi un produit programme d'ordinateur, destiné à être stocké dans une mémoire d'une unité centrale d'un ordinateur tel que le dispositif informatique précité ou sur un support amovible destiné à coopérer avec un lecteur de cette unité centrale. Ce produit programme comporte des instructions pour dérouler tout ou partie des étapes du traitement au sens de l'invention décrit ci avant.

La présente invention vise aussi une structure de données destinées à être utilisées pour une recherche d'au moins un extrait commun entre un premier et un second fichier, la structure de données étant représentative du premier fichier, dès lors que cette structure de données est obtenue par l'application du traitement au sens de l'invention pour former une signature numérique. En particulier, cette structure de données est obtenue par la mise en oeuvre des étapes a) et b) du procédé énoncé ci-avant et comporte une succession d'adresses identifiant des adresses du premier fichier et à chacune desquelles est affecté un état en logique floue parmi les états : "vrai" (1), "faux" (0) et "indéterminé" (?).

## Revendications

1.    Procédé de recherche de contenu, mis en oeuvre par des moyens informatiques, dans lequel on recherche au moins un extrait commun entre un premier fichier et un second fichier, sous forme de données binaires, **caractérisé en ce qu'**il comporte une préparation préalable du premier fichier au moins, comprenant les étapes suivantes :

   a) segmenter le premier fichier en une succession de paquets de données, lesdits paquets étant de taille donnée, et identifier des adresses de paquets parmi ces paquets dans ledit fichier,
   b) associer à l'adresse de chaque paquet une signature numérique définissant un état en logique floue parmi au moins trois états : "vrai", "faux" et "indéterminé", ladite signature résultant d'un calcul combinatoire sur des données parmi les données issues dudit fichier,

   et **en ce que** le procédé se poursuit par une recherche d'extrait commun, proprement dite, comprenant les étapes suivantes :

   c) comparer les états de logique floue associés à chaque adresse de paquet du premier fichier, avec des états de logique floue déterminés à partir de données issues du second fichier,
   d) éliminer de ladite recherche d'extrait commun des couples d'adresses respectives des premier et second fichiers dont les états logiques respectifs sont "vrai" et "faux" ou "faux" et "vrai", et conserver les autres couples d'adresses identifiant des paquets de données susceptibles de comporter ledit extrait commun.

2.    Procédé selon la revendication 1, **caractérisé en ce que**, à l'étape b), on affecte à un paquet de données l'état :

   - "vrai" si toutes les données du paquet vérifient une première condition,
   - "faux" si toutes les données du paquet vérifient une seconde condition, contraire à la première condition,
   - et "indéterminé" si certaines données du paquet vérifient la première condition, tandis que d'autres données du paquet vérifient la seconde condition.

**3.** Procédé selon l'une des revendications 1 et 2, **caractérisé en ce que** l'on applique aux données d'un fichier un traitement préalable à l'étape b) et comportant les étapes suivantes :

a1) on considère les données du fichier en tant que suite d'échantillons obtenus à une fréquence d'échantillonnage prédéterminée (Fe), et de valeurs codées selon un code de représentation binaire, et

a2) on applique un filtre numérique sur lesdits échantillons ($f_n$), adapté pour minimiser une probabilité d'obtention de l'état "indéterminé" pour les signatures numériques associées aux paquets d'échantillons.

**4.** Procédé selon la revendication 3, **caractérisé en ce que** l'application dudit filtre numérique revient à :

- appliquer une transformée spectrale aux données échantillonnées,
- appliquer un filtre passe-bas à ladite transformée spectrale,
- et appliquer une transformée spectrale inverse après ledit filtre passe-bas.

**5.** Procédé selon la revendication 4, **caractérisé en ce que** le filtre passe-bas opère sur une bande de fréquences comprenant sensiblement l'intervalle :

$$[-Fe/2(k-1), +Fe/2(k-1)],$$

où Fe est ladite fréquence d'échantillonnage,
et k est le nombre d'échantillons que comporte un paquet.

**6.** Procédé selon l'une des revendications 4 et 5, **caractérisé en ce que** ledit filtre numérique comporte un nombre prédéterminé de coefficients de même valeur, et **en ce que** la réponse fréquentielle du filtre passe-bas associé s'exprime, en fonction de la fréquence f, par une expression du type :

$$sin(PI.f.T)/(PI.f.T),$$

où sin() est la fonction sinus, et avec :

- PI = 3,1416, et
- T=(K-1)/Fe où K est ledit nombre prédéterminé de coefficients et Fe ladite fréquence d'échantillonnage.

**7.** Procédé selon l'une des revendications 3 à 6, **caractérisé en ce que** ledit filtre numérique est un filtre à valeur moyenne d'un nombre prédéterminé (2K+1) de coefficients, et **en ce que** la différence entre deux échantillons filtrés successifs ($r_{n+1}-r_n$) est proportionnelle à la différence entre deux échantillons non filtrés ($f_{n+K+1}-f_{n-K}$), respectivement d'un premier rang et d'un second rang, espacés dudit nombre prédéterminé de coefficients, et **en ce que** le calcul desdits échantillons filtrés est effectué en exploitant cette relation pour réduire le nombre d'opérations de calcul à effectuer.

**8.** Procédé selon l'une des revendications 6 et 7, **caractérisé en ce que** ledit nombre prédéterminé de coefficients du filtre (2K+1) est supérieur ou égal à 2k-1, où k est le nombre d'échantillons que comporte un paquet.

**9.** Procédé selon l'une des revendications 3 à 8, prises en combinaison avec la revendication 2, **caractérisé en ce que** :

- l'état "vrai" est affecté à l'adresse d'un paquet si, pour ce paquet, tous les échantillons filtrés ont une valeur supérieure à une valeur de référence choisie (Vréf),
- l'état "faux" est affecté à l'adresse d'un paquet si, pour ce paquet, tous les échantillons filtrés ont une valeur inférieure à une valeur de référence choisie (Vréf), et
- l'état "indéterminé" est affecté à l'adresse d'un paquet si, pour ce paquet, les échantillons filtrés ont, pour certains, une valeur inférieure à ladite valeur de référence (Vréf), et, pour d'autres échantillons filtrés, une valeur supérieure à ladite valeur de référence (Vréf).

**10.** Procédé selon la revendication 9, **caractérisé en ce que**, pour tout échantillon filtré $r_n$, d'ordre donné n, ladite valeur de référence (Vréf) est calculée en moyennant les valeurs des échantillons non filtrés $f_k$, sur un nombre choisi d'échantillons consécutifs non filtrés (Kréf) autour d'un échantillon non filtré $f_n$, du même ordre donné n.

**11.** Procédé selon la revendication 10, **caractérisé en ce que** les valeurs des échantillons filtrés sont ramenées, pour comparaison, à une valeur seuil nulle,
et **en ce que** lesdits échantillons filtrés r'$_n$ s'expriment par une somme du type :

$$r'_n = K_{ref} \sum_{k=-(K/2)}^{(K/2)-1} f_{n+k} - K \sum_{k=-(K_{ref}/2)}^{(K_{ref}/2)-1} f_{n+k} \text{ , où :}$$

- $f_{n+k}$ sont des échantillons non filtrés obtenus à l'étape a1),
- K est le nombre de coefficients du filtre numérique, préférentiellement choisi pair, et
- K$_{ref}$ est ledit nombre d'échantillons non filtrés autour d'un échantillon non filtré $f_n$, préférentiellement choisi pair et supérieur audit nombre de coefficients K.

**12.** Procédé selon la revendication 11, **caractérisé en ce que** l'on applique ladite somme aux échantillons non filtrés f$_n$ une pluralité de fois, selon un traitement effectué en parallèle, en faisant varier respectivement le nombre de coefficients K.

**13.** Procédé selon l'une des revendications précédentes, **caractérisé en ce que** les états flous associés au premier fichier au moins sont codés chacun sur au moins deux bits.

**14.** Procédé selon la revendication 13, prise en combinaison avec la revendication 12, **caractérisé en ce que** les états flous déterminés pour un nombre de coefficients K le plus faible sont codés sur des bits de poids le plus faible et les états flous déterminés pour un nombre de coefficients K plus grand sont codés sur des bits suivants, jusqu'à un nombre total choisi de bits.

**15.** Procédé selon l'une des revendications 3 et 10, **caractérisé en ce que** chaque échantillon filtré r$_n$ s'exprime comme une somme du type :

$$r_n = \sum_{i=-I_1}^{I_2} filtre_i \times f_{(n+i)} \text{ ,}$$

où :

- f$_{(n+i)}$ sont des échantillons non filtrés,
- filtre$_i$ sont des coefficients d'un filtre numérique, intégrant, le cas échéant, une valeur seuil ramenée à zéro,

et **en ce que** l'on choisit un nombre k d'échantillons non filtrés que comporte un paquet, au minimum égal à 2 et inférieur ou égal à une expression du type :

$$(TEF-I_1-I_2+1)/2,$$

où TEF est une taille minimale souhaitée des extraits communs recherchés.

**16.** Procédé selon la revendication 15, **caractérisé en ce que** :

- pour une valeur donnée TEF de la taille minimale souhaitée d'extraits communs recherchés, on détermine une plage de valeurs utilisables pour ledit nombre k d'échantillons non filtrés que comporte un paquet,
- et, pour chaque valeur utilisable du nombre k, on détermine une taille optimale TES d'une succession de données de signatures numériques pour laquelle la détection d'un extrait commun de taille TEF est garantie,

et **en ce que** ladite taille optimale TES est inférieure ou égale à une expression du type : E[(TEF-I$_1$-I$_2$+1)/k]-1, où E(X) désigne la partie entière de X.

**17.** Procédé selon l'une des revendications précédentes, dans lequel les deux fichiers à comparer comportent des données représentatives de caractères alphanumériques, notamment du texte et/ou un code informatique ou génétique,
**caractérisé en ce que** le procédé comporte :

- un premier groupe d'étapes comportant la formation des signatures numériques et leur comparaison, pour une recherche grossière, et
- un second groupe d'étapes comportant une comparaison à l'identique dans les plages d'adresses vérifiant la comparaison grossière,

**en ce que** l'on considère les données d'un fichier en tant que suite d'échantillons, avec un nombre choisi k d'échantillons par paquet,
et **en ce que** la valeur de ce nombre choisi k est optimisée initialement en recherchant un minimum d'opérations de comparaison à effectuer.

18. Procédé selon la revendication 17, **caractérisé en ce que**, pour l'optimisation du nombre choisi k d'échantillons par paquet, on tient compte d'un nombre total :

- d'opérations de comparaison de signatures numériques à effectuer, et
- d'opérations de comparaison de données à l'identique à effectuer ensuite,

et **en ce que** ledit nombre total d'opérations est minimum pour un ensemble fini de nombres k.

19. Procédé selon l'une des revendications 17 et 18, **caractérisé en ce que** l'on obtient une information relative à une taille minimale souhaitée d'extraits communs recherchés (TEF), utilisée pour optimiser ledit nombre choisi k d'échantillons par paquet,
et **en ce que** le nombre optimal k d'échantillons par paquet varie sensiblement comme ladite taille minimale (TEF), de sorte que plus taille minimale souhaitée d'extraits communs recherchés est grande et plus la durée de la recherche d'extrait commun est courte.

20. Procédé selon l'une des revendications 1 à 16, **caractérisé en ce que** la recherche d'extraits communs consiste en un unique groupe d'étapes comportant la formation des signatures numériques et leur comparaison, et **en ce que** le nombre de données par paquet est optimisé en se fixant initialement un indice de confiance caractérisant un seuil acceptable de probabilité de fausse détection d'extraits communs.

21. Procédé selon l'une des revendications 3 à 20, **caractérisé en ce que**, pour le premier fichier :

- on applique l'échantillonnage à une fréquence d'échantillonnage choisie,
- le filtrage numérique correspondant à un filtrage passe-bas dans l'espace des fréquences, et
- la combinaison des échantillons filtrés pour obtenir des signatures numériques à l'état "vrai", "faux" ou "indéterminé", associées aux adresses respectives du premier fichier,

tandis que, pour le second fichier :

- on applique l'échantillonnage à une fréquence d'échantillonnage choisie,
- le filtrage numérique correspondant à un filtrage passe-bas dans l'espace des fréquences, et
- on détermine l'état logique associé à chaque paquet d'échantillons filtrés à partir de l'état logique associé à un seul échantillon filtré choisi dans chaque paquet,

de manière à obtenir des signatures numériques ne comportant que des état logiques "vrai" ou "faux" et ainsi à améliorer la sélectivité de la comparaison des signatures numériques.

22. Procédé selon la revendication 21, **caractérisé en ce que** :

- si l'état logique associé à une adresse du premier fichier est "vrai" ou "indéterminé", tandis que l'état logique associé à une adresse du second fichier est "vrai", le couple desdites adresses est retenu pour la recherche d'extrait commun,
- si l'état logique associé à une adresse du premier fichier est "faux" ou "indéterminé", tandis que l'état logique associé à une adresse du second fichier est "faux", le couple desdites adresses est retenu pour la recherche d'extrait commun,

tandis que les autres couples d'adresses sont exclus de la recherche.

**23.** Procédé selon la revendication 20, dans lequel les premier et second fichiers sont des fichiers d'échantillons de signaux numérisés, **caractérisé en ce que** le procédé comporte une étape de pré-traitement des données et une prise en compte des données associées à des portions de signal de niveau supérieur à une référence de bruit.

**24.** Procédé selon l'une des revendications 20 et 23, dans lequel les premier et second fichiers sont des fichiers d'échantillons de signaux numérisés, **caractérisé en ce que** le procédé prévoit une étape de consolidation des résultats de recherche, préférentiellement par ajustement de tailles relatives des paquets des premier et second fichiers, de manière à tolérer un écart en vitesses de restitution respectives des premier et second fichiers.

**25.** Procédé selon l'une des revendications précédentes, **caractérisé en ce que** l'un au moins des premier et second fichiers est un flux de données,
et **en ce que** le procédé de recherche d'extraits communs est exécuté en temps réel.

**26.** Produit programme d'ordinateur, destiné à être stocké dans une mémoire d'une unité centrale d'un ordinateur ou sur un support amovible destiné à coopérer avec un lecteur de ladite unité centrale, **caractérisé en ce qu'**il comporte des instructions pour dérouler tout ou partie des étapes du procédé selon l'une des revendications précédentes.

**27.** Structure de données destinées à être utilisées pour une recherche d'au moins un extrait commun entre un premier et un second fichier, la structure de données étant représentative du premier fichier, **caractérisée en ce qu'**elle est obtenue par la mise en oeuvre des étapes a) et b) du procédé selon l'une des revendications 1 à 25,
et **en ce qu'**elle comporte une succession d'adresses identifiant des adresses du premier fichier et à chacune desquelles est affecté un état en logique floue parmi les états : "vrai", "faux" et "indéterminé".

**28.** Dispositif informatique, comportant une mémoire pour stocker au moins des premier et second fichiers, pour la recherche d'au moins un extrait commun entre le premier fichier et le second fichier, **caractérisé en ce qu'**il comporte une mémoire propre à stocker les instructions d'un produit programme d'ordinateur selon la revendication 26.

**29.** Installation informatique, comportant :

- une première entité informatique propre à stocker un premier fichier,
- une seconde entité informatique propre à stocker un second fichier, et
- des moyens de communications entre les première et seconde unités informatiques,

**caractérisée en ce que** l'une des entités au moins comporte une mémoire propre à stocker le produit programme d'ordinateur selon la revendication 26, pour la recherche d'extrait commun entre les premier et second fichiers.

**30.** Installation selon la revendication 29, **caractérisé en ce que** l'entité stockant le produit programme d'ordinateur est agencée pour effectuer une mise à jour à distance de l'un des premier et second fichiers par rapport à l'autre des premier et second fichier.

**Patentansprüche**

**1.** Verfahren zum rechnergestützten Durchsuchen von Inhalten, bei dem mindestens ein gemeinsamer Auszug zwischen einer ersten Datei und einer zweiten Datei in Form von Binärdaten gesucht wird, **dadurch gekennzeichnet, dass** es eine vorangehende Vorbereitung zumindest der ersten Datei beinhaltet, umfassend die folgenden Schritte:

a) Segmentieren der ersten Datei in eine Folge von Datenpaketen, wobei die Pakete eine bestimmte Größe aufweisen, und Identifizieren der Paketadressen zu diesen Paketen in dieser Datei,
b) Zuordnen einer digitalen Signatur zu jeder Paketadresse, die einen Zustand unscharfer Logik unter mindestens drei Zuständen definiert: "wahr", "falsch" und "unbestimmt", wobei die Signatur aus einer kombinatorischen Berechnung von Daten unter den Daten aus dieser Datei resultiert,

und dass das Verfahren mit einer eigentlichen Suche nach einem gemeinsamen Auszug fortgesetzt wird, umfassend die folgenden Schritte:

c) Vergleichen der Zustände unscharfer Logik, die jeder Paketadresse der ersten Datei zugeordnet wurden, mit Zuständen unscharfer Logik, die ausgehend von den Daten aus der zweiten Datei ermittelt wurden,

d) Eliminieren der jeweiligen Adresspaare der ersten und zweiten Datei, deren jeweilige logische Zustände "wahr" und "falsch" oder "falsch" und "wahr" sind, aus dieser Suche nach einem gemeinsamen Auszug und Bewahren der anderen Adresspaare, die Datenpakete identifizieren, die wahrscheinlich den gemeinsamen Auszug enthalten.

2. Verfahren nach Anspruch 1, **dadurch gekennzeichnet, dass** in Schritt b) einem Datenpaket der Zustand wie folgt zugewiesen wird:

- "wahr", wenn alle Daten des Pakets eine erste Bedingung bestätigen,
- "falsch", wenn alle Daten des Pakets eine zweite Bedingung bestätigen, die der ersten Bedingung widerspricht,
- und "unbestimmt", wenn einige Daten des Pakets die erste Bedingung bestätigen, während andere Daten des Pakets die zweite Bedingung bestätigen.

3. Verfahren nach einem der Ansprüche 1 und 2, **dadurch gekennzeichnet, dass** vor Schritt b) eine Verarbeitung der Daten einer Datei ausgeführt wird, umfassend die folgenden Schritte:

a1) Betrachten der Daten der Datei als eine Folge von Abtastungen, die mit einer vorbestimmten Abtastfrequenz (Fe) erhalten wurden und Werte aufweisen, die nach einem binären Darstellungscode codiert sind, und

a2) Anwenden eines digitalen Filters auf die Abtastungen ($f_n$), der dazu ausgelegt ist, eine Wahrscheinlichkeit des Erhaltens des "unbestimmten" Zustands für die den Abtastpaketen zugeordneten digitalen Signaturen zu minimieren.

4. Verfahren nach Anspruch 3, **dadurch gekennzeichnet, dass** die Anwendung des digitalen Filters bedeutet:

- Anwenden einer Spektraltransformation auf die abgetasteten Daten,
- Anwenden eines Tiefpassfilters auf die Spektraltransformation,
- und Anwenden einer inversen Spektraltransformation nach dem Tiefpassfilter.

5. Verfahren nach Anspruch 4, **dadurch gekennzeichnet, dass** das Tiefpassfilter in einem Frequenzband arbeitet, das im Wesentlichen das folgende Intervall umfasst:

$$[-Fe/2(k-1), +Fe/2(k-1)],$$

wobei Fe die Abtastfrequenz darstellt,
und k die Anzahl der Abtastungen darstellt, die in einem Paket enthalten sind.

6. Verfahren nach einem der Ansprüche 4 und 5, **dadurch gekennzeichnet, dass** das digitale Filter eine vorbestimmte Anzahl von Koeffizienten des gleichen Wertes umfasst, und dass die Frequenzcharakteristik des zugeordneten Tiefpassfilters in Abhängigkeit von der Frequenz f ausgedrückt wird durch einen Ausdruck des Typs:

$$sin(PI.f.T)/(PI.f.T),$$

wobei sin() die Sinusfunktion ist, und mit:

- PI = 3,1416, und
- T=(K-1)/Fe, wobei K die vorbestimmte Anzahl von Koeffizienten und Fe die Abtastfrequenz ist.

7. Verfahren nach einem der Ansprüche 3 bis 6, **dadurch gekennzeichnet, dass** das digitale Filter ein Mittelwertfilter einer vorbestimmten Anzahl (2K+1) von Koeffizienten ist, und dass die Differenz zwischen zwei aufeinanderfolgenden gefilterten Abtastungen ($r_{n+1}-r_n$) proportional zu der Differenz zwischen zwei ungefilterten Abtastungen ($f_{n+K+1}-f_{n-K}$) ist, jeweils eines ersten Rangs und eines zweiten Rangs, die von der vorbestimmten Anzahl von Koeffizienten beabstandet sind, und dass die Berechnung der gefilterten Abtastungen unter Verwendung dieser Beziehung durchgeführt wird, um die Anzahl der durchzuführenden Berechnungsoperationen zu reduzieren.

8. Verfahren nach einem der Ansprüche 6 und 7, **dadurch gekennzeichnet, dass** die vorbestimmte Anzahl von Koeffizienten des Filters (2K+1) größer oder gleich 2k-1 ist, wobei k die Anzahl der Abtastungen darstellt, die in einem Paket enthalten sind.

9. Verfahren nach einem der Ansprüche 3 bis 8 in Kombination mit Anspruch 2, **dadurch gekennzeichnet, dass**:

   - der Zustand "wahr" der Adresse eines Pakets zugewiesen wird, wenn für dieses Paket alle gefilterten Abtastungen einen Wert aufweisen, der größer als ein ausgewählter Referenzwert (Vref) ist,
   - der Zustand "falsch" der Adresse eines Pakets zugewiesen wird, wenn für dieses Paket alle gefilterten Abtastungen einen Wert aufweisen, der kleiner als ein ausgewählter Referenzwert (Vref) ist, und
   - der Zustand "unbestimmt" der Adresse eines Pakets zugewiesen wird, wenn für dieses Paket einige gefilterte Abtastungen einen Wert aufweisen, der kleiner als der Referenzwert (Vref) ist, und andere gefilterte Abtastungen einen Wert aufweisen, der größer als der Referenzwert (Vref) ist.

10. Verfahren nach Anspruch 9, **dadurch gekennzeichnet, dass** für alle gefilterten Abtastungen $r_n$ einer vorgegebenen Reihenfolge der Referenzwert (Vref) berechnet wird, indem die Werte der ungefilterten Abtastungen $f_k$ für eine ausgewählte Anzahl von aufeinanderfolgenden ungefilterten Abtastungen (Kref) um einen ungefilterten Abtastwert $f_n$ der gleichen vorgegebenen Reihenfolge n gemittelt werden.

11. Verfahren nach Anspruch 10, **dadurch gekennzeichnet, dass** die Werte der gefilterten Abtastungen zum Vergleich auf einen Schwellenwert von Null herabgesetzt werden,
    und dass die gefilterten Abtastungen $r'_n$ ausgedrückt werden durch eine Summe des Typs:

$$r'_n = K_{ref} \sum_{k=-(K/2)}^{(K/2)-1} f_{n+k} - K \sum_{k=-(K_{ref}/2)}^{(K_{ref}/2)-1} f_{n+k}$$

   - $f_{n+k}$ sind ungefilterte Abtastungen, die in Schritt a1) erhalten wurden,
   - K ist die Anzahl der Koeffizienten des digitalen Filters, vorzugsweise geradzahlig gewählt, und
   - $K_{ref}$ ist die Anzahl der ungefilterten Abtastungen um eine ungefilterte Abtastung $f_n$, die vorzugsweise geradzahlig und größer als die Anzahl der Koeffizienten K gewählt wird.

12. Verfahren nach Anspruch 11, **dadurch gekennzeichnet, dass** diese Summe mehrfach für die ungefilterten Abtastungen $f_n$ gemäß einer parallel durchgeführten Verarbeitung durch Variieren der jeweiligen Anzahl der Koeffizienten K angewandt wird.

13. Verfahren nach einem der vorangehenden Ansprüche, **dadurch gekennzeichnet, dass** die unscharfen Zustände, die mindestens der ersten Datei zugeordnet sind, jeweils auf mindestens zwei Bits codiert werden.

14. Verfahren nach Anspruch 13 in Kombination mit Anspruch 12, **dadurch gekennzeichnet, dass** die für eine niedrigste Anzahl von Koeffizienten K bestimmten unscharfen Zustände auf niederwertigste Bits und die für eine höhere Anzahl von Koeffizienten K bestimmten unscharfen Zustände auf nachfolgende Bits bis zu einer ausgewählten Gesamtzahl von Bits codiert werden.

15. Verfahren nach einem der Ansprüche 3 und 10, **dadurch gekennzeichnet, dass** jede gefilterte Abtastung $r_n$ ausgedrückt wird als eine Summe des Typs:

$$r_n = \sum_{i=-I_1}^{I_2} filtre_i \times f_{(n+i)}$$

   - $f_{(n+i)}$ sind ungefilterte Abtastungen,
   - $filtre_i$ sind Koeffizienten eines digitalen Filters, die gegebenenfalls einen auf Null herabgesetzten Schwellenwert enthalten,

und dass eine Anzahl k von ungefilterten Abtastungen, die ein Paket umfassen, gewählt wird, mindestens gleich 2 und kleiner oder gleich einem Ausdruck vom Typ:
(TEF-$I_1$-$I_2$+1)/2, wobei TEF eine gewünschte Mindestgröße der gesuchten gemeinsamen Auszüge ist.

16. Verfahren nach Anspruch 15, **dadurch gekennzeichnet, dass**:

   - für einen gegebenen Wert TEF der gewünschten Mindestgröße der gesuchten gemeinsamen Auszüge ein Bereich von nutzbaren Werten für die Anzahl k von ungefilterten Abtastungen, die ein Paket umfassen, bestimmt wird
   - und für jeden nutzbaren Wert der Anzahl k eine optimale Größe TES einer Folge von digitalen Signaturdaten bestimmt wird, für die die Erkennung eines gemeinsamen Auszugs der Größe TEF gewährleistet ist,

   und dass die optimale Größe TES kleiner oder gleich einem Ausdruck des folgenden Typs ist: E[(TEF-$I_1$-$I_2$+1)/k]-1, wobei E(X) den gesamten Teil von X bezeichnet.

17. Verfahren nach einem der vorangehenden Ansprüche, bei dem die beiden zu vergleichenden Dateien Daten enthalten, die für alphanumerische Zeichen repräsentativ sind, insbesondere Text und/oder ein Computercode oder genetischer Code,
   **dadurch gekennzeichnet, dass** das Verfahren umfasst:

   - eine erste Gruppe von Schritten, umfassend das Bilden digitaler Signaturen und deren Vergleichen für eine grobe Suche und
   - eine zweite Gruppe von Schritten, umfassend ein genaues Vergleichen in den Adressbereichen zur Überprüfung des Grobvergleichs,

   dass die Daten einer Datei als eine Folge von Abtastungen mit einer ausgewählten Anzahl k von Abtastungen pro Paket betrachtet werden,
   und dass der Wert dieser ausgewählten Anzahl k zunächst optimiert wird, indem ein Minimum an durchzuführenden Vergleichsoperationen gesucht wird.

18. Verfahren nach Anspruch 17, **dadurch gekennzeichnet, dass** zur Optimierung der gewählten Anzahl k von Abtastungen pro Paket eine Gesamtzahl:

   - von durchzuführenden Vergleichsoperationen für digitale Signaturen und
   - von genauen Datenvergleichsoperationen, die danach durchzuführen sind, berücksichtigt wird,

   und dass die Gesamtzahl der Operationen für eine endliche Menge von Anzahlen k minimal ist.

19. Verfahren nach einem der Ansprüche 17 und 18, **dadurch gekennzeichnet, dass** Informationen über eine gewünschte Mindestgröße von gesuchten gemeinsamen Auszügen (TEF) erhalten werden, die zur Optimierung der gewählten Anzahl k von Abtastungen pro Paket verwendet werden,
   und dass die optimale Anzahl k von Abtastungen pro Paket im Wesentlichen wie die Mindestgröße (TEF) variiert, sodass je größer die gewünschte Mindestgröße der gesuchten gemeinsamen Auszüge, desto kürzer die Dauer der Suche nach gemeinsamen Auszügen ist.

20. Verfahren nach einem der Ansprüche 1 bis 16, **dadurch gekennzeichnet, dass** die Suche nach gemeinsamen Auszügen aus einer einzigen Gruppe von Schritten besteht, die das Bilden von digitalen Signaturen und deren Vergleichen umfasst, und dass die Anzahl der Daten pro Paket optimiert wird, indem zunächst ein Konfidenzindex festgelegt wird, der einen akzeptablen Schwellenwert für die Wahrscheinlichkeit einer falschen Erkennung von gemeinsamen Auszügen charakterisiert.

21. Verfahren nach einem der Ansprüche 3 bis 20, **dadurch gekennzeichnet, dass** für die erste Datei:

   - das Abtasten mit einer gewählten Abtastrate erfolgt,
   - wobei das digitale Filtern einem Tiefpassfiltern im Frequenzraum entspricht, und
   - Kombinieren der gefilterten Abtastungen, um digitale Signaturen im Zustand "wahr", "falsch" oder "unbestimmt" zu erhalten, die den jeweiligen Adressen der ersten Datei zugeordnet sind,

während für die zweite Datei:

- das Abtasten mit einer gewählten Abtastrate erfolgt,
- wobei das digitale Filtern einem Tiefpassfiltern im Frequenzraum entspricht, und
- der logische Zustand, der jedem Paket von gefilterten Abtastungen zugeordnet ist, aus dem logischen Zustand bestimmt wird, der einer einzelnen gefilterten Abtastung zugeordnet ist, die aus jedem Paket ausgewählt ist,

sodass digitale Signaturen erhalten werden, die nur "wahre" oder "falsche" logische Zustände umfassen, und damit die Selektivität des Vergleichens der digitalen Signaturen zu verbessern.

22. Verfahren nach Anspruch 21, **dadurch gekennzeichnet, dass**:

- wenn der logische Zustand, der einer Adresse der ersten Datei zugeordnet ist, "wahr" oder "unbestimmt" ist, während der logische Zustand, der einer Adresse der zweiten Datei zugeordnet ist, "wahr" ist, das Paar dieser Adressen für die Suche nach einem gemeinsamen Auszug beibehalten wird,
- wenn der logische Zustand, der einer Adresse der ersten Datei zugeordnet ist, "falsch" oder "unbestimmt" ist, während der logische Zustand, der einer Adresse der zweiten Datei zugeordnet ist, "falsch" ist, das Paar dieser Adressen für die Suche nach einem gemeinsamen Auszug beibehalten wird,

während die anderen Adresspaare von der Suche ausgeschlossen werden.

23. Verfahren nach Anspruch 20, wobei die erste und die zweite Datei digitalisierte Signalabtastdateien sind, **dadurch gekennzeichnet, dass** das Verfahren einen Schritt der Vorverarbeitung der Daten und eine Berücksichtigung der Daten, die Signalabschnitten eines Pegels größer als eine Rauschreferenz zugeordnet sind, umfasst.

24. Verfahren nach einem der Ansprüche 20 und 23, wobei die erste und die zweite Datei digitalisierte Signalabtastdateien sind, **dadurch gekennzeichnet, dass** das Verfahren einen Schritt zur Konsolidierung der Suchergebnisse vorsieht, vorzugsweise durch Einstellen der relativen Paketgrößen der ersten und der zweiten Datei, sodass ein Unterschied in der jeweiligen Wiedergabegeschwindigkeit der ersten und der zweiten Datei toleriert wird.

25. Verfahren nach einem der vorangehenden Ansprüche, **dadurch gekennzeichnet, dass** mindestens eine der ersten und der zweiten Datei ein Datenstrom ist,
und dass das Verfahren zum Suchen nach gemeinsamen Auszügen in Echtzeit durchgeführt wird.

26. Computerprogrammprodukt, das dazu bestimmt ist, in einem Speicher einer Zentraleinheit eines Computers oder auf einem abnehmbaren Träger gespeichert zu werden, der dazu bestimmt ist, mit einem Lesegerät der Zentraleinheit zusammenzuwirken, **dadurch gekennzeichnet, dass** es Anweisungen zur Durchführung aller oder eines Teils der Schritte der Verfahrens nach einem der vorangehenden Ansprüche umfasst.

27. Datenstruktur zur Verwendung bei der Suche nach mindestens einem gemeinsamen Auszug zwischen einer ersten und einer zweiten Datei, wobei die Datenstruktur repräsentativ für die erste Datei ist, **dadurch gekennzeichnet, dass** sie durch Ausführen der Schritte a) und b) des Verfahrens nach einem der Ansprüche 1 bis 25 erhalten wird, und dass sie eine Folge von Adressen umfasst, die Adressen der ersten Datei identifizieren und denen jeweils ein Zustand unscharfer Logik von den folgenden Zuständen zugeordnet ist: "wahr", "falsch" und "unbestimmt".

28. Datenverarbeitungsvorrichtung, umfassend einen Speicher zum Speichern mindestens einer ersten und einer zweiten Datei für die Suche nach mindestens einem gemeinsamen Auszug zwischen der ersten Datei und der zweiten Datei, **dadurch gekennzeichnet, dass** sie einen Speicher umfasst, der zum Speichern der Anweisungen eines Computerprogrammprodukts nach Anspruch 26 geeignet ist.

29. Datenverarbeitungsanlage, umfassend:

- eine erste Datenverarbeitungseinheit, die in der Lage ist, eine erste Datei zu speichern,
- eine zweite Datenverarbeitungseinheit, die in der Lage ist, eine zweite Datei zu speichern, und
- Kommunikationsmittel zwischen der ersten und zweiten Datenverarbeitungseinheit,

**dadurch gekennzeichnet, dass** mindestens eine der Einheiten einen Speicher umfasst, der geeignet ist, das Computerprogrammprodukt nach Anspruch 26 zu speichern, um nach einem gemeinsamen Auszug zwischen der ersten und der zweiten Datei zu suchen.

30. Anlage nach Anspruch 29, **dadurch gekennzeichnet, dass** die das Computerprogrammprodukt speichernde Einheit dazu ausgelegt ist, eine Fernaktualisierung einer der ersten und der zweiten Datei in Bezug auf die andere der ersten und der zweiten Datei auszuführen.

**Claims**

1. A method of searching content, implemented by computer means, in which at least one extract common to a first file and to a second file, in the form of binary data, is searched for, **characterized in that** it comprises a prior preparation of the first file at least, comprising the following steps:

   a) segmenting the first file into a succession of data packets, said packets having a given size, and identifying addresses of packets among these packets in said file,
   b) associating with the address of each packet a digital signature defining a fuzzy logic state from among at least three states: "true", "false" and "undetermined", said signature resulting from a combinatorial calculation on data among the data emanating from said file,

   and **in that** the method continues with a search for common extract, itself, comprising the following steps:

   c) comparing the fuzzy logic states associated with each packet address of the first file, with fuzzy logic states determined on the basis of data emanating from the second file,
   d) eliminating from said search for common extract, pairs of respective addresses of the first and second files whose respective logic states are "true" and "false" or "false" and "true", and preserving the other pairs of addresses identifying data packets liable to comprise said common extract.

2. The method as claimed in claim 1, **characterized in that**, in step b), a data packet is assigned the state:

   - "true" if all the data of the packet satisfy a first condition,
   - "false" if all the data of the packet satisfy a second condition, contrary to the first condition,
   - and "undetermined" if certain data of the packet satisfy the first condition, while other data of the packet satisfy the second condition.

3. The method as claimed in one of claims 1 and 2, **characterized in that** a processing prior to step b) is applied to the data of a file, said processing comprising the following steps:

   a1) the data of the file are considered as a series of samples obtained at a predetermined sampling frequency (Fe), and of values coded according to a binary representation code, and
   a2) a digital filter is applied to said samples ($f_n$), said filter being adapted to minimize a probability of obtaining the "undetermined" state for the digital signatures associated with the packets of samples.

4. The method as claimed in claim 3, **characterized in that** the application of said digital filter amounts to:

   - applying a spectral transform to the sampled data,
   - applying a low-pass filter to said spectral transform,
   - and applying an inverse spectral transform after said low-pass filter.

5. The method as claimed in claim 4, **characterized in that** the low-pass filter operates on a frequency band comprising substantially the interval:

$$[-Fe/2(k-1), +Fe/2(k-1)],$$

   where Fe is said sampling frequency,
   and k is the number of samples that a packet comprises.

6. The method as claimed in one of claims 4 and 5, **characterized in that** said digital filter comprises a predetermined number of coefficients of like value,
and **in that** the frequency response of the associated low-pass filter is expressed, as a function of frequency f, by an expression of the type:

$$\sin(PI.f.T)/(PI.f.T),$$

where sin() is the sine function, and with:

- PI = 3.1416, and
- T=(K-1)/Fe where K is said predetermined number of coefficients and Fe said sampling frequency.

7. The method as claimed in one of claims 3 to 6, **characterized in that** said digital filter is a mean value filter of a predetermined number (2K+1) of coefficients, and **in that** the difference between two successive filtered samples $(r_{n+1}-r_n)$ is proportional to the difference between two unfiltered samples $(f_{n+K+1}-f_{n-K})$, respectively of a first rank and of a second rank, which are spaced apart by said predetermined number of coefficients, and **in that** the calculation of said filtered samples is performed by utilizing this relation to reduce the number of calculation operations to be performed.

8. The method as claimed in one of claims 6 and 7, **characterized in that** said predetermined number of coefficients of the filter (2K+1) is greater than or equal to 2k-1, where k is the number of samples that a packet comprises.

9. The method as claimed in one of claims 3 to 8, taken in combination with claim 2, **characterized in that**:

- the "true" state is assigned to the address of a packet if, for this packet, all the filtered samples have a value greater than a chosen reference value (Vref),
- the "false" state is assigned to the address of a packet if, for this packet, all the filtered samples have a value less than a chosen reference value (Vref), and
- the "undetermined" state is assigned to the address of a packet if, for this packet, the filtered samples have, for certain of them, a value less than said reference value (Vref), and, for other filtered samples, a value greater than said reference value (Vref).

10. The method as claimed in claim 9, **characterized in that**, for any filtered sample $r_n$ of given order n, said reference value (Vref) is calculated by averaging the values of the unfiltered samples $f_k$ over a chosen number of unfiltered consecutive samples (Kref) about an unfiltered sample $f_n$ of the same given order n.

11. The method as claimed in claim 10, **characterized in that** the values of the filtered samples are made relative, for comparison, to a zero threshold value,
and **in that** said filtered samples $r'_n$ are expressed by a sum of the type:

$$r'_n = K_{ref} \sum_{k=-(K/2)}^{(K/2)-1} f_{n+k} - K \sum_{k=-(K_{ref}/2)}^{(K_{ref}/2)-1} f_{n+k},$$

where :

- $f_{n+k}$ are unfiltered samples obtained in step a1),
- K is the number of coefficients of the digital filter, preferably chosen to be even, and
- $K_{ref}$ is said number of unfiltered samples around an unfiltered sample $f_n$, preferably chosen to be even and greater than said number of coefficients K.

12. The method as claimed in claim 11, **characterized in that** said sum is applied to the unfiltered samples $f_n$ a plurality of times, according to a processing performed in parallel, while respectively varying the number of coefficients K.

13. The method as claimed in one of the preceding claims, **characterized in that** the fuzzy states associated with the first file at least are each coded on at least two bits.

**14.** The method as claimed in claim 13, taken in combination with claim 12, **characterized in that** the fuzzy states determined for a least number of coefficients K are coded on least significant bits and the fuzzy states determined for a larger number of coefficients K are coded on subsequent bits, up to a chosen total number of bits.

**15.** The method as claimed in one of claims 3 and 10, **characterized in that** each filtered sample $r_n$ is expressed as a sum of the type:

$$ r_n = \sum_{i=-I_1}^{I_2} filtre_i \times f_{(n+i)}, $$

*where*:

- $f_{(n+i)}$ are unfiltered samples,
- $filter_i$ are coefficients of a digital filter, integrating, as the case may be, a threshold value referred to zero,

and **in that** a number k of unfiltered samples that a packet comprises is chosen, at minimum equal to 2 and less than or equal to an expression of the type:
$(TEF-I_1-I_2+1)/2$, where TEF is a desired minimum size of the common extracts searched for.

**16.** The method as claimed in claim 15, **characterized in that**:

- for a given value TEF of the desired minimum size of common extracts searched for, a span of usable values for said number k of unfiltered samples that a packet comprises is determined,
- and, for each usable value of the number k, an optimal size TES is determined of a succession of data of digital signatures, for which succession the detection of a common extract of size TEF is guaranteed,

and **in that** said optimal size TES is less than or equal to an expression of the type:
$E[(TEF-I_1-I_2+1)/k]-1$, where E(X) designates the integer part of X.

**17.** The method as claimed in one of the preceding claims, in which the two files to be compared comprise data representative of alphanumeric characters, in particular of the text and/or a computer or genetic code,
**characterized in that** the method comprises:

- a first group of steps comprising the formation of the digital signatures and their comparison, for a coarse search, and
- a second group of steps comprising an identicalness comparison in the spans of addresses satisfying the coarse comparison,

and **in that** the data of a file are considered as a series of samples, with a chosen number k of samples per packet, and **in that** the value of this chosen number k is optimized initially by searching for a minimum of comparison operations to be performed.

**18.** The method as claimed in claim 17, **characterized in that**, for the optimization of the chosen number k of samples per packet, account is taken of a total number:

- of operations of comparison of digital signatures to be performed, and
- of operations of identicalness comparison of data to be performed thereafter,

and **in that** said total number of operations is a minimum for a finite set of numbers k.

**19.** The method as claimed in one of claims 17 and 18, **characterized in that** an information relating to a minimum desired size of common extracts searched for (TEF) is obtained, used to optimize said chosen number k of samples per packet,
and **in that** the optimal number k of samples per packet varies substantially as said minimum size (TEF), so that the larger desired minimum size of common extracts searched for, the shorter the duration of the search for common extract.

20. The method as claimed in one of claims 1 to 16, **characterized in that** it comprises the search for common extracts consists of a single group of steps comprising the formation of the digital signatures and their comparison, and **in that** the number of data items per packet is optimized by initially fixing a confidence index characterizing an acceptable threshold of probability of false detection of common extracts.

21. The method as claimed in one of claims 3 to 20, **characterized in that**, for the first file:

- the sampling at a chosen sampling frequency,
- the digital filtering corresponding to a low-pass filtering in the frequency space, and
- the combination of the filtered samples to obtain digital signatures in the "true", "false" or "undetermined" state, associated with the respective addresses of the first file,

while it comprises, for the second file:

- the sampling at a chosen sampling frequency,
- the digital filtering corresponding to a low-pass filtering in the frequency space, and
- the logic state associated with each packet of filtered samples is determined on the basis of the logic state associated with a single filtered sample chosen from each packet,

in such a way as to obtain digital signatures comprising only "true" or "false" logic states and thus to improve the selectivity of the comparison of the digital signatures.

22. The method as claimed in claim 21, **characterized in that**,

- if the logic state associated with an address of the first file is "true" or "undetermined", while the logic state associated with an address of the second file is "true", the pair of said addresses is retained from the search of common extract,
- if the logic state associated with an address of the first file is "false" or "undetermined", while the logic state associated with an address of the second file is "false", the pair of said addresses is retained for the search for common extract,

while the other pairs of addresses are excluded from the search.

23. The method as claimed in claim 20, in which the first and second files are files of samples of digitized signals, **characterized in that** the method comprises a step of preprocessing of the data and a taking into account of the data associated with portions of signal of level greater than a noise reference.

24. The method as claimed in one of claims 20 and 23, in which the first and second files are files of samples of digitized signals, **characterized in that** the method provides for a step of consolidation of the search results, preferably by adjustment of relative sizes of the packets of the first and second files, in such a way as to tolerate a discrepancy in respective speeds of retrieval of the first and second files.

25. The method as claimed in one of the preceding claims, **characterized in that** one at least of the first and second files is a data stream, and **in that** the method of searching for common extracts is executed in real time.

26. A computer program product, intended to be stored in a memory of a central unit of a computer or on a removable medium intended to cooperate with a reader of said central unit, **characterized in that** it comprises instructions for conducting all or part of the steps of the method according to one of the preceding claims.

27. A data structure intended to be used for a search of at least one extract common to a first and a second file, the data structure being representative of the first file, **characterized in that** it is obtained by the implementation of steps a) and b) of the method as claimed in one of claims 1 to 25, and **in that** it comprises a succession of addresses identifying addresses of the first file and to each of which is assigned a fuzzy logic state from among the states: "true", "false" and "undetermined".

28. A computer device, comprising a memory for storing at least first and second files, for the search for at least one extract common to the first file and the second file, **characterized in that** it comprises a memory suitable for storing the instructions of a computer program product as claimed in claim 26.

29. A computer installation, comprising:

- a first computer entity suitable for storing a first file,
- a second computer entity suitable for storing a second file, and
- means of communications between the first and second computer units,

**characterized in that** one of the entities at least comprises a memory suitable for storing the computer program product as claimed in claim 26, for the search of extract common to the first and second files.

30. The installation as claimed in claim 29, **characterized in that** the entity storing the computer program product is designed to perform a remote update of one of the first and second files with respect to the other of the first and second files.

EP 1 741 047 B1

**11**

| Couple de positions de début d'extrait à tester sur les fichiers |
|---|

**12**

**14**    #    | Comparaison des 1ères données de chaque extrait |  =  **13**

| Arrêt des comparaisons<br>Pas d'extrait commun trouvé | **15** | Poursuite de la comparaison avec les<br>données suivantes de chaque extrait |
|---|---|---|

**17**    #    | Comparaison des 2èmes données de chaque extrait |  =  **16**

| Arrêt des comparaisons<br>Extrait commun trouvé de taille 1 | Poursuite de la comparaison avec les<br>données suivantes de chaque extrait |
|---|---|

**18**

**20**    #    | Comparaison des n ièmes données de chaque extrait |  =  **19**

| Arrêt des comparaisons<br>Extrait commun trouvé de taille n-1 | Poursuite de la comparaison avec les<br>données suivantes de chaque extrait |
|---|---|

**21**

| Fin si min (taille) = n |
|---|

## FIG. 1

P0

| | 0 | 1 | 2 | 3 | 4 | 5 | 6 | 7 | 8 | 9 | ← A2 |
|---|---|---|---|---|---|---|---|---|---|---|---|
| 0 | | | | | | | | | | | ← F |
| 1 | | | | | | | | | | | |
| 2 | | | | | | | | | | | |
| 3 | | | | | | | | | | | |
| 4 | | | | | | | | | | | |
| 5 | | | | | | | | | | | ← Pf |

A1

(m,n)

## FIG. 2A

| | D | e | s | | m | o | u | t | o | n | s | ← A2 |
|---|---|---|---|---|---|---|---|---|---|---|---|---|---|
| | 0 | 1 | 2 | 3 | 4 | 5 | 6 | 7 | 8 | 9 | 10 | |
| U 0 | | | | | | | | | | | | |
| n 1 | | | | | | | | | | | | |
| 2 | | | | | | | | | | | | |
| m 3 | | | | | m | | | | | | | |
| o 4 | | | | | | o | | | | | | |
| u 5 | | | | | | | u | | | | | |
| t 6 | | | | | | | | t | | | | |
| o 7 | | | | | | | | | o | | | |
| n 8 | | | | | | | | | | n | | |

A1

## FIG. 2B

DATA

| 0 | 1 | 2 | 3 | 4 | 5 | 6 | 7 | 8 | 9 | 10 | 11 |

| 4n | 4n+1 | 4n+2 | 4n+3 |

| 0 | 1 | 2 |

| n |

BLO

## FIG. 3

FIG. 4B

FIG. 4A

| OU logique | 0 | 1 |
|:----------:|:-:|:-:|
| 0 | 0 | 1 |
| 1 | 1 | 1 |

**FIG. 5A**

| ET logique | 0 | 1 |
|:----------:|:-:|:-:|
| 0 | 0 | 0 |
| 1 | 0 | 1 |

**FIG. 5B**

|   | B0 | B1 |
|:-:|:--:|:--:|
| 0 | 1 | 0 |
| 1 | 0 | 1 |
| ? | 1 | 1 |
| X | 0 | 0 |

**FIG. 5C**

| OU logique | 0 | 1 | ? | X |
|:----------:|:-:|:-:|:-:|:-:|
| 0 | 0 | ? | ? | 0 |
| 1 | ? | 1 | ? | 1 |
| ? | ? | ? | ? | ? |
| X | 0 | 1 | ? | X |

**FIG. 5D**

| ET logique | 0 | 1 | ? | X |
|:----------:|:-:|:-:|:-:|:-:|
| 0 | 0 | X | 0 | X |
| 1 | X | 1 | 1 | X |
| ? | 0 | 1 | ? | X |
| X | X | X | X | X |

**FIG. 5E**

**FIG. 6A**

Add

| 0 | 1 | 2 | 3 | 4 | 5 | 6 | 7 | 8 | 9 | 10 | 11 | ... | n | n+1 | n+2 | n+3 | ... |

FIC

Valb

| 0 | 1 | 0 | 0 | 1 | 0 | 0 | 1 | 1 | 1 | 0 | 0 | ... | 1 | 0 | 1 | 1 | ... |

**FIG. 6B**

Valb

| ? | 0 | 1 | 0 | 1 | 0 | 1 | 1 | 1 | 1 | 0 | ... | 1 | 0 | 1 | 1 | ... |

SN

Valf

| ? | 0 | ? | ? | 1 | 0 | 0 | ... | ? | 1 | 1 | ... |

| Caractères | L | a | | t | o | r | t | u | e |
|---|---|---|---|---|---|---|---|---|---|
| Nombre entier du code ASCII | 76 | 97 | 32 | 116 | 111 | 114 | 116 | 117 | 101 |
| Adresses des données | 0 | 1 | 2 | 3 | 4 | 5 | 6 | 7 | 8 |
| Etats binaires | 0 | 0 | 0 | 1 | 1 | 1 | 1 | 1 | 0 |
| Etats flous (rapport d'index de 2) | 0 | | ? | | 1 | | 1 | | 0 |
| Etats flous avec un rapport d'index de 3 | 0 | | | 1 | | | ? | | |
| Etats flous avec un rapport d'index de 4 | ? | | | | 1 | | | | 0 |

## FIG. 7A

| L | e | | l | i | è | v | r | e |
|---|---|---|---|---|---|---|---|---|
| 76 | 101 | 32 | 108 | 105 | 232 | 118 | 114 | 101 |
| 0 | 1 | 2 | 3 | 4 | 5 | 6 | 7 | 8 |
| 0 | 0 | 0 | 0 | 0 | 1 | 1 | 1 | 0 |
| 0 | | 0 | | ? | | 1 | | 0 |

| L | a | | t | o | r | t | u | e |
|---|---|---|---|---|---|---|---|---|
| 76 | 97 | 32 | 116 | 111 | 114 | 116 | 117 | 101 |
| 0 | 1 | 2 | 3 | 4 | 5 | 6 | 7 | 8 |
| 0 | 0 | 0 | 1 | 1 | 1 | 1 | 1 | 0 |
| 0 | | ? | | 1 | | 1 | | 0 |

## FIG. 7B

Grid — FIG. 7C:

Top (AD2 →): L, a, t, o, r, t, u, e

| | L a | t | o r | t u | e |
|---|---|---|---|---|---|
| AD2 | 0 | 1 | 2 | 3 | 4 |
| SN2 | 0 | ? | 1 | 1 | 0 |

Left (AD1 SN1 ↓):

| | AD1 | SN1 |
|---|---|---|
| L e | 0 | 0 |
| l | 1 | 0 |
| i è | 2 | ? |
| v r | 3 | 1 |
| e | 4 | 0 |

## FIG. 7C

FIG. 8A

FIG. 8B

FIG. 8C

FIG. 9A

FIG. 9B

FIG. 9C

$f_4 = f(4Te) = 108$ (code ASCII du caractère « $\ell$ »)

$f(t) = \sum f_n(t)$

$f_4(t) = f_4 \sin(\pi Fe(t - 4Te)) / (\pi Fe(t - 4Te))$

FIG. 10

FIG. 11

FIG. 12A

FIG. 12B

FIG. 13

EP 1 741 047 B1

| Σmoy(K,f) |

FIG. 14

|Filtre(5,f)|

FIG. 15

61

EP 1 741 047 B1

**FIG. 16A**

FIG. 16B

FIG. 17

FIG. 18

## FIG. 19A

**Recherche des extraits communs à deux fichiers** ☒

Paramètres de recherche
Taille minimale des extraits communs de données à trouver: |150    · Début de recherche|

OK
Cancel

Consultation des extraits communs trouvés
Nombre d'extraits trouvés |3    |Premier| |Précédent| |Suivant| |Dernier|
Numéro d'extrait trouvé |1    |Aller à|    Taille de l'extrait commun |566
Taille cumulée des extraits utilisables pour regénérer le fichier 1 à partir du fichier 2 (octets)    |0
|Tri par ordre croissant de début d'extrait sur le fichier 1|    |Tri par ordre croissant de début d'extrait sur le fichier 2|

Création de fichier archive de résultats de recherche

Sélection de fichier archive de résultats de recherche

Paramètres du 1er fichier
Nom :|LA CONSTITUTION DE    Répertoire :|D:\DocHTML\    Taille (octets) : |85390
Position de la 1ère donnée affichée dans la fenêtre : |219

Fenêtre d'affichage du 1er fichier :
☑ Mode texte
☐ Mode hexadécimal
☐ Mode unsigned char
☐ Mode signed char

E</TITLE>
<META content="text/html; CHARSET=iso-8859-1" http-equiv=Content-Type>
<META content="MSHTML 5.00.2614.3500" name=GENERATOR>
<META content="Assemblée nationale : constitution, procédure parlementaire, processus lég name=description>

Sélection du 1er fichier

Paramètres du 2nd fichier
Nom :|RÈGLEMENT DE L'ASS    Répertoire :|D:\DocHTML\    Taille (octets) : |213275
Position de la 1ère donnée affichée dans la fenêtre : |208

Fenêtre d'affichage du 2nd fichier :
☑ Mode texte
☐ Mode hexadécimal
☐ Mode unsigned char
☐ Mode signed char

E</TITLE>
<META content="text/html; CHARSET=iso-8859-1" http-equiv=Content-Type>
<META content="MSHTML 5.00.2614.3500" name=GENERATOR>
<META content="Assemblée nationale : constitution, procédure parlementaire, processus lég name=description>

Sélection du 2nd fichier

---

**Suivi de recherche** ☒

Temps écoulé |00 h 00 m 01 s    |OK| Abandon|

Nombre d'extraits trouvés |3

Evaluations
Avancement % |42

Durée de recherche |00 h 00 m 02 s    Temps restant |00 h 00 m 01 s
Vitesse de recherche en Méga comparaisons par seconde |7721.58

## FIG. 19B

**Identification d'extraits audio d'un fichier d'enregistrement de format WAVE**  ⊠

───── Paramètres de recherche ─────

Précision de la recherche (Hz): |5        Durée minimale d'extrait (sec.): |20        Début de recherche |

Bruit (en % du niveau maxi) : |0

OK
Cancel

───── Consultation des extraits communs trouvés ─────

Nombre d'extraits trouvés |83        Premier    Précédent    Suivant    Dernier

Numéro d'extrait trouvé |1        Aller à        Durée de l'extrait courant : |0 h 00 m 00 s 00

Sauvegarde de signature d'extrait |        Durée cumulée des extraits trouvés : |0 h 37 m 15 s 60

Création de fichier archive de résultats de recherche

Sélection de fichier archive de résultats de recherche

───── Paramètres de l'enregistrement à analyser ─────

Nom : | FM 20040303_093500F        Répertoire : |D:\AudioRadio\FM\        Durée : |1 h 00 m 00 s 00

Références : |Source audio:
FM
Réception Paris: 103,9 MHz

Format de numérisation audio:

Sélection de fichier wave

Création de signature

Sélection de signature

Durée de l'extrait trouvé : |        De : |        à : |

───── Paramètres de la base d'enregistrements de référence ─────

Nombre d'enregistrements : |244        Premier        Précédent        Suivant        Dernier

Numéro d'enregistrement : |1        Aller à        Fermer        Variables        Durée cumulée de la base : |41 h 31 m 14 s 20

Nom : |01-Jazz.wav        Répertoire : |D:\AudioWave\Claude\        Durée : |0 h 02 m 26 s 40

Références : |Format de numérisation audio:
PCM 44,100 kHz; 16 bits; Stéréo

Plage horaire de la signature numérique:
Début:    0 h 00 m 00 s 00

Sélection de fichiers wave

Création de signature

Sélection de signature

Sélection de librairie de signatures

Durée de l'extrait trouvé : |        De : |        à : |

# FIG. 19C

FIG. 19D

**Enregistrement de signatures numériques audio**

OK
Cancel

Caractéristiques de la voie d'enregistrement audio

Ligne audio | Wave Out Mix          Vu mètre

Format | PCM 22,050 kHz; 16 bits; Mono     Etat | Présence de signal audio     | 71

Programmation horaire d'enregistrements

☑ Activée    Heure Début | 16 h | 30 m | 0 s   Date (j/m/a) | 15 / | 3 / | 2004

☐ Désactivée   Heure Fin | 19 h | 0 m | 0 s   Date (j/m/a) | 15 / | 3 / | 2004

☑ Segmentation des fichiers d'enregistrement (durée plafond) | 2 h | 0 m

Configuration des fichiers d'enregistrement

Nom de source audio | FInfo          Répertoire de stockage | D:\AudioRadio\

Description | Info
Réception Paris. 105,5 MHz

☑ Fichier wave         Nom | FInfo 20040315_163000.wav     Etat | En cours de création

☐ Signature 1 : Précision (Hz) | 25   Nom | FInfo 20040315_163000F25.si1   Etat | Création non activée

☑ Signature 2 : Précision (Hz) | 5   Nom | FInfo 20040315_163000F5.si1   Etat | En cours de création

☐ Signature 3 : Précision (Hz) | 2   Nom | FInfo 20040315_163000F2.si1   Etat | Création non activée

Fichier d'import
Ouverture
Sauvegarde

Contrôles d'enregistrement

☑ Marche  Heure courante | 16 h 34 m 59 s  Date | 15/03/2004 (j/m/a)  Temps écoulé | 0 h 04 m 59 s

☐ Arrêt  Heure de début | 16 h 30 m 00 s  Date | 15/03/2004 (j/m/a)  Durée enregistrée | 0 h 04 m 42 s

**EP 1 741 047 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description

- **V. SNÁŠEL.** *Fuzzy Signatures for Multimedia Databases,* 259-260
- **S. HABER et al.** *If Piracy is the Problem, Is DRM the Answer,* vol. III.4, 229